(19) Europäisches Patentamt
European Patent Office
Office européen des brevets

(11) Veröffentlichungsnummer: **0 511 246 B1**

# (12) EUROPÄISCHE PATENTSCHRIFT

(45) Veröffentlichungstag der Patentschrift: **07.09.94**

(51) Int. Cl.[5]: **C09B 62/503**, D06P 1/384

(21) Anmeldenummer: **91902093.3**

(22) Anmeldetag: **14.01.91**

(86) Internationale Anmeldenummer:
**PCT/EP91/00041**

(87) Internationale Veröffentlichungsnummer:
**WO 91/10709 (25.07.91 91/17)**

Die Akte enthält technische Angaben, die nach dem Eingang der Anmeldung eingereicht wurden und die nicht in dieser Patentschrift enthalten sind.

## (54) WASSERLÖSLICHE FASERREAKTIVE FARBSTOFFE, VERFAHREN ZU IHRER HERSTELLUNG UND IHRE VERWENDUNG.

(30) Priorität: **18.01.90 DE 4001315**

(43) Veröffentlichungstag der Anmeldung:
**04.11.92 Patentblatt 92/45**

(45) Bekanntmachung des Hinweises auf die Patenterteilung:
**07.09.94 Patentblatt 94/36**

(84) Benannte Vertragsstaaten:
**BE CH DE ES FR GB LI**

(56) Entgegenhaltungen:
**EP-A- 0 174 909**
**EP-A- 0 265 857**
**FR-A- 1 580 134**

(73) Patentinhaber: **HOECHST AKTIENGESELLSCHAFT**

**D-65926 Frankfurt (DE)**

(72) Erfinder: **SPRINGER, Hartmut**
**Am Erdbeerstein 27**
**D-6240 Königstein/Taunus (DE)**
Erfinder: **GLEISSNER, Rolf**
**Geisenheimer Str. 88**
**D-6000 Frankfurt am Main (DE)**
Erfinder: **SCHWAIGER, Günther**
**Johannesallee 41**
**D-6230 Frankfurt am Main 80 (DE)**

**EP 0 511 246 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus der US-Patentschrift 3 419 542 und aus den europäischen Patentanmeldungs-Veröffentlichtungen Nrs. 0 174 909 A1 und 0 265 857 A1 sind Farbstoffe bekannt, deren faserreaktive Gruppe aus der Vinylsulfonreihe über einen Phenylureido- bzw. Alkylureido-Rest an den Farbstoffchromophor gebunden ist. Teils erschienen jedoch ihre Fixiergrade zur Erreichung tiefer Farbtöne im Ausziehverfahren, teils ihre Löslichkeit zur Anwendung im Klotz-Kurzverweil-Verfahren, verbesserungsbedürftig.

Desweiteren sind aus der französischen Patentschrift 1 580 134 Farbstoffe mit einem faserreaktiven Rest der Vinylsulfonreihe bekannt, der an einen Phenylrest gebunden ist, der wiederum über eine Ureido-methyl-Gruppe an den Farbstoffchromophor gebunden ist.

Es wurden nunmehr Farbstoffe mit faserreaktiven Eigenschaften gefunden, die diese für das wirtschaftliche Färben interessanten Eigenschaften besitzen und die der allgemeinen Formel (1)

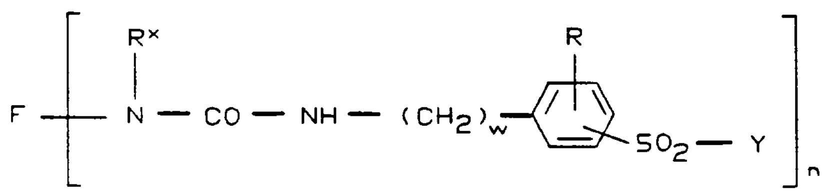

(1)

entsprechen, in welcher bedeuten:

- F ist der Rest eines Monoazo-, Polyazo-, Metallkomplexazo-, Anthrachinon-, Phthalocyanin-, Azomethin-, Dioxazin-, Phenazin-, Stilben-, Triphenylmethan-, Xanthen-, Formazan-, Thioxanthon-, Nitroaryl-, Naphthochinon-, Pyrenchinon oder Perylentetracarbimid-Farbstoffes;
- $R^x$ ist Wasserstoff oder Alkyl von 1 bis 4 C-Atomen, wie Methyl oder Ethyl, und ist bevorzugt Wasserstoff;
- R ist Wasserstoff, Sulfo, Carboxy, Alkyl von 1 bis 4 C-Atomen, wie Ethyl und insbesondere Methyl, Alkoxy von 1 bis 4 C-Atomen, wie Ethoxy und insbesondere Methoxy, oder Chlor, bevorzugt Wasserstoff;
- w ist die Zahl 1, 2, 3 oder 4, bevorzugt 1 oder 2, insbesondere bevorzugt 2;
- Y ist die Vinylgruppe oder eine Ethylgruppe, die in β-Stellung einen Substituenten enthält, der durch Alkali unter Bildung der Vinylgruppe eliminierbar ist;
- n ist die Zahl 1 oder 2, bevorzugt 1.

Bevorzugt ist F der Rest eines Mono- oder Disazofarbstoffes oder der Rest eines Metallkomplex-Azofarbstoffes, wie eines o,o'-1:1-Kupferkomplex-Azofarbstoffes, oder eines Triphendioxazin- oder eines Anthrachinon- oder eines Phthalocyaninfarbstoffes, wie eines Kupferphthalocyaninfarbstoffes, oder eines Kupferformazanfarbstoffes.

Der Rest F kann in seinem Grundgerüst die bei organischen Farbstoffen üblichen Substituenten, einschließlich faserreaktive Gruppen, wie beispielsweise solche der oben definierten Formel $-SO_2-Y$ , gebunden enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie beispielsweise durch Alkylgruppen von 1 bis 4 C-Atomen und/oder Phenylgruppen, wie Monoalkylamino- und Dialkylaminogruppen mit 1 bis 4 C-Atomen im Alkylrest, Phenylamino- oder N-($C_1$-$C_4$-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch subsituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methylsulfamoyl, N-Ethylsulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen; β-Sulfatoethylsulfonyl, β-Thiosulfatoethylsulfonyl-, β-Phosphatoethylsulfonyl-, β-Acetyloxiethylsulfonyl-,β-Chlorethylsulfonyl- und Vinylsulfonylgruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Sulfo, Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl ausgewählt sind.

Die vorliegende Erfindung betrifft somit Farbstoffe, die als erfindungsgemäße faserreaktive Gruppierung die Gruppe der allgemeinen Formel (2)

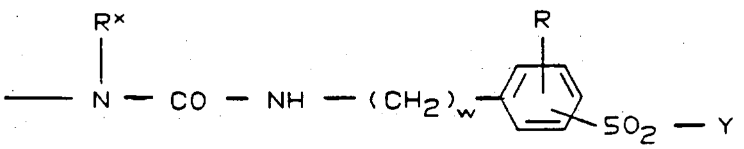

(2)

mit $R^x$, w, R und Y der obengenannten Bedeutungen ein- oder zweimal enthalten.

Der Farbstoffrest F kann auch andere, aus der Literatur bekannte faserreaktive Gruppen besitzen, die nicht der Konstitution der allgemeinen Formel (2) entsprechen. Solche bekannten faserreaktiven Gruppen sind beispielsweise eine Gruppe der Vinylsulfonreihe, wie die oben bereits erwähnte Gruppe der Formel $-SO_2-Y$ mit Y der obigen Bedeutung, die über einen Alkylenrest von 1 bis 4 C-Atomen, wie eine Methylengruppe, oder über eine Methylamino- oder Ethylaminogruppe an F gebunden sein kann, oder ein niedrigmolekularer, durch ein abspaltbares Atom oder eine abspaltbare Gruppe substituierter Alkanoylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe durch ein abspaltbares Atom oder eine abspaltbare Gruppe substituierter carbocyclischer oder heterocyclischer, einen Vier-, Fünf- oder Sechsring enthaltender Rest oder ein direkt über eine Aminogruppe gebundener, durch ein abspaltbares Atom oder eine abspaltbare Gruppe substituierter Triazin- oder Pyrimidinrest. Solche Gruppen sind beispielsweise ein über eine Aminogruppe gebundener, Halogenatome enthaltender sechsgliedriger heterocyclischer Rest, wie ein Halogentriazin- oder Halogenpyrimidinrest, oder ein aliphatischer Acylrest, wie ein Halogenacetyl- oder Halogenpropionyl-Rest.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (3a), (3b) und (3c)

$$D_1—N = N(E—N = N)_v—K—Z \qquad (3a)$$

$$Z—D_1—N = N(E—N = N)_v—K \qquad (3b)$$

$$Z—D_1—N = N(E—N = N)_v—K—Z \qquad (3c)$$

und die davon abgeleiteten Metallkomplex-Verbindungen, wie 1:1-Kupferkomplex-Verbindungen, in welchen

- $D_1$ der Rest einer Diazokomponente der Benzol- oder Naphthalinreihe ist,
- E der Rest einer Mittelkomponente der Benzol- oder Naphthalinreihe bedeutet,
- K der Rest einer Kupplungskomponente der Benzol-, Naphthalin-, Pyrazolon-, 6-Hydroxypyridon(2)- oder Acetessigsäurearylamid-Reihe ist,

wobei $D_1$, E und K für Azofarbstoffe übliche Substituenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und $D_1$, E und K zusammen mindestens zwei Sulfogruppen,

vorzugsweise drei oder vier Sulfogruppen, besitzen,

v für die Zahl Null oder 1 steht und

Z eine Gruppe der allgemeinen Formel (2) ist.

Bevorzugt sind weiterhin Disazofarbstoffe der allgemeinen Formel (3d) oder (3e)

$D_1—N = N—K^o—N = N—D_2—Z$ (3d)

$Z—D_1—N = N—K^o—N = N—D_2—Z$ (3e)

in welchen $D_1$ und $D_2$ unabhängig voneinander den Rest einer Diazokomponente der Benzol- oder Naphthalinreihe und $K^o$ den Rest einer bivalenten Kupplungskomponente der Naphthalinreihe darstellt, wobei $D_1$, $D_2$ und $K^o$ die für Azofarbstoffe üblichen Substituenten, wie die oben bereits erwähnten, tragen können, wobei $D_1$, $D_2$ und $K^o$ zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4a), (4b) und (4c)

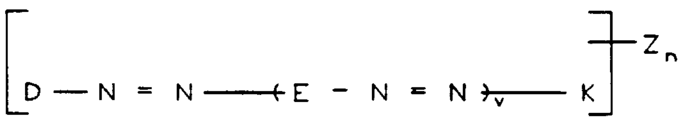

(4a)

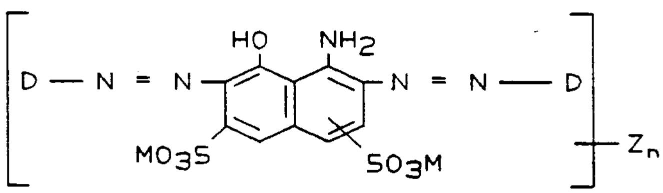

(4b)

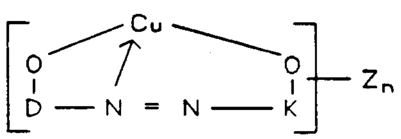

(4c)

in welchen

D jeweils für den Rest einer Diazokomponente steht, die zueinander gleiche oder voneinander verschiedene Bedeutungen besitzen können, wie beispielsweise einen Rest $D_1$ obiger Bedeutung darstellt,

E den bivalenten Rest einer kupplungsfähigen und diazotierbaren Verbindung, beispielsweise obiger Bedeutung, ist,

K den Rest einer Kupplungskomponente, beispielsweise obiger Bedeutung, darstellt,

v für die Zahl Null oder 1 steht,

Z einen Rest der allgemeinen Formel (2) bedeutet,

n die Zahl 1 oder 2, bevorzugt 1, ist und der Rest Z an den Rest D oder den Rest K oder im Falle von n = 2 jeweils an D und K bzw. an beide D gebunden ist sowie

M ein Wasserstoffatom oder ein Alkalimetall, wie Natrium, Kalium oder Lithium, ist.

Für den Formelrest Y stehende Ethylgruppen mit einem in β-Stellung befindlichen alkalisch eliminierbaren Substituenten sind beispielsweise eine β-Sulfatoethyl-, β-Thiosulfatoethyl- oder β-Phosphatoethyl-Gruppe oder eine β-Alkanoyloxy-ethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl- oder die β-(p-Toluolsulfonyloxy)-ethyl-Gruppe oder eine β-Halogenethyl-Gruppe, wie die β-Bromethyl- oder β-Chlorethyl-Gruppe, bevorzugt die β-Chlorethyl-Gruppe und insbesondere die β-Sulfatoethyl-Gruppe, ist. Bevorzugt ist Y die Vinylgruppe oder insbesondere bevorzugt die β-Chlorethyl-Gruppe oder die β-Sulfatoethyl-Gruppe.

Die verschiedenen Möglichkeiten der Synthese der erfindungsgemäßen Farbstoffe werden später beschrieben. Eine davon ist die Umsetzung durch Kupplungsreaktion entsprechender Ausgangs-Diazo- und

-Kupplungskomponenten.

Solche Ausgangsverbindungen sind beispielsweise die folgenden Aminoverbindungen, die als Diazokomponenten dienen können:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-4-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8-, oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diaminonaphthalin, 1,3-Diamino-2,4,6-trimethylbenzol, 1,4-Diamino-2,3,5,6-tetramethylbenzol,1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'-Aminobenzoylamino)-1-aminobenzol-6-sulfonsäure, 3-(4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 2-(β-Sulfatoethylsulfonyl)phenylanilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(β-Sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 2-Methoxy-4-[β-(N-methyltauryl)-ethylsulfonyl]-anilin, 5-(β-Sulfatoethylsulfonyl)-2-aminonaphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin.

Wenn bei der erfindungsgemäßen Synthese als Diazokomponente statt eines Diamins eine Amino-acetylaminoverbindung eingesetzt wird, aus der nachträglich die Acetylgruppe durch Verseifen wieder abgespalten wird, kommen die Monoacetylverbindungen der oben genannten Diazokomponenten in Frage, wie beispielsweise 1-Acetylamino-3-aminobenzol-4-sulfonsäure und 1-Acetylamino-4-aminobenzol-3-sulfonsäure.

Kupplungskomponenten, die zur Synthese der erfindungsgemäßen Azofarbstoffe dienen können, sind beispielsweise: Phenol, 1-Hydroxy-3- oder 4-methylbenzol, 1-Hydroxybenzol-4-sulfonsäure,2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- oder 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-oder -4,6-disulfonsäure, 1-Acetylamino-8-hydroxynaphthalin-3,6- oder -4,6-disulfonsäure, 1-(4'-Aminobenzoylamino)-8-hydroxynaphthalin-3,6- oder -4,6-disulfonsäure, 1-(4'-Nitrobenzoylamino)-8-hydroxynaphthalin-3,6- oder - 4,6-disulfonsäure, 1-(3'-Aminobenzoylamino)-8-hydroxynaphthalin-3,6 oder -4,6-disulfonsäure,1-(3'-Nitrobenzoylamino)-8-hydroxynaphthalin-3,6- oder - 4,6-disulfonsäure, 2-(4'-Amino-3'-sulfophenylamino)-5-hydroxynaphthalin-7-sulfonsäure, 3-Methyl-5-pyrazolon, 1-Phenyl-3-methyl-5-pyrazolon, 1-(4'-Sulfophenyl)-5-pyrazolon-3-carbonsäure, 1-(3'-Aminophenyl)-3-methyl-5-pyrazolon, 1-(2',5'-Disulfo-phenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxy-2-pyridon, 1-Ethyl-3-cyan- oder -3-chlor-4-methyl-6-hydroxy-2-pyridon, 1-Ethyl-3-sulfomethyl-4-methyl-6-hydroxy-2-pyridon, 2,4,6-Triamino-3-cyanpyridin, 2-(3'-Sulfophenylamino)-4,6-diamino-3-cyanpyridin, 2-(2'-Hydroxyethylamino)-3-cyan-4-methyl-6-aminopyridin, 2,6-Bis-(2'-hydroxyethylamino)-3-cyan-4-methylpyridin, 1-Ethyl-3-carbonyl-4-methyl-6-hydroxy-2-pyridon, 1-Ethyl-3-sulfomethyl-4-methyl-5-carbonyl-6-hydroxy-2-pyridon, N-Acetoacetylaminobenzol, 1-(N-Acetoacetylamino)-2-methoxybenzol-5-sulfonsäure, 4-Hydroxychinol-2-on, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfonphenylazo)-naphthalin-3,6-disulfonsäure, 1-($\beta$-Aminoethyl)-3-cyan-4-methyl-6-hydroxy-2-pyridon,1-($\gamma$-Aminopropyl)-3-sulfomethyl-4-methyl-6-hydroxy-2-pyridon, 1,3-Diaminobenzol, 1-Amino-3-N,N-di-($\beta$-hydroxyethyl)-aminobenzol,1-Amino-3-N,N-di-($\beta$-sulfatoethyl)-aminobenzol, 1-Amino-3-N,N-di-($\beta$-hydroxyethyl)-amino-4-methoxybenzol, 1-Amino-3-N,N-di-($\beta$-sulfatoethyl)-amino-4-methoxybenzol, 1-Amino-3-sulfo-benzylamino-benzol, 1-Amino-3-sulfo-benzylamino-4-chlorbenzol, 1-Amino-3-N,N-di-(sulfobenzyl)-aminobenzol, 2-(4-$\beta$-Sulfatoethylsulfonyl-phenyl)-3-methyl-5-pyrazolon und 1-(4-$\beta$-Sulfatoethylsulfonyl-phenyl)-3-carboxy-5-pyrazolon.

Aromatische Reste D der Diazokomponenten D-$NH_2$ , die keine faserreaktive Gruppe der allgemeinen Formel (2) tragen, sind beispielsweise solche der Amine der allgemeinen Formeln (5a) und (5b)

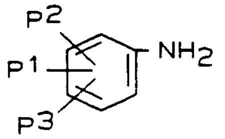 (5a) 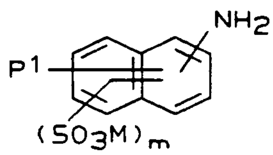 (5b)

in welchen

$P^1$ ein Wasserstoffatom, eine Sulfogruppe oder eine Gruppe der allgemeinen Formel -$SO_2$-Y mit Y

der obengenannten Bedeutung ist,

$P^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$P^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

wobei der Benzol- oder Naphthalinkern außerdem in ortho-Stellung zur $NH_2$-Gruppe eine Hydroxygruppe enthalten kann,

m die Zahl Null, 1 oder 2 bedeutet (wobei diese Gruppe im Falle von m gleich Null ein Wasserstoffatom bedeutet) und

M die obengenannte Bedeutung hat.

Bevorzugt ist hiervon $P^2$ gleich Wasserstoff, Methyl, Methoxy, Carboxy und Sulfo sowie $P^3$ gleich Wasserstoff, Methyl, Methoxy, Carboxy, Sulfo und Acetylamino.

Aromatische Amine der allgemeinen Formel D-$NH_2$ entsprechend den Formeln (5a) und (5b) sind beispielsweise: 2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Amino-naphthalin-1,5-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-($\beta$-Sulfatoethyl-sulfonyl)-anilin, 3-($\beta$-Sulfatoethylsulfonyl)-anilin, 2-Sulfo-5-($\beta$-sulfatoethylsulfonyl)-anilin, 2-Sulfo-4-($\beta$-sulfatoethylsulfonyl)-anilin, 2-Methoxy-5-($\beta$-sulfatoethylsulfonyl)-anilin, 2-Methoxy-5-methyl-4-($\beta$-sulfatoethylsulfonyl)-anilin, 2,5-Dimethoxy-4-($\beta$-sulfatoethylsulfonyl)-anilin, 2-Amino-5-($\beta$-sulfatoethylsulfonyl)-phenol, 2-Amino-4-($\beta$-sulfatoethylsulfonyl)-phenol, 2-Amino-6-($\beta$-sulfatoethylsulfonyl)-naphthalin-8-sulfonsäure, 2-Amino-6-($\beta$-sulfatoethylsulfonyl)-naphthalin-1-sulfonsäure, 2-Amino-8-($\beta$-sulfatoethylsulfonyl)-naphthalin-6-sulfonsäure, 2-Amino-5-($\beta$-sulfatoethylsulfonyl)-naphthalin-7-sulfonsäure und 2-Amino-7-($\beta$-sulfatoethylsulfonyl)-naphthalin-5-sulfonsäure.

Aromatische Amine der Diazokomponente Z-D-$NH_2$ mit dem faserreaktiven Rest Z gehen bevorzugt von aromatischen Aminen der allgemeinen Formeln (6a) und (6b)

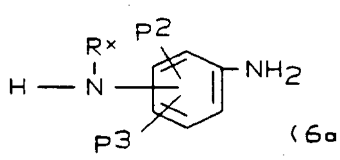 (6a) 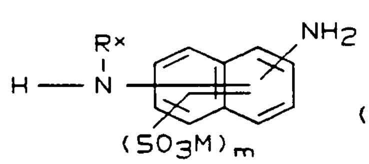 (6b)

aus, in welchen $R^x$, M, m, $P^2$ und $P^3$ die oben angegebenen, insbesondere bevorzugten Bedeutungen haben, wobei der Benzolkern in Formel (6a) und (6b) zusätzlich in ortho-Stellung zur Aminogruppe -$NH_2$ eine Hydroxygruppe enthalten kann.

Amine der allgemeinen Formeln (6) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure, 1,3-Diamino-5-methyl-benzol, 2,6-Diamino-naphthalin, 2,6-Diamino-naphthalin-4,8-disulfonsäure, 2-Amino-5-methylamino-naphthalin-1-sulfonsäure, 2-Amino-5-methylaminonaphthalin-1,7-disulfonsäure und 1,4-Diamino-naphthalin-6-sulfonsäure.

Bevorzugte Reste $D_1$ in Formeln (3a) und (3d) sind solche der allgemeinen Formeln (5c) und (5d); bevorzugte Reste Z-$D_1$- und Z-$D_2$- sowie Z-D- in Formeln (3b) bis (3e) bzw. (4a) und (4b) sind solche der allgemeinen Formel (5g), und bevorzugte Reste D bzw. Z-D- in Formel (4c) solche der allgemeinen Formeln (5e) und (5f) bzw. (5h):

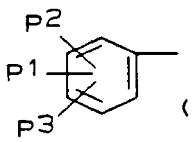 (5c)

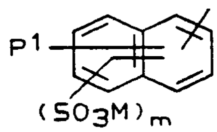 (5d)

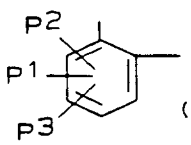 (5e)

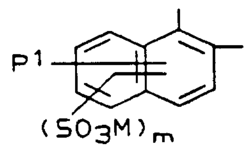 (5f)

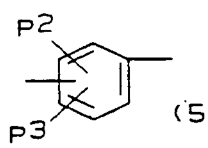 (5g)

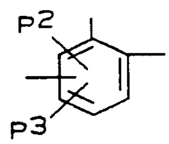 (5h)

in welchen $P^1$, $P^2$, $P^3$, m und M die obengenannten Bedeutungen haben.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

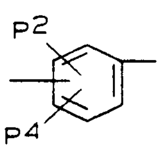 (7a)

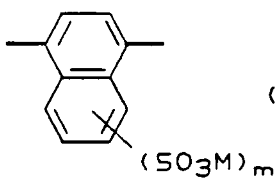 (7b)

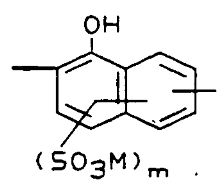 . (7c)

in welchen

- $P^2$ und M die oben angegebenen Bedeutungen haben,
- $P^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist und
- m für die Zahl Null, 1 oder 2 steht (wobei diese Gruppe im Falle von m gleich Null ein Wasserstoffatom bedeutet).

Verbindungen der Formel H-E-$NH_2$ sind beispielsweise: Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren,

Aminonaphthaline, Naphthole, Hydroxynaphthoesäurederivate, Aminonaphthalinsulfonsäuren oder Aminonaphtholsulfonsäuren. Kupplungskomponenten der Formel H-K , die keine faserreaktive Gruppe der allgemeinen Formel (2) tragen, sind beispielsweise Verbindungen der allgemeinen Formeln (8a) bis (8g)

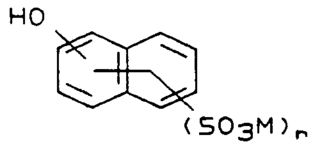 (8a) 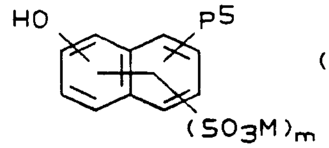 (8b)

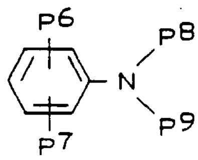 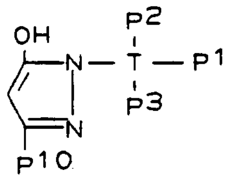 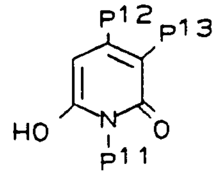

(8c) (8d) (8e)

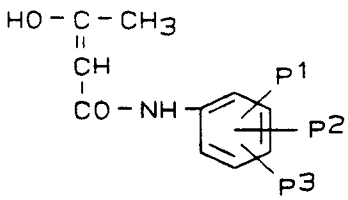 (8f) 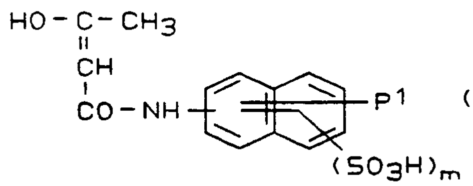 (8g)

in welchen

| | |
|---|---|
| $P^1$, $P^2$, $P^3$, m und M | die obengenannten Bedeutungen haben, |
| r | für die Zahl Null, 1, 2 oder 3 steht (wobei diese Gruppe im Falle r gleich Null ein Wasserstoffatom bedeutet), |
| $P^5$ | Alkylureido mit Alkylgruppen von 1 bis 6 C-Atomen, Phenylureido, im Phenylrest durch Chlor, Methyl, Methoxy, Nitro, Sulfo und/oder Carboxy und/oder eine Gruppe $-SO_2-Y$ mit Y der obigen Bedeutung substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder eine Gruppe $-SO_2-Y$ mit Y der obigen Bedeutung substituiertes Benzoylamino bedeutet, |
| $P^6$ | Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, |
| $P^7$ | Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist, |
| $P^8$ | Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist, |
| $P^9$ | für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist, |
| $P^{10}$ | Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy ist, |
| T | für einen Benzol- oder Naphthalinring, bevorzugt Benzolring, steht, |
| $P^{11}$ | Wasserstoff, Alkyl von 1 bis 6 C-Atomen, bevorzugt von 1 bis 4 C-Atomen, das durch Phenyl oder Sulfophenyl oder durch Hydroxy, Amino, Methoxy, Ethoxy, |

Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist und bevorzugt Wasserstoff oder Alkyl von 1 bis 4 C-Atomen, das durch Phenyl, Sulfo oder Sulfophenyl substituiert sein kann, ist,

$P^{12}$ ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist, bevorzugt ein Alkyl von 1 bis 4 C-Atomen oder Phenyl, ist und

$P^{13}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo oder Sulfoalkyl mit einem Alkylrest von 1 bis 4 C-Atomen, wie Sulfomethyl, oder Cyano oder Carbamoyl ist.

Verbindungen der allgemeinen Formeln (8) sind beispielsweise:

1-Naphthol-3-sulfonsäure, 1-Naphthol-4-sulfonsäure, 1-Naph thol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure oder 2-(3'- und 4'-Sulfophenyl)-amino-8-hydroxynaphthalin-6-sulfonsäure, 3-(3'- und 4'-Sulfophenyl)-amino-8-hydroxynaphthalin-6-sulfonsäure, N,N-Di-($\beta$-sulfoethyl)-anilin und dessen im Benzolkern durch Methyl, Methoxy und/oder Ethoxy mono- oder disubstituierten Derivate, N-Ethyl-N-($\beta$-sulfoethyl)-anilin, N-($\beta$-Sulfoethyl)-anilin, N-($\beta$-Carboxyethyl)-anilin und deren im Benzolkern durch Methyl, Methoxy und/oder Ethoxy mono- oder disubstituierten Derivate, des weiteren 1-[3'-($\beta$-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-($\beta$-Sulfatoethylsulfonyl)-benzoylamino]-4,6-disulfo-8-naphthol, 2-[3'-($\beta$-Chlorethylsulfonyl)-benzoylamino]-6-sulfo-8-naphthol, 2-[3'-(Vinylsulfonyl)-benzoylamino]-6-sulfo-8-naphthol, 3-[3'-($\beta$-Chlorethylsulfonyl)-benzoylamino]-6-sulfo-8-naphthol, 3-[3'-(Vinylsulfonyl)-benzoylamino]-6-sulfo-8-naphthol, 2-[N-Methyl-N-($\beta$-sulfatoethylsulfonyl)-amino]-6-sulfo-8-naphthol, 3-[N-Methyl-N-($\beta$-sulfatoethylsulfonyl)-amino]-6-sulfo-8-naphthol, 2-[N-Ethyl-N-($\beta$-sulfatoethylsulfonyl)-amino]-6-sulfo-8-naphthol, 1-[N'-(3'-$\beta$-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(2'-Vinylsulfonyl-ethyl)-ureido]-3,6-disulfo-8-naphthol, 1-[N'-(3'-$\beta$-Chlorethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(2'-$\beta$-Chlorethylsulfonyl-ethyl)-ureido]-4,6-disulfo-8-naphthol, 2-[N'-(3'-$\beta$-Sulfatoethylsulfonyl-phenyl)-ureido]-6-sulfo-8-naphthol, 2-[N'-(2'-$\beta$-Chlorethylsulfonyl-ethyl)-ureido]-6-sulfo-8-naphthol, 3-[N'-(3'-$\beta$-Chlorethylsulfonyl-phenyl)-ureido]-6-sulfo-8-naphthol und 3-[N'-(2'-Vinylsulfonyl-ethyl)-ureido]-6-sulfo-8-naphthol.

Von besonderer Bedeutung sind hiervon sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Pyrazolon-Kupplungskomponenten sind beispielsweise 3-Methyl-, 3-Carboxy- und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen, beispielsweise:

1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-Sulfophenyl)-, 1-(3'-Sulfamoylphenyl)-3-carboxy-5-pyrazolon, 1-(3'- oder 4'-Sulfophenyl)-, 1-(2'-Chlor-4'- oder -5'-sulfophenyl)-, 1-(2'-Methyl-4'-sulfophenyl)-, 1-(4',8'-Disulfo-2'-naphthyl)- und 1-(6'-Sulfo-1'-naphthyl)-3-methyl-5-pyrazolon, 1-Phenyl-5-pyrazolon-3-carbonsäureethylester, 5-Pyrazolon-3-carbonsäureethylester, 5-Pyrazolon-3-carbonsäure, 1-[4'-($\beta$-Sulfatoethylsulfonyl)-2'-sulfo]-phenyl-3-methyl-pyrazol-5-on, 1-[4'-($\beta$-Sulfatoethylsulfonyl)]-phenyl-3-carboxy-pyrazol-5-on, 1-[4'-($\beta$-Sulfatoethylsulfonyl)]-phenyl-3-methyl-pyrazol-5-on, 1-[3'-($\beta$-Sulfatoethylsulfonyl)]-phenyl-3-carboxy-pyrazol-5-on, 1-[3'-($\beta$-Sulfatoethylsulfonyl)]-phenyl-3-methyl-pyrazol-5-on, und 1-(4'-Sulfophenyl)-3-carboxy-pyrazol-5-on.

Pyridonkupplungskomponenten sind beispielsweise 1-Ethyl-2-hydroxy-4-methyl-5-carbonamido-pyridon-6, 1-(2'-Hydroxyethyl)-2-hydroxy-4-methyl-5-carbonamido-pyridon-6, 1-(4'-Sulfo-phenyl)-2-hydroxy-4-methyl-5-carbonamido-pyridon-6,1-(2'-Sulfoethyl)-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonyl-pyridon-6 und 1-(2'-Sulfo-ethyl)-2-hydroxy-4-carboxy-pyridon-6 und Acetoacetyl-arylamid-Kupplungskomponenten sind beispielsweise Acetoacetyl-(2-methoxy-4-sulfo-5-methyl)-anilin, Acetoacetyl-(2,4-dimethoxy-5-methyl)-anilin und Acetoacetyl-(4-$\beta$-sulfatoethylsulfonyl)-anilin.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

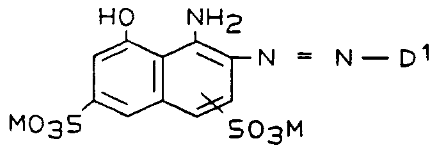

(9a)

in welcher

$D^1$ der Rest einer Diazokomponente, beispielsweise ein Rest der Formel (10a) oder (10b)

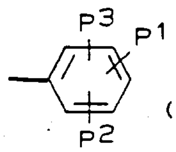

(10a) oder

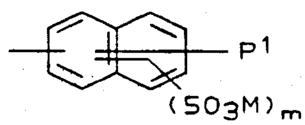

(10b)

sein kann, worin $P^1$, $P^2$, $P^3$, M und m die oben angegebenen Bedeutungen haben.

Einzelne Reste $D^1$ sind in Formel (9a) beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disuifo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-($\beta$-Sulfatoethylsulfonyl)-phenyl, 3-($\beta$-Sulfatoethylsulfonyl)-phenyl und 6-($\beta$-Sulfatoethylsulfonyl)-naphthyl-2-yl.

Kupplungskomponenten, die erfindungsgemäß die faserreaktive Gruppe der Formel (2) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11j) bzw. deren $Z^o$-freien Vorprodukte:

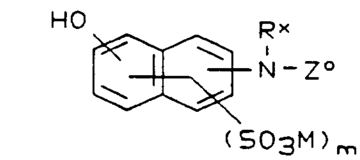
(11 a)

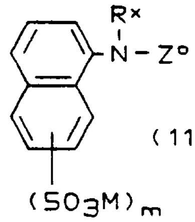
(11 b)

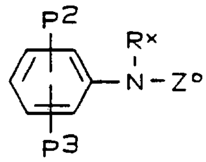
(11 c)

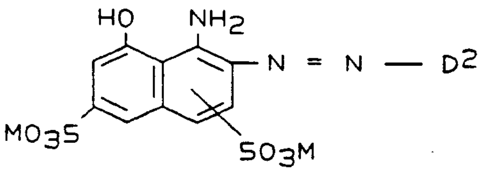
(11 d)

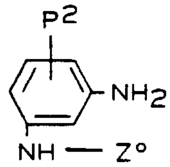
(11 e)

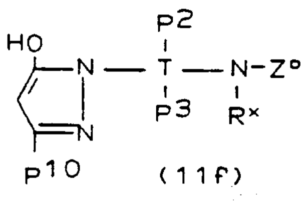
(11 f)

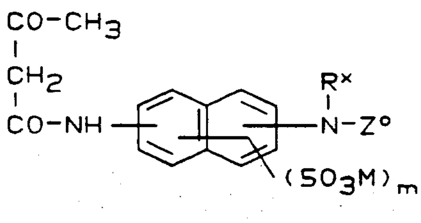
(11 g)

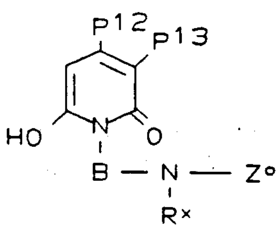
(11 h)

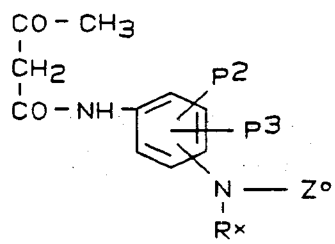
(11 j)

in welchen

$R^x$, $P^2$, $P^3$, $P^{10}$, $P^{12}$, $P^{13}$, $D^2$, M, m und T die oben angegebenen, insbesondere bevorzugten Bedeutungen haben,

B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist, wobei im Falle von "Benzyl" und "Phenethyl" die Gruppe - $N(R^x)$-$Z^o$ an den Benzolkern gebunden ist,

$Z^o$ ein Rest der allgemeinen Formel (2A)

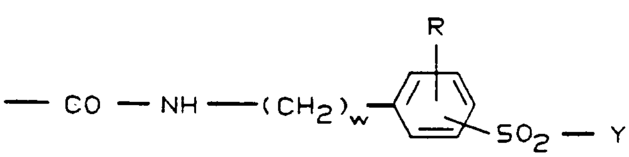
(2A)

ist, in welcher R, w und Y die obengenannten Bedeutungen haben,

$D^2$ der Rest einer Diazokomponente mit einer faserreaktiven Gruppe, wie insbesondere der Formel (2), bspw. ein Rest der

Formel (10c)

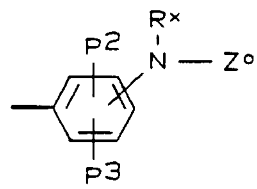

(10c)

in welcher $R^x$, $P^2$, $P^3$ und $Z^o$ die oben angegebenen, insbesondere bevorzugten Bedeutungen haben, oder ein Rest der obengenannten Formel (10a) oder (10b) mit $P^1$ gleich einer Gruppe der Formel $-SO_2-Y$ ist.

Aromatische Diamine aus dem Rest der Formel (10c) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen eine der Aminogruppe durch den faserreaktiven Rest $Z^o$ substituiert ist.

Reste K in den Formeln (3b) und (4a), die die Gruppe Z nicht enthalten, sind insbesondere Reste der allgemeinen Formeln (12a) bis (12h)

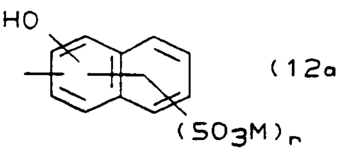

(12a)

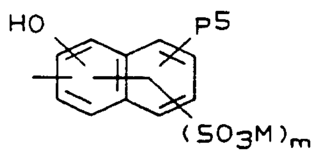

(12b)

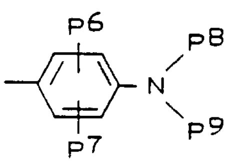

(12c)

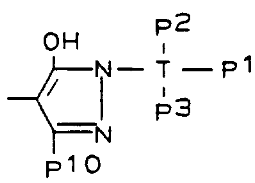

(12d)

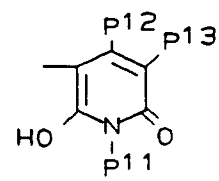

(12e)

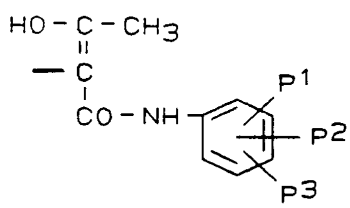

(12f)

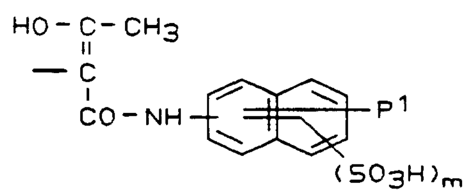

(12g)

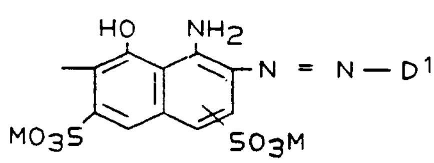

(12h)

in welchen die einzelnen Formelglieder die obengenannten Bedeutungen haben.

Reste K in den Formeln (3a), (3c) und (4a), die die Gruppe Z enthalten, sind deshalb insbesondere Reste der allgemeinen Formeln (12j) bis (12q)

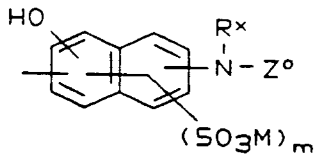

(12j)

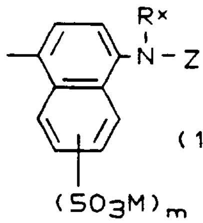

(12k)

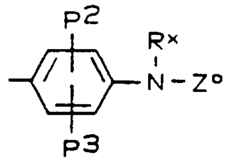

(12m)

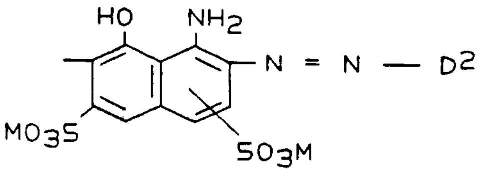

(12n)

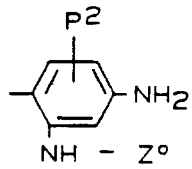

(12o)

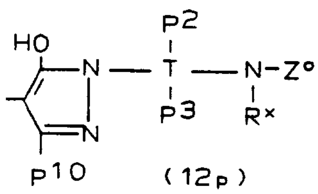

(12p)

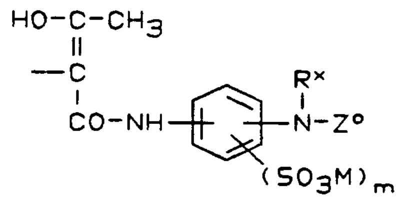

(12q)

in welchen die einzelnen Formelglieder die obengenannten Bedeutungen haben.

Reste K in der Formel (4c) mit einem metallkomplex-bindenden Sauerstoffatom, die gegebenenfalls die Gruppe Z enthalten, sind insbesondere solche der Formeln (13a) bis (13f)

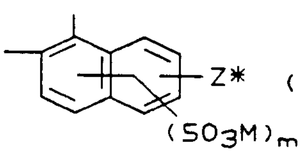

(13a)

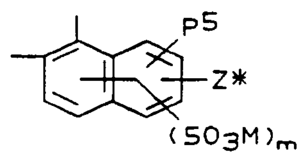

(13b)

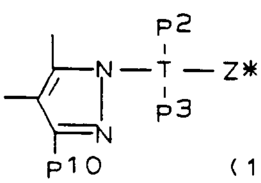

(13c)

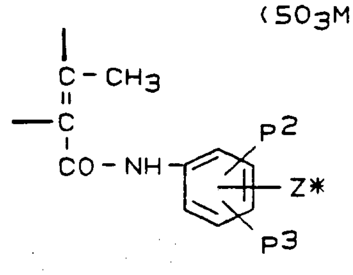

(13d)

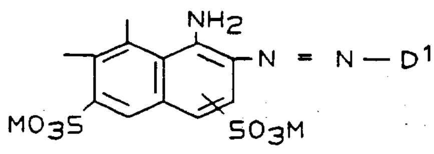

(13e)

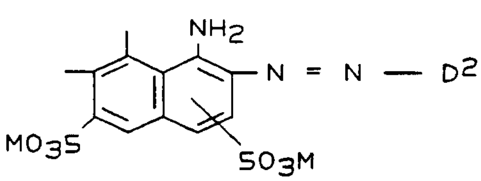

(13f)

in welchen $Z^*$ eine der Bedeutungen von $P^1$ oder Z besitzt und die Formelglieder eine der obengenannten Bedeutungen haben.

Die obengenannten Kupplungskomponenten der allgemeinen Formeln (11a) und (11d) bis (11j) können aus ihren $Z^{\circ}$-freien Ausgangsverbindungen, d. h. denjenigen Amino-Ausgangsverbindungen, die anstelle der Gruppe $-N(R^x)-Z^{\circ}$ die Gruppe $-N(R^x)-H$ besitzen, durch Umsetzung mit einer Isocyanatverbindung der später angegebenen allgemeinen Formel (56) hergestellt werden. Hingegen sind die Verbindungen der allgemeinen Formel (11b) und (11c) als Kupplungskomponenten selbst nicht dienlich. Sie müssen in Form ihrer $Z^{\circ}$-freien Aminoverbindungen als Kupplungskomponenten eingesetzt werden; nach der Kupplungsreaktion kann in der so gebildeten Azoverbindung der faserreaktive Rest $Z^{\circ}$ durch Umsetzung mit einer Verbindung der allgemeinen Formel (56) eingeführt werden. Diese Methode kann auch bei den $Z^{\circ}$-freien Amino-Ausgangsverbindungen der Verbindungen (11a) und (11d) bis (11j) gewählt werden.

Von den erfindungsgemäßen Anthrachinonfarbstoffen sind diejenigen bevorzugt, die der allgemeinen Formel (14a)

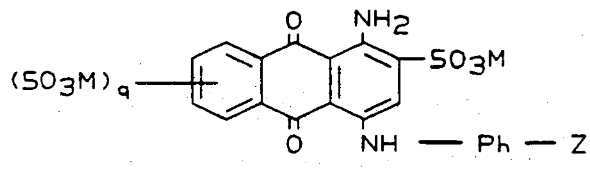

(14a)

entsprechen, in welcher

- M ein Wasserstoffatom oder ein Alkalimetall, wie Natrium, Kalium oder Lithium, ist,
- q die Zahl Null oder 1 bedeutet (wobei im Falle von q gleich Null diese Gruppe ein Wasserstoffatom darstellt),
- Ph ein Phenylenrest ist, der durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, und
- Z die faserreaktive Gruppe der allgemeinen Formel (2) ist.

Von den erfindungsgemäßen Triphendioxazinfarbstoffen sind bevorzugt diejenigen, die der allgemeinen Formel (14b)

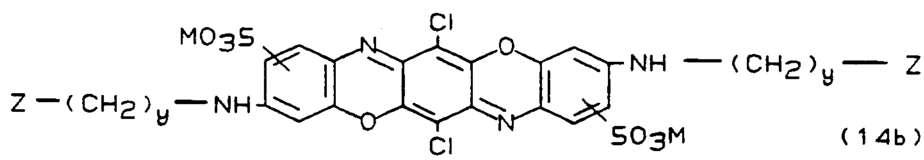

(14b)

entsprechen, in welcher M ein Wasserstoffatom oder ein Alkalimetall, wie Natrium, Kalium oder Lithium ist, Z die faserreaktive Gruppe der allgemeinen Formel (2) ist und y für die Zahl 2, 3 oder 4 steht, wobei die beiden Sulfogruppen $-SO_3M$ bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (14c)

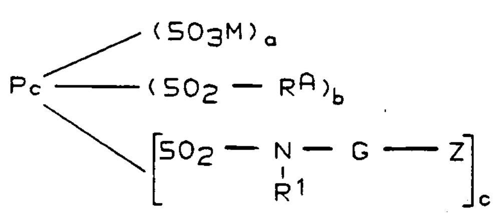

(14c)

entsprechen, in welcher bedeuten:

- Pc ist der Rest eines Kupfer- oder Nickelphthalocyanins;
- $R^A$ ist eine Aminogruppe der Formel $-NR^2R^3$ , in welcher $R^2$ und $R^3$ unabhängig voneinander ein Wasserstoffatom oder eine Alkylgruppe von 1 bis 4 C-Atomen, die durch Hydroxy oder Sulfo

substituiert sein kann, bedeuten, oder ist ein heterocyclischer, N-haltiger Rest, wie der Morpholino- oder Piperidino-Rest;

$R^1$ ist ein Wasserstoffatom oder eine Alkylgruppe von 1 bis 4 C-Atomen, wie Methyl und Ethyl;

G ist ein Phenylenrest, der durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, wie beispielsweise ein Carboxyphenylen- oder Sulfophenylenrest, oder ist eine Alkylengruppe von 2 bis 6 C-Atomen, wie die Ethylengruppe, oder ein Phenylen-alkylen-Rest, dessen Phenylen wie oben angegeben substituiert sein kann und dessen Alkylenteil ein Alkylen von 1 bis 4 C-Atomen ist;

Z ist die faserreaktive Gruppe der Formel (2);

a ist eine Zahl von 2 bis 3,

b ist eine Zahl von Null bis 3 und

c ist eine Zahl von 1 bis 2,

wobei die Summe von (a + b + c) gleich einer Zahl von 3 bis 4 ist.

Von den erfindungsgemäßen Kupferformazan-Farbstoffen sind diejenigen bevorzugt, die der allgemeinen Formel (14d)

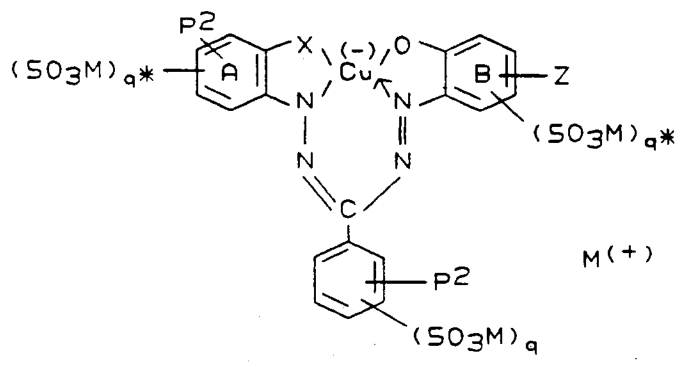

(14d)

entsprechen, in welcher bedeuten:

X ist die Oxigruppe der Formel -O- oder bevorzugt die Carbonyloxigruppe der Formel -CO-O- ;

q* steht für die Zahl Null oder 1 (wobei im Falle von q* gleich Null diese Gruppe Wasserstoff bedeutet);

$P^2$, M, m, q und Z haben eine der obengenannten, insbesondere bevorzugten Bedeutungen.

Von den Kupferformazan-Farbstoffen der allegemeinen Formel (14d) sind insbesondere diejenigen bevorzugt, in welchen $P^2$ jeweils Wasserstoff ist, q die Zahl Null bedeutet, q* die Zahl 1 ist, wobei in diesem Falle die an den Benzolkern A gebundene Sulfogruppe in para-Stellung zur Gruppe X und die an den Benzolkern B gebundene Sulfogruppe in para-Stellung zur Oxigruppe gebunden ist, und Z eine Gruppe der allgemeinen Formel -NH-Z° mit Z° der obengenannten Bedeutung ist, wobei in Z° die Gruppe $-SO_2$-Y bevorzugt in para-Stellung an den Benzolkern gebunden ist und Y bevorzugt die β-Chlorethyl-Gruppe ist, R bevorzugt ein Wasserstoffatom bedeutet und w bevorzugt für die Zahl 2 steht, und wobei diese Gruppe -NH-Z° an den Benzolkern B bevorzugt in ortho-Stellung zur Oxigruppe gebunden ist.

Weiterhin bevorzugt sind von den Azofarbstoffen solche, die den allgemeinen Formeln (15a) bis (15j), (16a) und (16b) entsprechen:

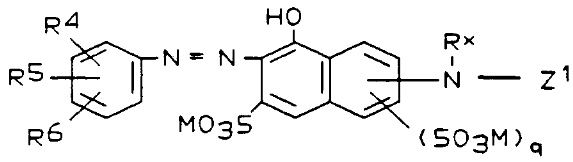

(15a)

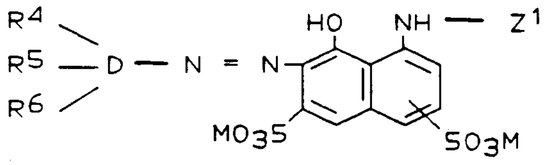

(15b)

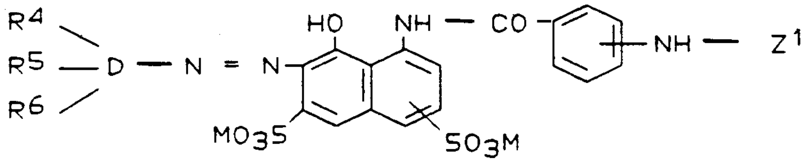

(15c)

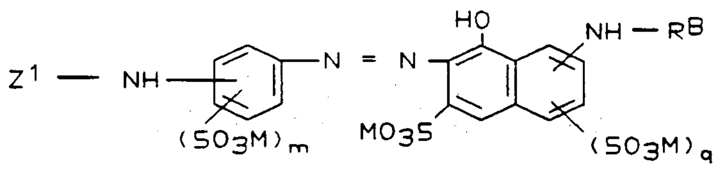

(15d)

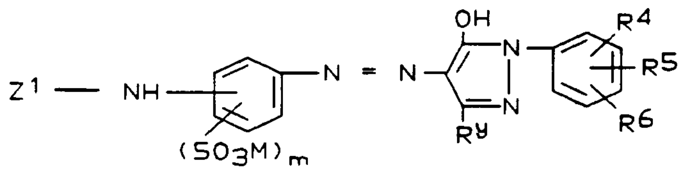

(15e)

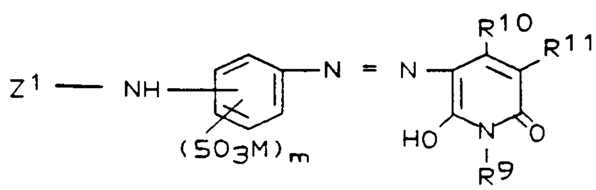

(15f)

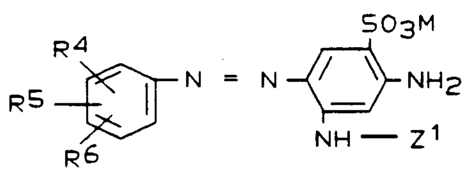

(15g)

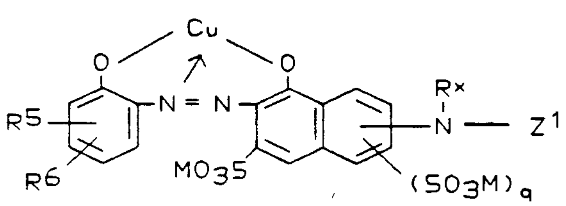

(15h)

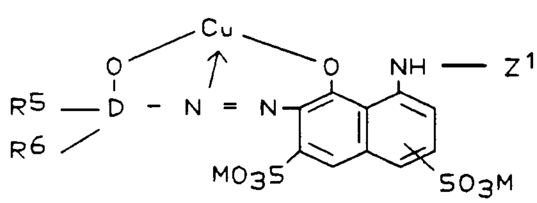

(15j)

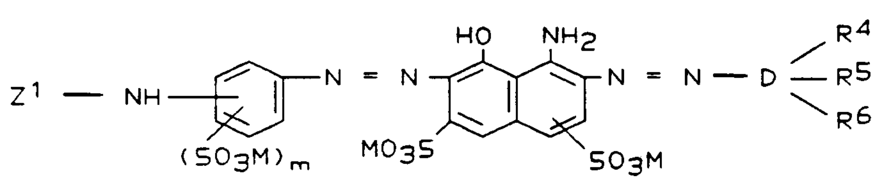

(16a)

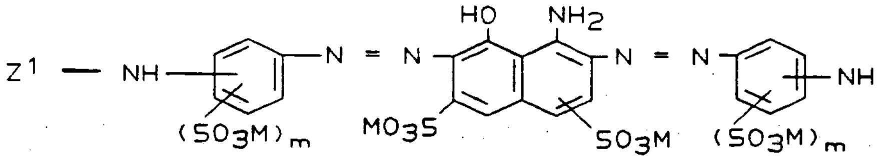

(16b)

in welchen bedeuten:

M hat eine der obengenannten Bedeutungen;

$R^x$ ist Wasserstoff oder Alkyl von 1 bis 4 C-Atomen, wie Methyl, bevorzugt Wasserstoff;

$R^4$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo;

$R^5$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo;

$R^6$ ist Wasserstoff, Sulfo, β-Sulfatoethylsulfonyl, β-Chlorethylsulfonyl oder Vinylsulfonyl;

$Z^1$ ist eine Gruppe der allgemeinen Formel (2A) oder bevorzugt eine Gruppe der allgemeinen Formel (2B)

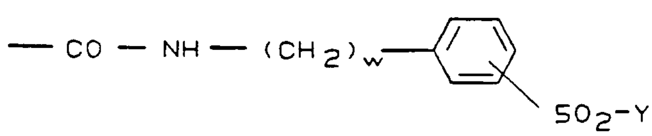

(2B)

in welcher w für die Zahl 1 oder 2, bevorzugt 2, steht, Y eine der obengenannten, insbesondere bevorzugten Bedeutungen hat und die Gruppe $-SO_2$-Y in meta- oder para-Stellung an den Benzolkern gebunden ist;

D ist ein Benzolring oder ist ein Naphthalinring, an den die Azogruppe in β-Stellung gebunden ist, wobei im Falle, daß D den Naphthalinring bedeutet, $R^4$ und $R^5$ bevorzugt jedes, unabhängig voneinander, ein Wasserstoffatom oder eine Sulfogruppe bedeuten;

m steht für die Zahl Null, 1 oder 2 (wobei im Falle von m gleich Null diese Gruppe ein Wasserstoffatom darstellt);

q steht für die Zahl Null oder 1 (wobei im Falle von q gleich Null diese Gruppe ein Wasserstoffatom darstellt);

$R^7$ ist eine Alkanoylgruppe von 2 bis 5 C-Atomen, wie die Acetylgruppe, die Benzoylgruppe, eine β-Sulfatoethylsulfonyl- oder eine 3-(β-Chlorethylsulfonyl)-benzoyl-Gruppe;

$R^8$ ist eine Alkanoylgruppe von 2 bis 5 C-Atomen, wie die Acetylgruppe, oder eine Benzoylgruppe;

$R^y$ ist die Methyl- oder Carboxygruppe;

$R^9$ ist ein Wasserstoffatom oder eine Alkylgruppe von 1 bis 4 C-Atomen, wie die Methylgruppe oder Ethylgruppe, die durch eine Sulfo- oder Carboxygruppe substituiert sein kann, oder der Phenylrest;

$R^{10}$ ist ein Wasserstoffatom oder eine Alkylgruppe von 1 bis 4 C-Atomen, wie die Methylgruppe, oder der Phenylrest;

$R^{11}$ ist ein Wasserstoffatom oder die Cyano-, Carbamoyl-, Sulfamoyl- oder Sulfomethylgruppe.

Weitere bevorzugte erfindungsgemäße Farbstoffe entsprechend der allgemeinen Formel (1) sind diejenigen der nachstehend angegebenen Formeln (17) bis (31):

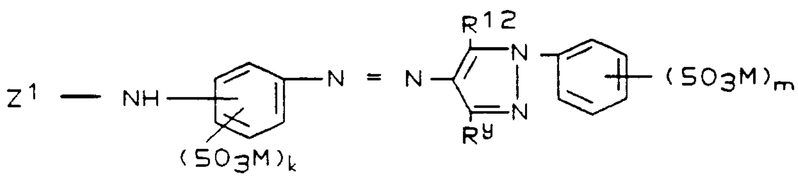

(17)

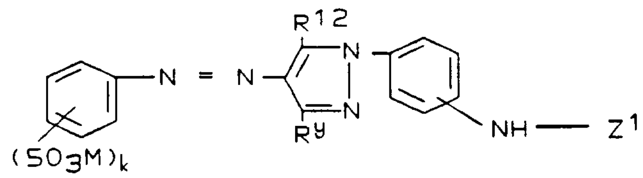

(18)

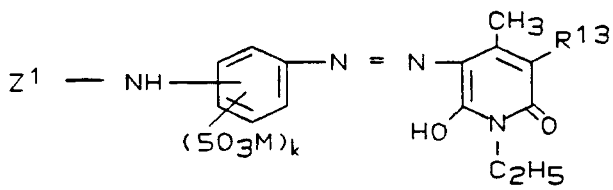

(19)

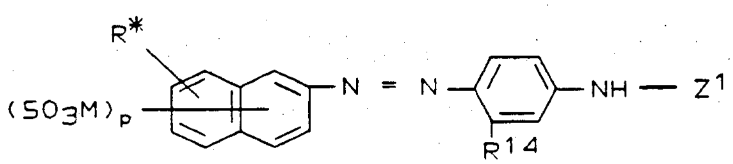

(20)

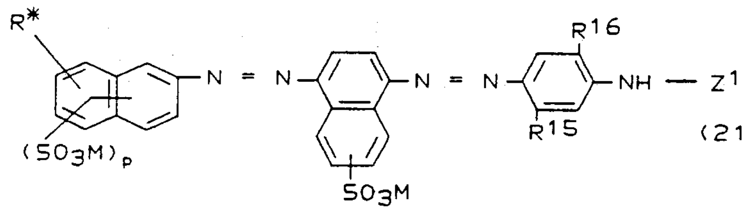

(21)

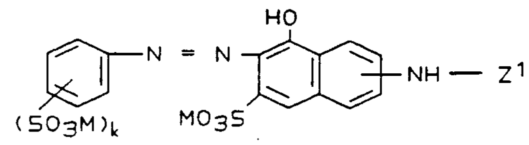

(22)

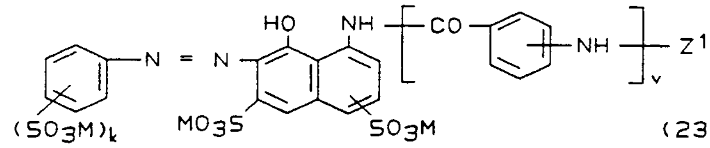

(23)

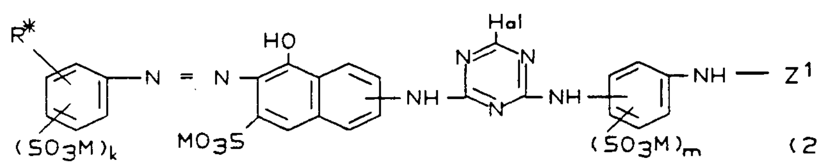

(24)

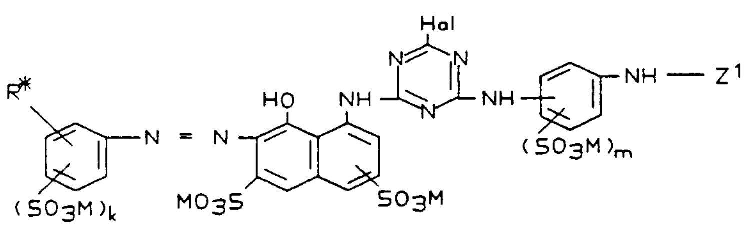

(25)

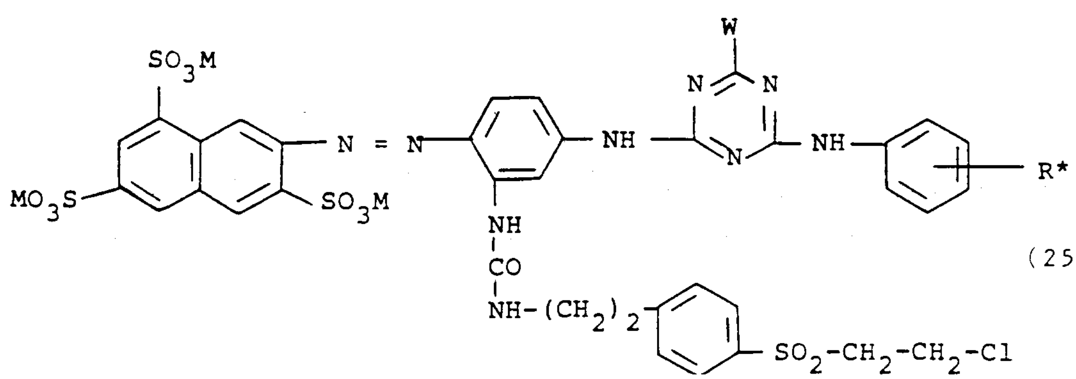

(25a)

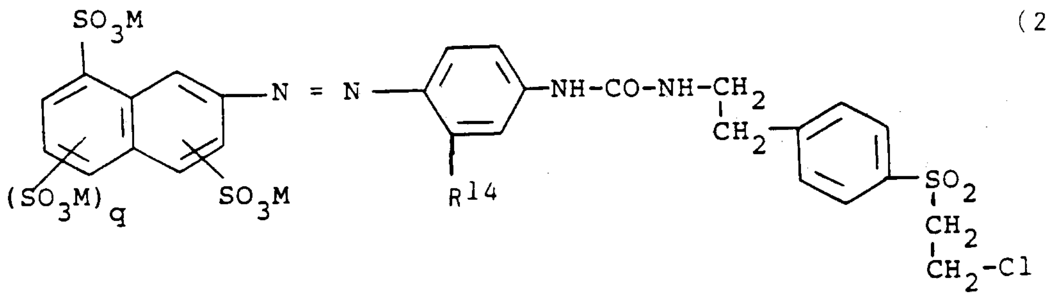

(25b)

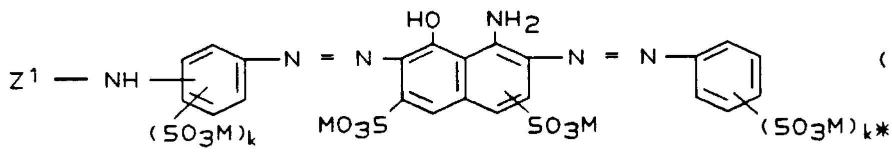

(26)

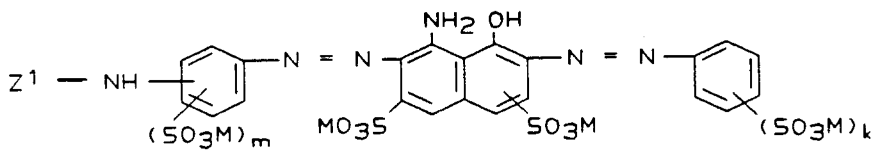

(27)

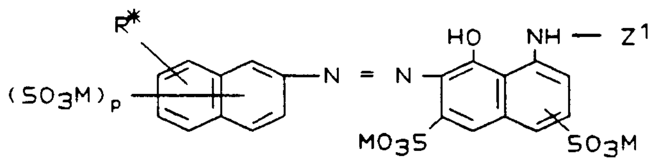

(28)

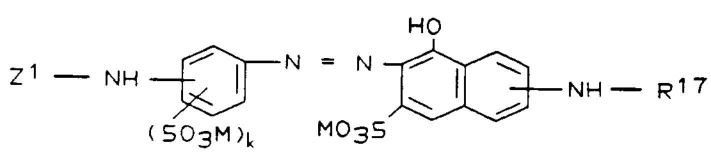

(29)

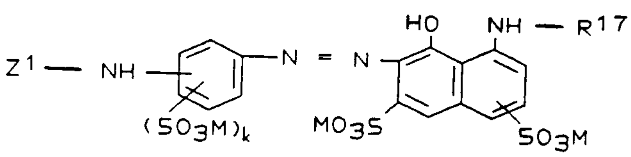

(30)

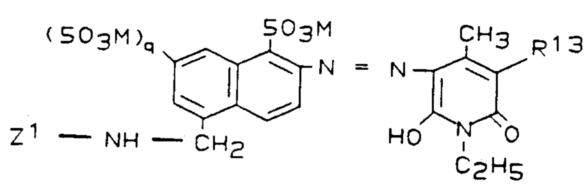

(31),

des weiteren die Metallkomplexfarbstoffe, wie die 1:2-Chrom- und 1:2-Kobalt- und insbesondere die 1:1-Kupferkomplex-Farbstoffe der Verbindungen der Formeln (32) bis (37):

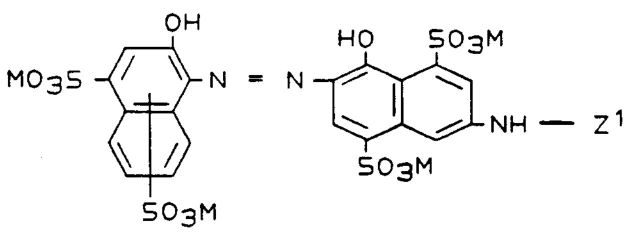

(32)

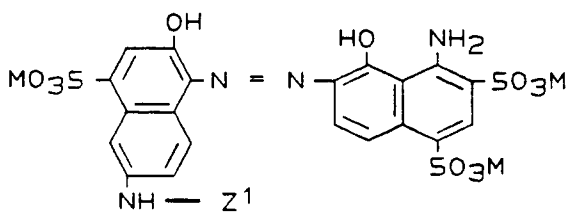

(33)

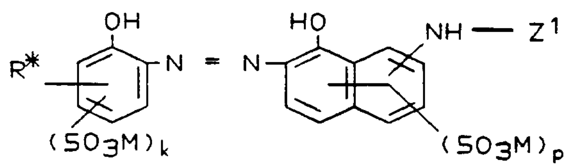

(34)

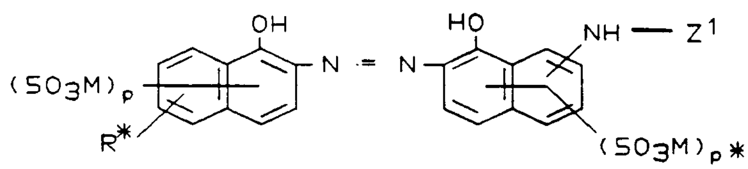

(35)

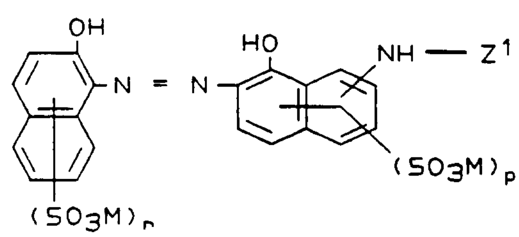

(36)

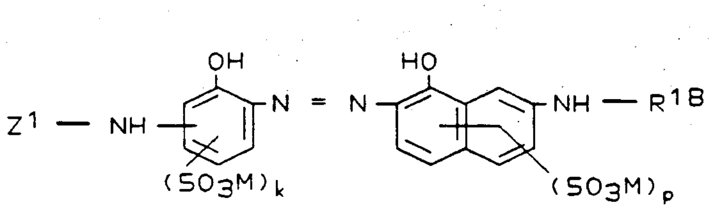

(37),

des weiteren die Farbstoffe der Formeln (38) bis (54):

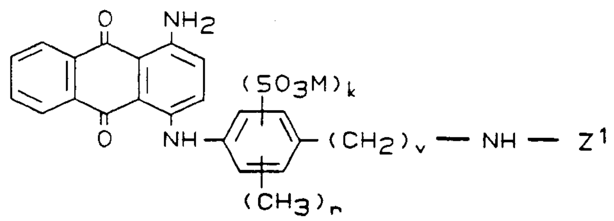

(38)

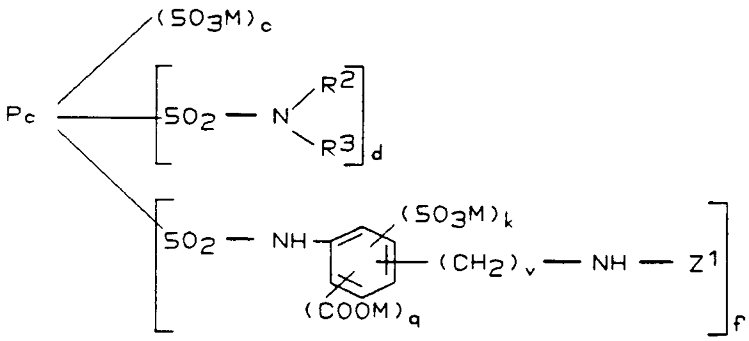

(39)

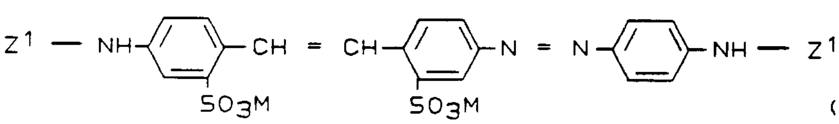

(40)

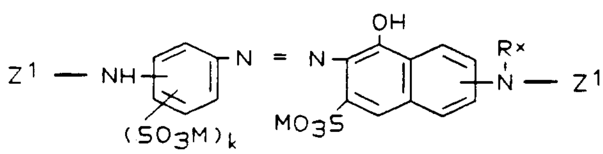

(41)

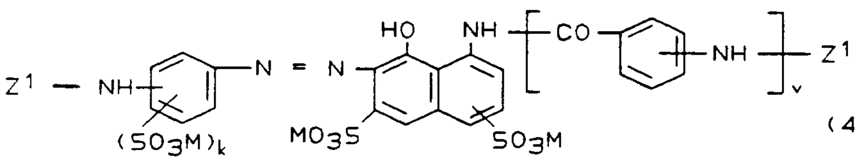

(42)

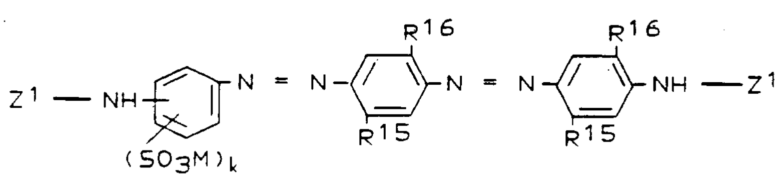

(43)

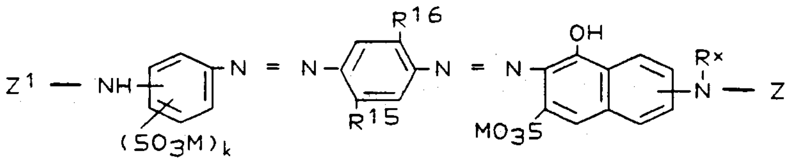

(44)

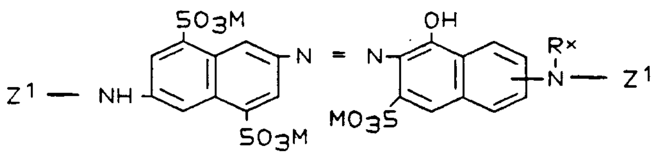

(45)

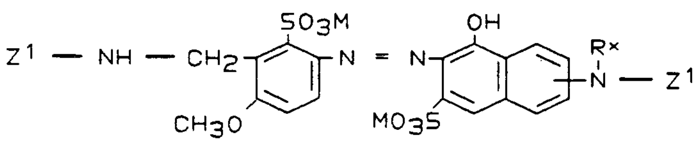

(46)

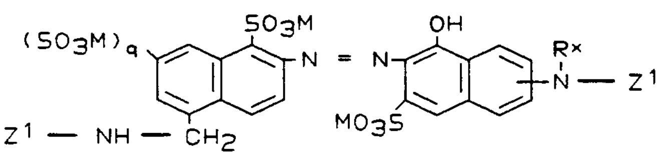

(47)

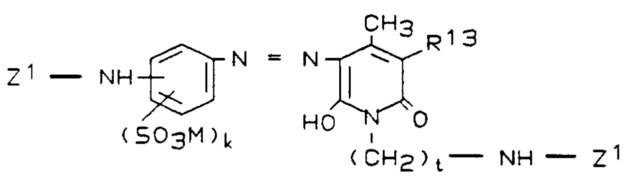

(48)

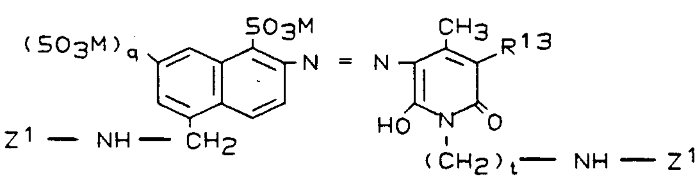

(49)

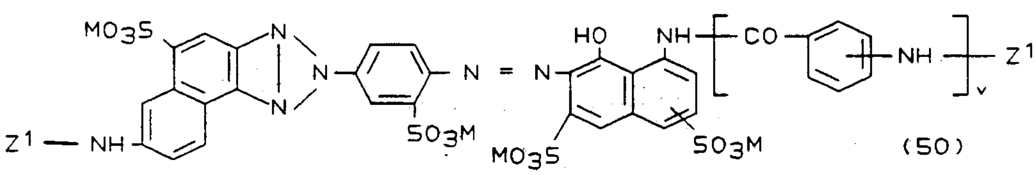

(50)

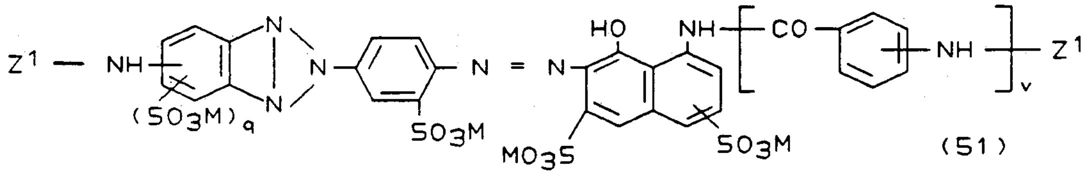

(51)

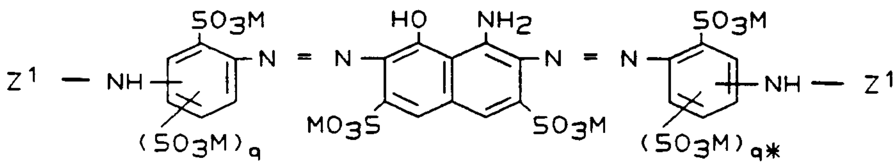

(52)

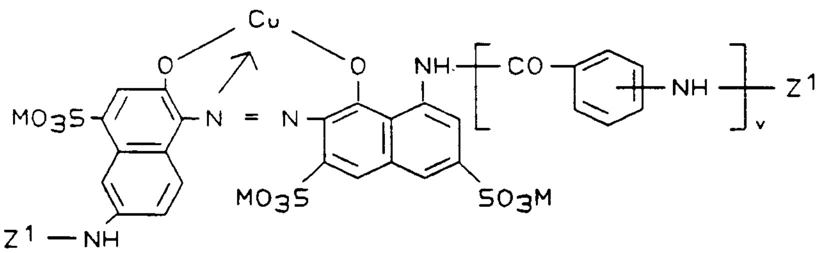

(53)

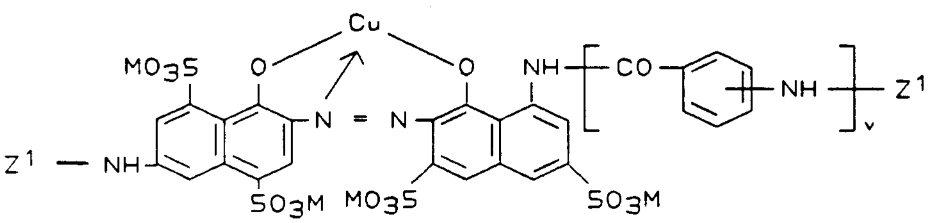

(54).

In diesen Formeln bedeuten:

| | |
|---|---|
| M, m, $Z^1$ und $R^y$ | haben die obengenannten Bedeutungen; |
| $R^*$ | ist Sulfo, Vinylsulfonyl, $\beta$-Chlorethylsulfonyl oder $\beta$-Sulfatoethylsulfonyl; |
| k | steht für die Zahl 1 oder 2, bevorzugt 1; |
| k* | steht für die Zahl 1 oder 2; |
| $R^{12}$ | steht für die Hydroxy- oder Aminogruppe; |
| $R^{13}$ | ist die Cyan-, Carbamoyl- oder Sulfomethyl-Gruppe; |
| $R^{14}$ | ist die Methyl-, Acetylamino- oder Ureidogruppe; |
| p | steht für die Zahl 1, 2 oder 3; |
| p* | ist die Zahl 1, 2 oder 3; |
| $R^{15}$ | ist ein Wasserstoffatom oder eine Alkylgruppe von 1 bis 4 C-Atomen, wie die Methyl- und Ethylgruppe, eine Alkoxygruppe von 1 bis 4 C-Atomen, wie die Methoxy- und Ethoxygruppe, eine Alkanoylaminogruppe von 2 bis 5 C-Atomen, wie die Acetylaminogruppe, die Ureidogruppe oder ein Halogenatom, wie ein Brom- und insbesondere ein Chloratom, vorzugsweise jedoch ein Wasserstoffatom oder die Methyl-, Ethyl-, Methoxy-, Ethoxy-, Acetylamino-oder Ureidogruppe oder ein Chloratom; |
| $R^{16}$ | ist ein Wasserstoffatom oder eine Alkylgruppe von 1 bis 4 C-Atomen, wie die Methyl- und Ethylgruppe, eine Alkoxygruppe von 1 bis 4 C-Atomen, wie die Methoxy- und Ethoxygruppe oder ein Halogenatom, wie ein Brom- und insbesondere ein Chloratom, vorzugsweise jedoch ein Wasserstoffatom oder die Methyl-, Ethyl-, Methoxy- oder Ethoxygruppe oder ein Chloratom; |

| | |
|---|---|
| v | ist die Zahl Null oder 1; |
| Hal | ist ein Chlor- oder Fluoratom; |
| W | ist Chlor, Fluor oder Cyanamido; |
| $R^{17}$ | ist die Acetyl- oder Benzoylgruppe; |
| $R^{18}$ | ist ein Wasserstoffatom oder die Acetylgruppe; |
| r | ist die Zahl Null oder 1, 2 oder 3 (wobei im Falle von r gleich Null diese Gruppe ein Wasserstoffatom bedeutet); |
| $R^2$ | ist ein Wasserstoffatom oder eine Alkylgruppe von 1 bis 4 C-Atomen, wie die Methyl- oder Ethylgruppe und |
| $R^3$ | ist ein Wasserstoffatom oder eine Alkylgruppe, wie die Methyl- oder Ethylgruppe, oder |
| $R^2$ und $R^3$ | bilden zusammen mit dem N-Atom und einem oder zwei Alkylengruppen von 2 bis 5 C-Atomen und gegebenenfalls einem N- oder O-Atom oder einer Gruppe -NH- einen heterocyclischen Rest, wie beispielsweise den Piperidino- oder Morpholinorest; |
| q | steht für die Zahl Null oder 1 (wobei im Falle von q gleich Null diese Gruppe ein Wasserstoffatom darstellt); |
| q* | steht für die Zahl Null oder 1 (wobei im Falle von q* gleich Null diese Gruppe ein Wasserstoffatom darstellt); |
| Pc | ist der Rest des Kupfer- oder Nickelphthalocyanins; |
| c | steht für eine Zahl von 1 bis 3, |
| d | steht für eine Zahl von 0,5 bis 1,5 und |
| f | steht für eine Zahl von 1 bis 2, wobei die Summe von (c + d + f) eine Zahl von 3 bis 4 ist; |
| $R^x$ | ist ein Wasserstoffatom oder eine Alkylgruppe von 1 bis 4 C-Atomen, wie die Methylgruppe; |
| t | steht für die Zahl 2 oder 3; |

die in den obigen Farbstofformeln angegebenen Benzolringe können zusätzlich noch substituiert sein, wie beispielsweise durch 1 oder 2 Substituenten aus der Gruppe Methyl, Ethyl, Methoxy, Ethoxy, Methylsulfonyl, Ethylsulfonyl, Carboxy, Acetylamino und Chlor, und die Naphthalinringe durch einen Substituenten aus der Gruppe Methoxy, Carboxy, Acetylamino, Nitro und Chlor.

Von den Azoverbindungen der allgemeinen Formel (15b) sind insbesondere diejenigen zu nennen, bei denen D ein Benzolring ist, $R^4$ und $R^5$ beide Wasserstoff sind, $R^6$ Vinylsulfonyl, $\beta$-Chlorethylsulfonyl oder $\beta$-Sulfatoethylsulfonyl in meta- oder para-Stellung zur Azogruppe ist und die eine Gruppe $-SO_3M$ an den Naphthalinrest in meta-Stellung zur Gruppe $-NH-Z^1$ gebunden ist, desweiteren diejenigen, bei denen D ein Naphthalinring ist, an den die Azogruppe in 2-Stellung gebunden ist, $R^4$ Sulfo in 1-Stellung an den Naphthalinring bedeutet, $R^5$ Wasserstoff bedeutet, $R^6$ Vinylsulfonyl, $\beta$-Chlorethylsulfonyl oder $\beta$-Sulfatoethylsulfonyl in 6-Stellung an den Naphthalinring bedeutet und die eine Gruppe $-SO_3M$ an den Naphtholrest in meta-Stellung zur Gruppe $-NH-Z^1$ gebunden ist.

Von den Verbindungen der allgemeinen Formel (16a) sind insbesondere diejenigen zu nennen, bei denen M Wasserstoff oder ein Alkalimetall ist, m die Zahl 1 bedeutet, D ein Benzolring ist, $R^4$ und $R^5$ beide Wasserstoff sind, $R^6$ Vinylsulfonyl, $\beta$-Chlorethylsulfonyl oder $\beta$-Sulfatoethylsulfonyl in meta-oder para-Stellung an den Benzolkern bedeutet und $Z^1$ eine Gruppe der allgemeinen Formel (2A) mit w, R und Y der obengenannten Bedeutung ist.

In allen obigen Formeln können die einzelnen Formelglieder, sowohl verschiedener als auch gleicher Bezeichnung innerhalb einer allgemeinen Formel, im Rahmen ihrer Bedeutung zueinander gleiche und voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (2) enthält, miteinander umsetzt oder indem man von einer aminogruppenhaltigen Ausgangsverbindung der allgemeinen Formel (55)

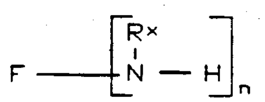

(55)

in welcher F, $R^x$ und n die obengenannten Bedeutungen haben, ausgeht und diese mit einer Isocyanatverbindung der allgemeinen Formel (56)

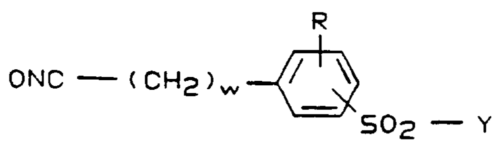

(56)

in welcher w, R und Y die oben angegebenen Bedeutungen haben, analog bekannten Verfahrensweisen der Umsetzung von Isocyanatverbindungen mit Aminoverbindungen (s. bspw. Houben-Weyl, "Methoden der Organischen Chemie", Band 8, 4. Aufl. (1952), S. 156-162 und Band E 3 (1983), S. 338, 339 und 352-359) umsetzt oder daß man eine Verbindung der allgemeinen Formel (57)

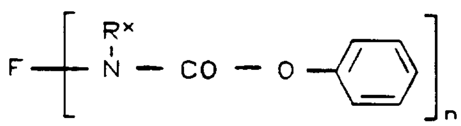

(57)

in welcher F, $R^x$ und n die obengenannten Bedeutungen haben, mit einer Aminoverbindung der allgemeinen Formel (58)

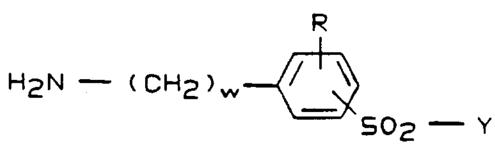

(58)

in welcher w, R und Y die obengenannten Bedeutungen haben, umsetzt.

Erfindungsgemäße Phthalocyaninfarbstoffe können erfindungsgemäß beispielsweise so hergestellt werden, daß man von einem Phthalocyaninsulfochlorid oder einem sulfogruppenhaltigen Phthalocyaninsulfochlorid ausgeht, dieses mit einer Diaminoverbindung und gegebenenfalls einem weiteren Amin, beispielsweise einem Amin der allgemeinen Formel $HNR^2R^3$ mit $R^2$ und $R^3$ der obengenannten Bedeutungen, umsetzt und das erhaltene Umsetzungsprodukt mit der Aminogruppe $-N(R^x)H$ mit einem Isocyanat der allgemeinen Formel (56) umsetzt. Die Verfahrensweisen der Umsetzung von Phthalocyaninsulfochloriden mit Aminen sind zahlreich in der Literatur bekannt, wie beispielsweise in der US-Patentschrift 4 745 178 und der darin diesbezüglich zusätzlich aufgeführten Literatur.

Die Ausgangsverbindungen der allgemeinen Formel (57) können nach bekannten Verfahrensweisen, (s. bspw. Houben-Weyl, loc. cit., Band 8, Seiten 119-123, und Band E4, Seiten 738-746 und 749-751) durch Umsetzung eines aminogruppenhaltigen Ausgangsfarbstoffes der allgemeinen Formel (5) mit F, $R^x$ und n der oben angegebenen Bedeutung mit Chlorameisensäurephenylester hergestellt werden.

In dem erstgenannten erfindungsgemäßen Syntheseverfahren der Umsetzung von Vorprodukten, von denen mindestens eines eine Gruppe der allgemeinen Formel (2) enthält, sind solche Vorprodukte bspw. die Diazokomponenten entsprechend der allgemeinen Formel $Z-D_1-NH_2$ und $Z-D_2-NH_2$ sowie $Z-D-NH_2$ mit D, $D_1$, $D_2$ und Z den obengenannten, insbesondere bevorzugten Bedeutungen und des weiteren die Kupplungskomponenten der allgemeinen Formel H-K-Z mit K und Z den obengenannten, insbesondere bevorzugten Bedeutungen. Diese Ausgangs-Diazo- und -Kupplungskomponenten können analog bekannten Verfahrensweisen der Umsetzung von Isocyanatverbindungen mit Aminoverbindungen durch Umsetzung der entsprechenden Ausgangsaminoverbindungen der allgemeinen Formeln $H_2N-D-N(R^x)H$ bzw. $H_2N-D_1-N(R^x)H$ bzw. $H_2N-D_2-N(R^x)H$ bzw. $H_2N-K-N(R^x)H$ mit einer Isocyanatverbindung der allgemeinen Formel (56)

synthetisiert werden. Die Umsetzung erfolgt analog bekannten Verfahrensweisen der Umsetzung von Aminoverbindungen mit Isocyanaten (s. Houben-Weyl, loc. cit.). Insbesondere führt man die Umsetzung bei einer Temperatur zwischen 0 und 70°C, bevorzugt zwischen 15 und 30°C, und bei einem pH-Wert zwischen 1 und 7, bevorzugt bei einem pH-Wert zwischen 4 und 7, durch. Bei der Umsetzung geht man in der Regel so vor, daß man die Isocyanatverbindung der allgemeinen Formel (56) gelöst in einem für das Isocyanat inerten organischen Lösungsmittel, wie beispielsweise Chlorbenzol, und die aminogruppenhaltigen Ausgangs-Diazokomponenten und -Kupplungskomponenten in wäßriger Lösung unter den genannten Reaktionsbedingungen miteinander zusammenbringt, wie beispielsweise durch kräftiges Verrühren dieser beiden Phasen. Nach Beendigung der Reaktion wird der Reaktionsansatz in der einem Fachmann geläufigen Weise aufgearbeitet. In der Regel ist die gebildete Harnstoffverbindung in der wäßrigen Phase gelöst, so daß die organische Phase abgetrennt und verworfen werden kann.

Die Umsetzung der aminogruppenhaltigen Ausgangsverbindungen der allgemeinen Formel (55) mit einer Isocyanatverbindung der allgemeinen Formel (56) erfolgt in ähnlicher Weise, wie oben für die Ausgangsprodukte beschrieben. Insbesondere führt man die Umsetzung bei einer Temperatur zwischen 0 und 50°C, bevorzugt zwischen 10 und 30°C, und bei einem pH-Wert zwischen 2 und 7, bevorzugt zwischen 4 und 6, um, wobei man auch hier die Isocyanatverbindung gelöst in einem für das Isocyanat inerten organischen Lösungsmittel und die Ausgangsverbindung (55) in wäßriger Lösung einsetzt.

Die erfindungsgemäße Umsetzung der Verbindungen der allgemeinen Formel (57) mit den Verbindungen der allgemeinen Formel (58) erfolgt bei einer Temperatur zwischen 0 und 60°C, bevorzugt zwischen 30 und 50°C, und bei einem pH-Wert zwischen 4 und 7 in wäßriger Lösung.

Die Isocyanat-Ausgangsverbindung der allgemeinen Formel (56) erhält man analog bekannten Verfahrensweisen, beispielsweise durch Umsetzung von Aminoverbindungen der allgemeinen Formel (58) bzw. deren Salzen, wie Hydrochloride, mit Phosgen. Solche Ausgangsverbindungen der allgemeinen Formel (58) sind beispielsweise β-(4-β'-Chlorethylsulfonylphenyl)-ethylamin, β-(3-β'-Chlorethylsulfonyl-phenyl)-ethylamino, 3- oder 4-(β-Chlorethylsulfonyl)-benzylamin, 4-(β-Chlorethylsulfonyl)-2-methoxy-benzylamin, 3-(β-Chlorethylsulfonyl)-6-methoxy-benzylamin, 4-(β-Chlorethylsulfonyl)-2-chlor-benzylamin, 3-(β-Chlorethylsulfonyl)-6-chlor-benzylamin, β-(4-β'-Chlorethylsulfonyl-2-methoxy-phenyl)-ethylamin, β-(3-β'-Chlorethylsulfonyl-6-methoxy-phenyl)-ethylamin, γ-(4-β'-Chlorethylsulfonyl-2-methoxy-phenyl)-propylamin und δ-(4-β'-Chlorethylsulfonyl-2-methoxy-phenyl)-butylamin sowie deren Salze, wie Hydrochloride.

Die Ausgangsverbindungen der allgemeinen Formel (58) und deren Synthese sind in der Literatur bekannt, beispielsweise aus der Offenlegungsschrift Nr. 36 28 090 und der Europäischen Patentanmeldungs-Veröffentlichung Nr. 0 133 270A.

Bei der erfindungsgemäßen Synthese von erfindungsgemäßen Azofarbstoffen, bei denen man von Diazo- und Kupplungskomponenten ausgeht, von denen eine oder beide eine Gruppe der allgemeinen Formel (2) enthalten, erfolgt die Umsetzung in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt im wäßrigen Medium.

Bei der erfindungsgemäßen Synthese der erfindungsgemäßen Schwermetallkomplex-Azofarbstoffe kann man beispielsweise auch von solchen metallfreien Azofarbstoffen ausgehen, die der allgemeinen Formel (1) entsprechen, in welchen jedoch die Diazo- und Kupplungskomponenten in ortho-Stellung zur Azogruppe jeweils eine zur Komplexbildung befähigte Hydroxygruppe enthalten. Diese o,o'-Dihydroxy-Azoausgangsverbindung entsprechend der allgemeinen Formel (1) wird sodann in üblicher und bekannter Verfahrensweise mit einem ein Schwermetallion abgebenden Agenz, wie beispielsweise Kupferchlorid, Kupfersulfat, Chromchlorid, Chromsulfat und Kobaltchlorid, zum erfindungsgemäßen Schwermetallkomplex-Azofarbstoff umgesetzt.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur zwischen 30 und 50°C während 10 bis 20 Minuten, hergestellt werden. Die Synthese von beispielsweise β-(Dialkylamino)-ethylsulfonyl- und β-Thiosulfatoethylsulfonyl-Derivaten erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe $-SO_2-Y$ in eine andere sind dem Fachmann auf diesem faserreaktiven Gebiet geläufig und zahlreich in der Literatur beschrieben.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.
Gegenstand der vorliegenden Erfindung ist deshalb auch die Verwendung der erfindungsgemäßen Verbindungen der allgemeinen Formel (1) zum Färben (einschließlich des Bedruckens) dieser Materialien bzw. Verfahren zum Färben (und Bedruckens) solcher Materialien in an und für sich üblicher Verfahrensweise, bei welchen eine Verbindung der allgemeinen Formel (1) als Farbmittel eingesetzt wird, indem man die Verbindung der allgemeinen Formel (1) im wäßrigen Medium auf das Material appliziert und es mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel A**

Im nachfolgenden wird die Synthese von $\beta$-[4-($\beta$'-Chlorethylsulfonyl)-phenyl]-ethyl-isocyanat beschrieben:
133 Teile $\beta$-[4-($\beta$'-Hydroxyethylsulfonyl)-phenyl]-ethylamin-Hydrochlorid (bekannt aus der Deutschen Offenlegungsschrift 36 28 090) werden zusammen mit 300 Volumenteilen Thionylchlorid in Gegenwart von 1 Teil Dimethylformamid vier Stunden unter Rückfluß gekocht. Danach wird überschüssiges Thionylchlorid unter reduziertem Druck abdestilliert und der Rückstand in 1000 Teilen Chlorbenzol fein dispergiert. Innerhalb von 3 bis 4 Stunden leitet man bei 90 bis 100 ° C 125 Teile Phosgen ein. Man erhält eine klare Lösung, die mit Stickstoff phosgenfrei geblasen und anschließend mit Aktivkohle entfärbt wird. Der Gehalt der Lösung an der Isocyanatverbindung wird durch Titration mit Di-isobutyl-amin bestimmt.
Die so erhaltene Lösung enthält etwa 116 Teile der Isocyanatverbindung; sie kann direkt zur Synthese der erfindungsgemäßen Farbstoffe eingesetzt werden.

Zur Sicherstellung der Konstitution obengenannten Isocyanats verrührt man eine kleine Probe mit der äquivalenten Menge an Anilin. Der kristalline Niederschlag wird aus Ethanol umkristallisiert. Die Konstitution dieser Verbindung, nämlich N-Phenyl-N'-β-[4-(β'-chlorethylsulfonyl)-phenyl]-ethyl-harnstoff, ist durch NMR-Spektroskopie und Elementaranalyse bestätigt.

**Beispiel B**

Eine neutrale Lösung von 19 Teilen 1,3-Diaminobenzol-4-sulfonsäure in 100 Teilen Wasser wird bei 15 bis 25 ° C unter kräftigem Rühren mit dem dritten Teil der Isocyanatlösung des Beispiels A versetzt.
Nach Beendigung der Umsetzung, die chromatographisch verfolgt werden kann, wird die Chlorbenzolphase abgetrennt und verworfen.

Die so erhaltene wäßrige Lösung des N-(3-Amino-4-sulfophenyl)-N'-β-[4'-(β'-chlorethylsulfonyl)-phenyl]-ethylharnstoffs kann direkt zur Synthese der erfindungsgemäßen Farbstoffe eingesetzt werden.

**Beispiel C**

32 Teile 1-Amino-8-naphthol-3,6-disulfonsäure werden in 150 Teilen Wasser durch Zugabe von 50 Teilen einer wäßrigen 2n-Lithiumhydroxidlösung gelöst. Zu dieser Lösung gibt man bei 0 ° C unter kräftigem Rühren den dritten Teil der in Beispiel A hergestellten Lösung der Isocyanatverbindung. Man führt die Reaktion zunächst noch zwei Stunden bei 0 ° C weiter und rührt sodann ohne Kühlung weitere 6 Stunden nach. Die Chlorbenzolphase wird abgetrennt und verworfen. Man erhält die wäßrige Lösung des Lithiumsalzes der Verbindung 1-N'-[β-(4'-β'-Chlorethylsulfonyl-phenyl)-ethyl]-ureido-8-naphthol-3,6-disulfonsäure, die direkt zur Herstellung eines erfindungsgemäßen Farbstoffes eingesetzt werden kann.

**Beispiel D**

Man verfährt gemäß der Verfahrensweise des Beispiels C, setzt jedoch anstelle der dort angegebenen Aminonaphtholdisulfonsäure die äquivalente Menge an 2-Amino-8-naphthol-6-sulfonsäure ein und führt die Umsetzung bei einem pH-Wert von 6,5 und einer Temperatur zwischen 15 und 25 ° C durch. Die erhaltene wäßrige Lösung des Alkalimetallsalzes der 2-N'-[β-(4'-β'-Chlorethylsulfonyl-phenyl)-ethyl]-ureido-8-naphthol-6-sulfonsäure kann direkt zur Synthese eines erfindungsgemäßen Farbstoffes eingesetzt werden.

**Beispiel 1**

Zu der salzsauren, wäßrigen Lösung des Diazoniumsalzes aus 30 Teilen 2-Amino-naphthalin-1,5-disulfonsäure gibt man die Lösung der Kupplungskomponente von Beispiel C, stellt mit einer wäßrigen 10 %igen Natriumcarbonatslösung den pH-Wert auf 4,5 und führt die Kupplungsreaktion unter 2-stündigem Rühren bei 20 ° C zu Ende. Der erhaltene erfindungsgemäße Farbstoff wird durch Aussalzen mit Natriumchlorid isoliert, abgetrennt und getrocknet.

Man erhält das Alkalimetallsalz (Natriumsalz) der Verbindung der Formel

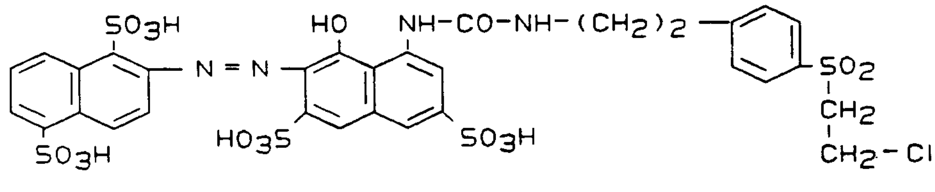

($\lambda_{max}$ = 537 nm)
die sehr gute faserreaktive Farbstoffeigenschaften besitzt und nach den in der Technik für faserreaktive Farbstoffe üblichen Applikations- und Fixierverfahren auf den in der Beschreibung genannten Materialien, insbesondere Cellulosefasermaterialien, farbstarke, brillante, blaustichig rote Färbungen mit guten Echtheitseigenschaften, von denen insbesondere die gute Chlorbadewasserechtheit hervorgehoben werden kann, liefert.

**Beispiel 2**

Man diazotiert 45 Teile 1-Sulfo-6-($\beta$-sulfatoethylsulfonyl)-2-amino-naphthalin in üblicher Weise und versetzt die erhaltene Diazoniumsalzlösung mit der wäßrigen Lösung der Kupplungskomponente von Beispiel C. Man führt die Kupplungsreaktion bei einem pH-Wert von 4,5 und bei etwa 20 °C durch und isoliert den erfindungsgemäßen Farbstoff durch Aussalzen mit Natriumchlorid. Er besitzt, in Form der freien Säure geschrieben, die Formel

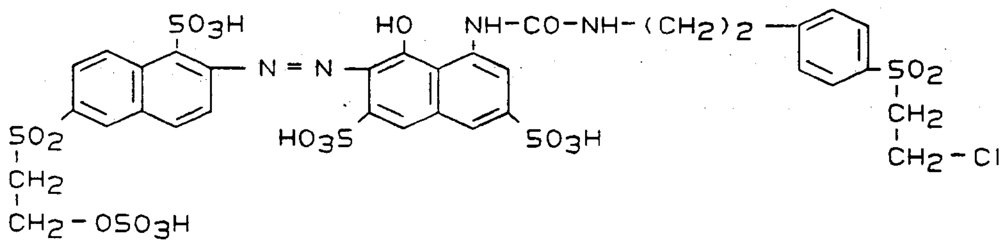

($\lambda_{max}$ = 537 nm)
zeigt sehr gute faserreaktive Farbstoffeigenschaften und färbt nach den in der Technik üblichen Färbeverfahren für faserreaktive Farbstoffe die in der Beschreibung genannten Materialien, insbesondere Cellulosefasermaterialien, in farbstarken, brillanten, blaustichig roten Tönen. Der erfindungsgemäße Farbstoff ist insbesondere vorteilhaft im Ausziehverfahren einsetzbar und liefert innerhalb des Temperaturbereiches zwischen 40 und 80 °C Färbungen mit praktisch gleicher Farbtiefe und Nuance.

**Beispiel 3**

Eine wäßrige Lösung des erfindungsgemäßen Farbstoffes von Beispiel 2 wird mit der äquimolaren Menge Natriumthiosulfat versetzt; man führt die Umsetzung bei 40 °C und einem pH-Wert von 4 bis 5 durch. Die Beendigung der Reaktion kann durch Dünnschichtchromatographie verfolgt werden. Der erfindungsgemäße Farbstoff, der, in Form der freien Säure, die Formel

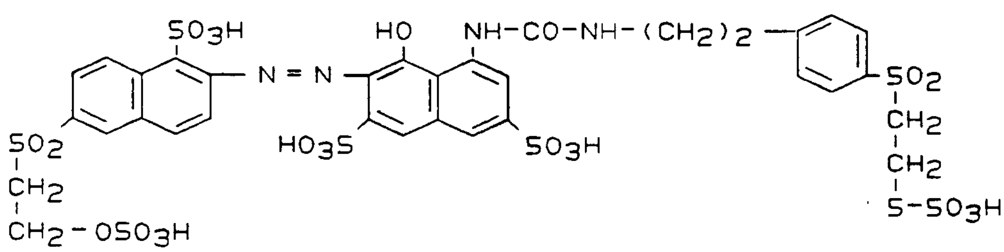

($\lambda_{max}$ = 537 nm)
besitzt, wird durch Natriumchlorid ausgesalzen und isoliert. Er zeigt die gleichen guten faserreaktiven Farbstoffeigenschaften wie der Farbstoff des Beispiels 2.

**Beispiel 4**

Man diazotiert 28 Teile 3-($\beta$-Sulfatoethylsulfonyl)-anilin in wäßriger, salzsaurer Lösung und gibt zu der erhaltenen Suspension des Diazoniumsalzes die wäßrige Lösung der Kupplungskomponente des Beispiels D und führt die Kupplungsreaktion bei einem pH-Wert von 4 bis 5 und bei etwa 20 °C durch. Die

Kupplungsreaktion ist nach etwa 2 Stunden beendet. Man isoliert den erfindungsgemäßen Farbstoff, der, in Form der freien Säure geschrieben, die Formel

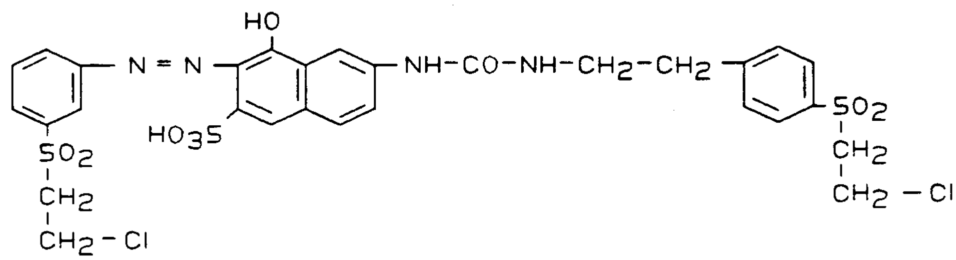

($\lambda_{max}$ = 493 nm)
besitzt, aus der Syntheselösung durch Aussalzen mit Natriumchlorid. Er zeigt sehr gute faserreaktive Farbstoffeigenschaften und liefert nach den in der Technik üblichen Anwendungsverfahren farbstarke rotbraune Färbungen und Drucke mit guten Echtheiten.

**Beispiel 5**

Zur Herstellung eines erfindungsgemäßen Farbstoffes verfährt man gemäß der Verfahrensweise des Beispiels 4, setzt jedoch anstelle von 3-($\beta$-Sulfatoethylsulfonyl)-anilin die gleiche Menge 4-($\beta$-Sulfatoethylsulfonyl)-anilin als Diazokomponente ein. Der Farbstoff zeigt in wäßriger Lösung ein Absorptionsmaximum bei 498 nm, besitzt sehr gute faserreaktive Farbstoffeigenschaften und liefert insbesondere auf Cellulosefasermaterialien farbstarke braune Färbungen und Drucke mit guten Echtheitseigenschaften.

**Beispiel 6**

Man verrührt 50 Teile 7-(4'-Methoxy-2'-sulfo-phenyl)-azo-8-hydroxy-6-sulfo-3-amino-naphthalin in 300 Teilen Wasser und gibt unter kräftigem Rühren bei einem pH-Wert von 5,5 bis 6,0 und bei einer Temperatur von 15 bis 20 °C ein Drittel der wäßrigen Lösung der Isocyanatverbindung des Beispiels A hinzu. Man rührt den Ansatz noch etwa 6 Stunden nach, trennt die Chlorbenzolphase ab und isoliert aus der wäßrigen Faser den erfindungsgemäßen Farbstoff durch Aussalzen mit Natriumchlorid als dessen Alkalimetallsalz (Natriumsalz). Er besitzt, in Form der freien Säure geschrieben, die Formel

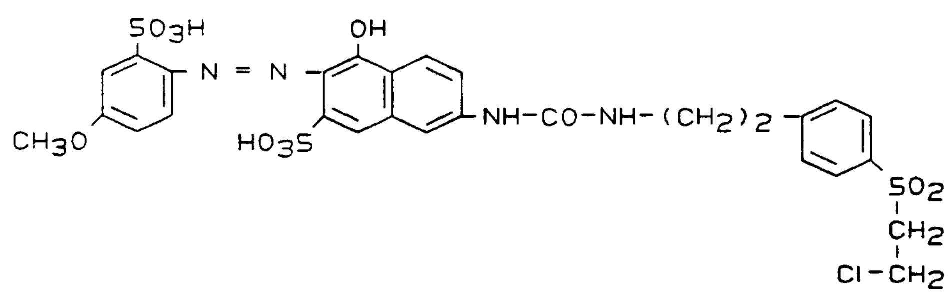

($\lambda_{max}$ = 504 nm)
zeigt sehr gute faserreaktive Farbstoffeigenschaften und färbt nach den in der Technik üblichen Applikations- und Fixierverfahren für faserreaktive Farbstoffe insbesondere Cellulosefasermaterialien in farbstarken, scharlachfarbenen Tönen mit guten Echtheitseigenschaften. Er zeichnet sich desweiteren durch eine hohe Fixierausbeute beim Färben im Ausziehverfahren bei 80 °C aus.

**Beispiele 7 bis 42**

In den nachfolgenden Tabellenbeispielen sind weitere erfindungsgemäße Azofarbstoffe entsprechend der allgemeinen Formel (A)

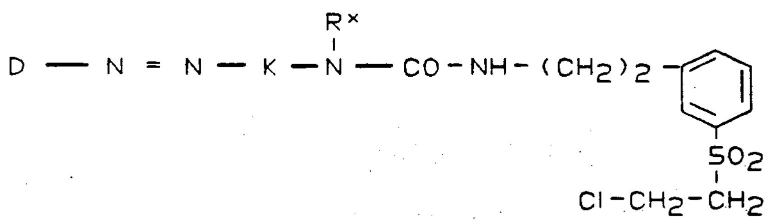

(A)

mit Hilfe ihrer Komponenten beschrieben. Sie lassen sich in erfindungsgemäßer Weise, beispielsweies analog einem der obigen Ausführungsbeispiele, unter Einsatz der aus dem jeweiligen Tabellenbeispiel in Verbindung mit der allgemeinen Formel (A) ersichtlichen Komponenten herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Farbtönen in hoher Farbstärke und mit guten Echtheiten.

| Bsp. | Rest -D | Rest -K-N($R^x$)- | Farbton |
|---|---|---|---|
| 7 | 4,6,8-Trisulfo-naphth-2-yl | 3-Methyl-phen-ylen(4,1)-1-amino | rotstichig gelb |
| 8 | 6-(β-Sulfato-ethylsulfonyl)-1-sulfo-naphth-2-yl | 3-Acetylamino-phen-ylen(4,1)-1-amino | rotstichig gelb |
| 9 | 4-(β-Sulfato-ethylsulfonyl)-phenyl | 3-Amino-4-sulfo-phen-ylen(6,1)-1-amino | goldgelb |
| 10 | 4-Sulfo-phenyl | 3-Carboxy-pyrazol-5-on-4-yl-1-(2'-sulfo-phenyl-4'-amino) | gelb |
| 11 | 4-(β-Sulfato-ethylsulfonyl)-phenyl | dito | gelb |
| 12 | 2-Sulfo-phenyl | dito | gelb |
| 13 | 2,5-Disulfo-phenyl | 4-Hydroxy-2-sulfo-naphth-ylen(3,7)-7-amino | orange |
| 14 | 1,5-Disulfo-naphth-2-yl | dito | orange |

| Bsp. | Rest -D | Rest -K-N($R^x$)- | Farbton |
|---|---|---|---|
| 15 | 1,5-Disulfo-naphth-2-yl | 4-Hydroxy-2-sulfo-naphth-ylen(3,7)-7-methylamino | orange |
| 16 | 6-(ß-Sulfato-ethylsulfonyl)-1-sulfo-naphth-2-yl | 4-Hydroxy-2-sulfo-naphth-ylen(3,7)-7-amino | orange |
| 17 | 8-(ß-Sulfato-ethylsulfonyl)-1-sulfo-naphth-2-yl | dito | orange (491) |
| 18 | 2-Methoxy-3-(ß-sulfatoethyl-sulfonyl)-phenyl | dito | scharlach |
| 19 | 6-Methoxy-3-(ß-sulfatoethyl-sulfonyl)-phenyl | dito | orange (490) |
| 20 | 4-(ß-Sulfatoethyl-sulfonyl)-phenyl | 4-Hydroxy-2,8-disulfo-naphth-ylen(3,5)-5-amino | gelbstichig rot |
| 21 | 4-Methoxy-2-sulfo-phenyl | 4-Hydroxy-2-sulfo-naphth-ylen(3,6)-6-amino | gelbstichig rot |
| 22 | 2-Sulfo-phenyl | 4-Hydroxy-2,7-disulfo-naphth-ylen(3,5)-5-amino | rot |
| 23 | dito | 4-Hydroxy-2,8-disulfo-naphth-ylen(3,5)-5-amino | gelbstichig rot |
| 24 | 2,5-Dicarboxy-phenyl | dito | rot |
| 25 | 4-(ß-Sulfatoethyl-sulfonyl)-phenyl | dito | rot |
| 26 | dito | 4-Hydroxy-2,7-disulfo-naphth-ylen(3,5)-5-amino | rot |

| Bsp. | Rest -D | Rest -K-N($R^x$)- | Farbton |
|---|---|---|---|
| 27 | 3-(ß-Sulfatoethyl-sulfonyl)-phenyl | dito | rot (368) |
| 28 | 2-Sulfo-4-(ß-sulfatoethyl-sulfonyl)-phenyl | dito | gelbstichig rot (397) |
| 29 | 6-(ß-Sulfatoethyl-sulfonyl)-1-sulfo-naphth-2-yl | 4-Hydroxy-2,8-disulfo-naphth-ylen(3,5)-5-amino | rot |
| 30 | 4,8-Disulfo-naphth-2-yl | 4-Hydroxy-2,7-disulfo-naphth-ylen(3,5)-5-amino | blaustichig rot (424) |
| 31 | 3-Sulfo-4-(phenyl-amino)-phenyl | 4-Hydroxy-2,7-disulfo-naphth-ylen(3,5)-5-amino | blau |
| 32 | 3-Sulfo-4-(2'-methoxy-phenyl-amino)-phenyl | dito | blau |
| 33 | 4-(3',6',8'-trisulfo-naphth-2'-yl-azo)-2-methoxy-5-methyl-phenyl | dito | blau |
| 34 | 4-(4'-Methoxy-2'-sulfo-phenyl-azo)-6-sulfo-naphth-1-yl | 6-Sulfo-naphth-ylen(4,1)-1-amino | braun |
| 35 | 4-(4'-Methoxy-2'-sulfo-phenyl-azo)-7-sulfo-naphth-1-yl | 7-Sulfo-naphth-ylen(4,1)-1-amino | braun |

| Bsp. | Rest -D | Rest -K-N($R^x$)- | Farbton |
|---|---|---|---|
| 36 | 4-(4',6',8'-Trisulfo-naphth-2'-ylazo)-6-sulfo-naphth-1-yl | 3-Methyl-phen-ylen(4,1)-1-amino | braun |
| 37 | 4-(2',5',7'-Trisulfo-naphth-1'-ylazo)-2,5-dimethyl-phenyl | 6-Sulfo-naphth-ylen(4,1)-1-amino | braun |
| 38 | 1:1-Kupferkomplex von: 4,8-Disulfo-1-hydroxy-naphth-2-yl | 4-Hydroxy-2,7-disulfo-naphth-ylen(3,5)-5-amino | blau |
| 39 | 1:2-Chromkomplex von: 2-Carboxy-phenyl | dito | schwarz |
| 40 | 1:1-Kupferkomplex von: 2-Hydroxy-5-(ß-sulfatoethyl-sulfonyl)-phenyl | dito | rotstichig blau (387) |
| 41 | 3,6,8-Trisulfo-naphth-2-yl | 3-Ureido-phen-ylen(4,1)-1-amino | rotstichig gelb |
| 42 | 4,8-Disulfo-naphth-2-yl | 3-Acetylamino-phen-ylen(4,1)-1-amino | rotstichig gelb |

**Beispiel 43**

Man geht von der wäßrigen Lösung der Diazokomponente von Beispiel B aus, versetzt sie mit 200 Teilen Eis und diazotiert in üblicher Weise nach Zugabe von konzentrierter wäßriger Salzsäure durch Zugabe einer wäßrigen 5n-Natriumnitritlösung. Man rührt noch 2 Stunden nach, zerstört überschüssige salpetrige Säure mittels Amidosulfonsäure, gibt sodann eine Lösung von 60 Teilen 2-(4'-β-Sulfatoethylsulfonyl-phenyl)-azo-3,5-disulfo-8-hydroxy-1-amino-naphthalin in 200 Teilen Wasser hinzu und führt die Kupplungsreaktion bei einem pH-Wert von 4,5 bis 5,0 und 20 °C während etwa 3 bis 5 Stunden durch.

Der gebildete erfindungsgemäße Azofarbstoff wird in Form seines Alkalimetallsalzes (Natriumsalzes) durch Eindampfen der Syntheselösung unter reduziertem Druck oder durch Sprühtrocknung isoliert. Er besitzt, in Form der freien Säure geschrieben, die Formel

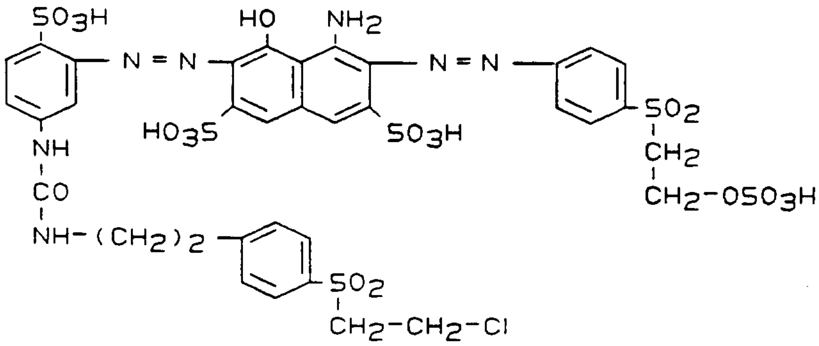

($\lambda_{max}$ = 609 nm)
und zeigt sehr gute faserreaktive Farbstoffeigenschaften. Er färbt unter Anwendung der für faserreaktive Farbstoffe üblichen Applikations- und Fixierverfahren die in der Beschreibung genannten Materialien, insbesondere Cellulosefasermaterialien, in farbstarken, marineblauen Tönen mit guten Echtheitseigenschaften.

**Beispiel 44**

Zur Herstellung eines erfindungsgemäßen Azofarbstoffes verfährt man gemäß der Verfahrensweise des Beispiels 43, setzt jedoch als Kupplungskomponente anstelle der Monoazo-Ausgangsverbindung das 1-(4'-Sulfophenyl)-3-carboxy-5-pyrazolon ein. Man erhält das Alkalimetallsalz (Natriumsalz) der Verbindung der Formel

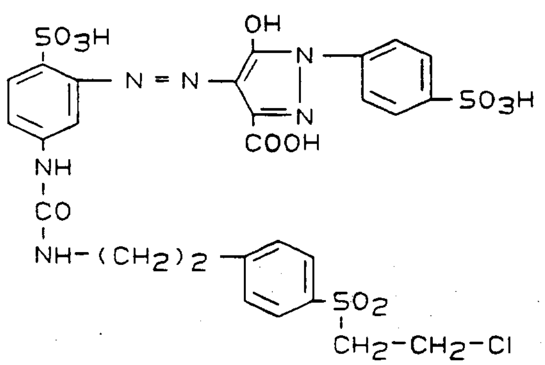

in Form eines elektrolythaltigen (vorwiegend natriumchloridhaltigen) gelben Farbstoffpulvers. Der erfindungsgemäße Azofarbstoff liefert nach den üblichen Färbe- und Druckverfahren beispielsweise auf Baumwolle farbstarke gelbe Färbungen und Drucke mit guten Echtheitseigenschaften.

**Beispiele 45 bis 64**

In den nachfolgenden Tabellenbeispielen sind weitere erfindungsgemäße Azofarbstoffe entsprechend der allgemeinen Formel (B)

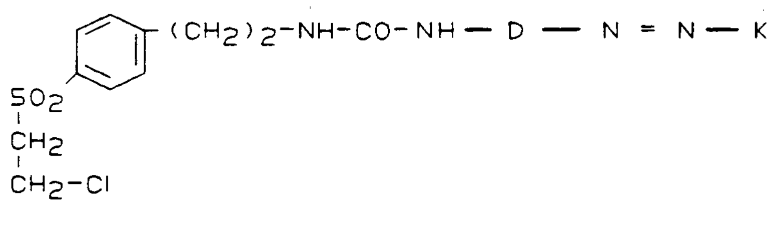

(B)

mit Hilfe ihrer Komponenten beschrieben. Sie lassen sich in erfindungsgemäßer Weise, beispielsweies analog einem der obigen Ausführungsbeispiele, unter Einsatz der aus dem jeweiligen Tabellenbeispiel in Verbindung mit der allgemeinen Formel (B) ersichtlichen Komponenten herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Farbtönen in hoher Farbstärke und mit guten Echtheiten.

| Bsp. | Rest -D- | Rest -K | Farbton |
|---|---|---|---|
| 45 | 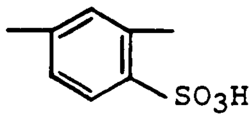 | 1-(ß-Sulfato-ethyl)-2-hydroxy-4-methyl-pyrid-6-on-3-yl | grünstichig gelb |

| Bsp. | Rest -D- | Rest -K | Farbton |
|---|---|---|---|
| 46 | 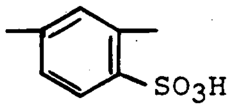 | 1-Ethyl-2-hydroxy-4-methyl-5-carbamoyl-pyrid-6-on-3-yl | grünstichig gelb |
| 47 | 4,6-Disulfo-1,3-phenylen | dito | dito |
| 48 | 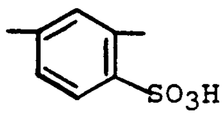 | 5-Amino-4-hydroxy-6-(4'-sulfo-phenyl-azo)-2,7-disulfo-naphth-3-yl | marineblau |
| 49 | 4,6-Disulfo-1,3-phenylen | 1,4-Dimethyl-2-hydroxy-5-carbamoyl-pyrid-6-on-3-yl | grünstichig gelb |
| 50 | 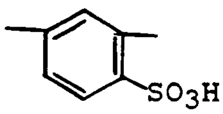 | 1,4-Dimethyl-2-hydroxy-5-(sulfomethyl)-pyrid-6-on-3-yl | dito |
| 51 | dito | 1-(4'-Sulfophenyl)-3-methyl-pyrazol-5-on-4-yl | gelb |
| 52 | dito | 1-(4'-Sulfo-2',5'-dichlor-phenyl)-3-methyl-pyrazol-5-on-4-yl | gelb |
| 53 | dito | 1-(4'-Sulfophenyl)-3-carboxy-pyrazol-5-on-4-yl | gelb |
| 54 | dito | 5-Amino-4-hydroxy-6-(4'-sulfo-phenyl-azo)-2,7-disulfo-naphth-3-yl | marineblau |

| Bsp. | Rest -D- | Rest -K | Farbton |
|---|---|---|---|
| 55 | 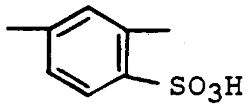 | 1-[4'-(β-Sulfato-ethylsulfonyl)-phenyl]-3-methyl-pyrazol-5-on-4-yl | gelb |
| 56 | 4,6-Disulfo-1,3-phenylen | dito | gelb |
| 57 | 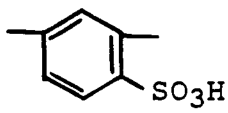 | 4-Hydroxy-5-acetylamino-2,7-disulfo-naphth-3-yl | gelbstichig rot |
| 58 | dito | 4-Hydroxy-5-benzoylamino-2,7-disulfo-naphth-3-yl | gelbstichig rot |
| 59 | dito | 4-Hydroxy-5-benzoylamino-2,8-disulfo-naphth-3-yl | dito |
| 60 | dito | 5-[4'-Chlor-6'-(β-sulfoethylamino)-1',3',5'-triazin-2'-yl]-amino-4-hydroxy-2,7-disulfo-naphth-3-yl | dito |
| 61 | dito | 5-[4'-Chlor-6'-amino-1',3',5'-triazin-2'-yl]-amino-4-hydroxy-2,7-disulfo-naphth-3-yl | dito |
| 62 | dito | 5-Amino-4-hydroxy-6-[4'-(β-sulfato-ethylsulfonyl)-phenylazo]-2,7-disulfo-naphth-3-yl | marineblau |

| Bsp. | Rest -D- | Rest -K | Farbton |
|---|---|---|---|
| 63 | 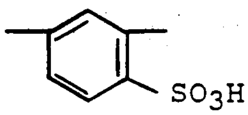 | 5-Amino-4-hydroxy-6-(4'-sulfo-phenyl-azo)-2,7-disulfo-naphth-3-yl | marineblau |
| 64 | dito | 1-(β-Sulfoethyl-2-hydroxy-4-methyl-pyrid-6-on-3-yl | grünstichig gelb |
| 65 | 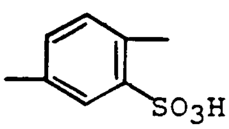 | 1-(4'-Sulfophenyl)-3-methyl-5-pyrazol-5-on-4-yl | gelb |

**Beispiel 66**

49 Teile 1-Amino-2-sulfo-4-(3'-amino-4'-sulfo-phenyl)-amino-9,10-anthrachinon werden in wäßriger Lösung bei 20 bis 25°C und einem pH-Wert von 5 bis 6 mit einem Drittel der wäßrigen Lösung der Isocyanatverbindung von Beispiel A unter mehrstündigem Rühren bis zur Beendigung der Reaktion, die chromatographisch verfolgbar ist, umgesetzt.

Nach üblicher Klärung des Syntheselösung erhält man den erfindungsgemäßen Farbstoff der Formel (in Form der freien Säure geschrieben)

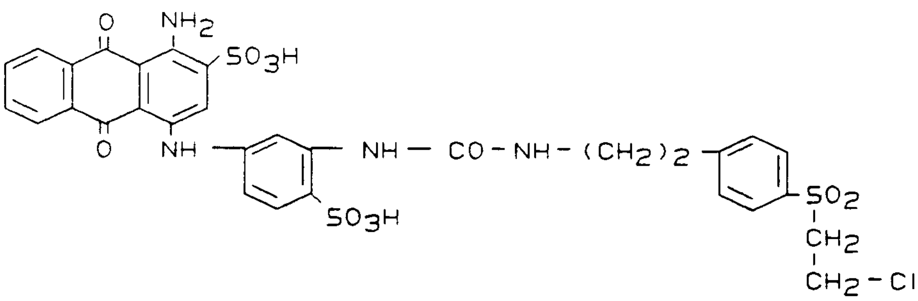

($\lambda_{max}$ = 579 nm)

als Alkalimetallsalz (Natriumsalz) durch Eindampfen des Filtrats. Er färbt die in der Beschreibung genannten Materialien, wie insbesondere Cellulosefasermaterialien, beispielsweise Baumwolle, nach den für faserreaktive Farbstoffe üblichen Applikations und Fixierverfahren in farbstarken, brillanten blauen Tönen.

**Beispiel 67**

Zur Herstellung eines erfindungsgemäßen Anthrachinonfarbstoffes verfährt man gemäß der Verfahrensweise des Beispiels 66, setzt jedoch als Ausgangs-Anthrachinonverbindung 49 Teile 1-Amino-2-sulfo-4-(3'-amino-2',4',6'-trimethyl-5'-sulfo-phenyl)-amino-9,10-anthrachinon ein. Der Farbstoff besitzt, in Form der freien Säure geschrieben, die Formel

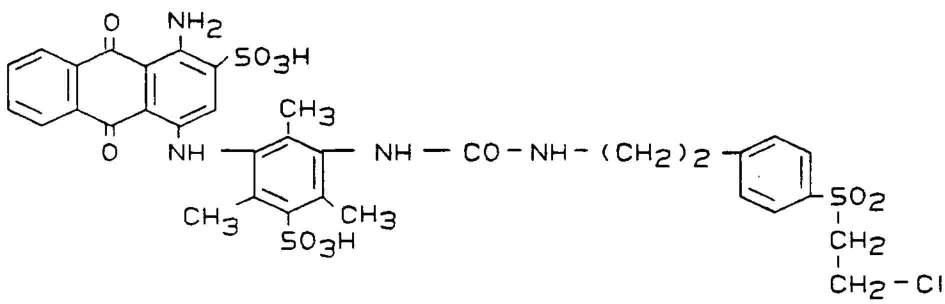

($\lambda_{max}$ = 584 nm).

Er zeigt sehr gute faserreaktive Farbstoffeigenschaften und liefert beispielsweise auf Baumwolle nach den in der Technik üblichen Applikations- und Fixierverfahren Drucke und Färbungen in farbstarken, brillanten blauen Tönen.

**Beispiel 68**

Etwa 3 000 Teile einer wäßrigen Lösung mit einem pH-Wert von 6,5 und einer Temperatur von 10 bis 15 °C von 31,6 Teilen der Triphendioxazinverbindung der Formel

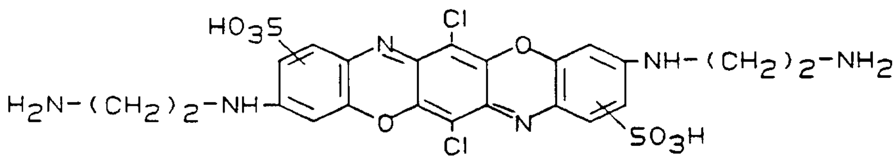

versetzt man unter kräftigem Rühren mit einem Drittel der wäßrigen Lösung der Isocyanatverbindung von Beispiel A und führt die Umsetzung unter den in Beispiel C angegebenen Bedingungen noch 4 Stunden weiter. Man trennt die Chlorbenzolphase ab, klärt die wäßrige Syntheselösung in üblicher Weise und erhält aus dem Filtrat den erfindungsgemäßen Anthrachinonfarbstoff (beispielsweise durch Sprühtrocknung) als Alkalimetallsalz (Natriumsalz). Er besitzt, in Form der freien Säure geschrieben, die Formel

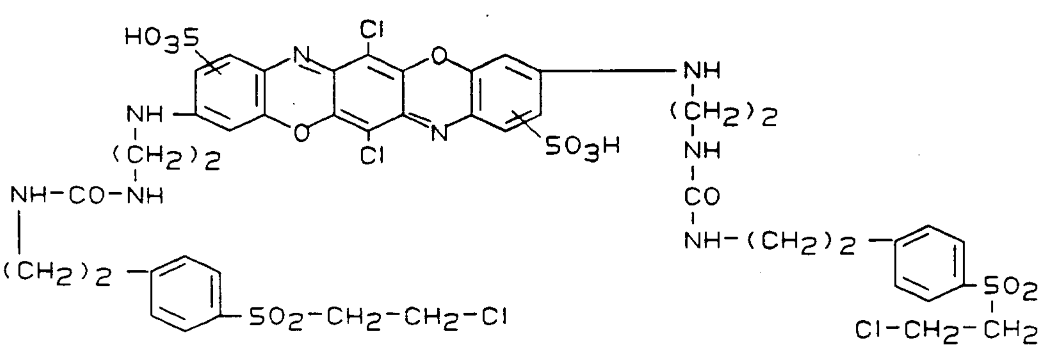

($\lambda_{max}$ = 613 nm)

und liefert nach den in der Technik üblichen Applikations- und Fixierverfahren für faserreaktive Farbstoffe farbstarke, rotstichig blaue Färbungen und Drucke mit guten Echtheitseigenschaften.

**Beispiel 69**

58,5 Teile der Kupferphthalocyaninverbindung der Formel

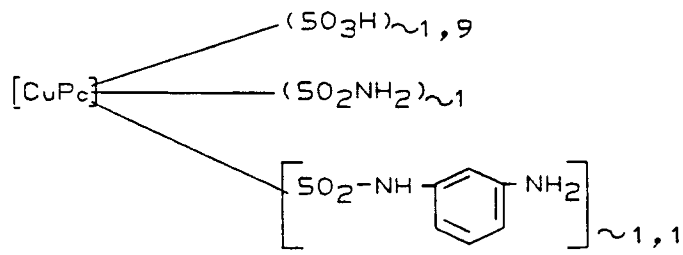

werden in einer Mischung aus 600 Teilen Eis und 600 Teilen Wasser homogen verrührt, und diese wird mit Natronlauge auf einen pH-Wert von 7 eingestellt. Man gibt ein Drittel der wäßrigen Lösung der Isocyanatverbindung von Beispiel A hinzu und hält den pH-Wert bei 6,0 bis 6,5. Nach einstündigem Rühren erhöht man die Temperatur auf 40 °C und führt die Umsetzung bei dieser Temperatur und dem angegebenen pH-Bereich zu Ende (dünnschichtchromatographisch nachprüfbar). Man trennt die Chlorbenzolphase ab und verwirft sie. Die wäßrige Phase wird in üblicher Weise geklärt und das Filtrat unter reduziertem Druck eingedampft.

Man erhält ein blaues, elektrolythaltiges Pulver des Alkalimetallsalzes (Natriumsalzes) der Verbindung der Formel

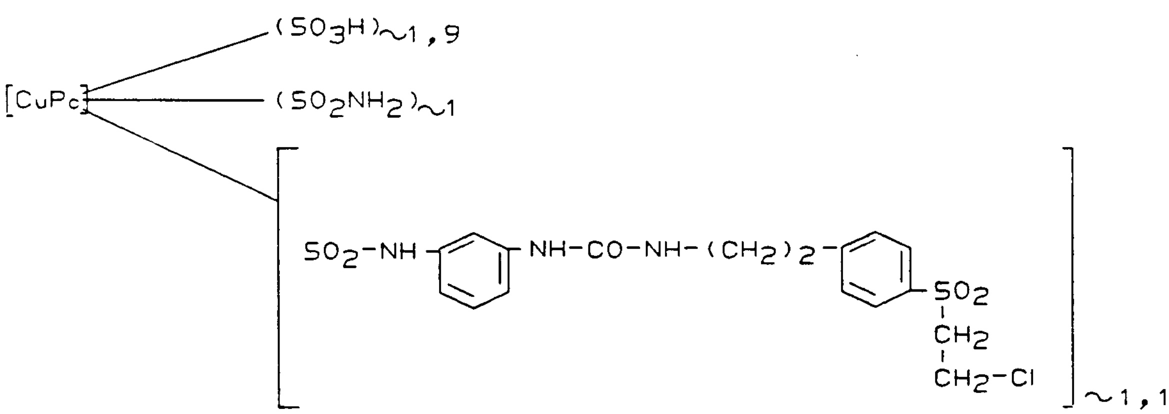

($\lambda_{max}$ = 671 nm).

Der erfindungsgemäße Kupferphthalocyaninfarbstoff besitzt sehr gute faserreaktive Farbstoffeigenschaften und färbt die in der Beschreibung genannten Materialien, wie insbesondere Cellulosefasermaterialien, nach den üblichen Applikations- und Fixierverfahren in farbstarken, echten, türkisblauen Tönen.

**Beispiel 70**

Zur Herstellung einer erfindungsgemäßen Kupferphthalocyanin-Verbindung verfährt man gemäß der Verfahrensweise des Beispiels 69, setzt jedoch anstelle der Kupferphthalocyanin-Ausgangsverbindung durch die Kupferphthalocyanin-Ausgangsverbindung der Formel

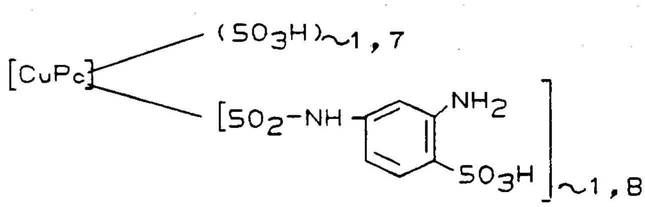

in äquivalenter Menge. Man erhält den erfindungsgemäßen Kupferphthalocyaninfarbstoff der Formel

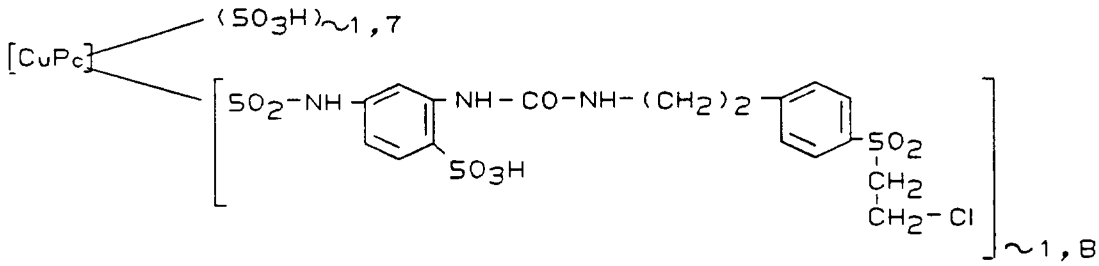

($\lambda_{max}$ = 670 nm).

Der erfindungsgemäße Kupferphthalocyaninfarbstoff färbt die in der Beschreibung genannten Materialien, wie insbesondere Cellulosefasermatieralien, nach den üblichen Anwendungsverfahren in farbstarken, echten, türkisblauen Tönen.

**Beispiel 71**

Eine neutrale Lösung von 80 Teilen der Kupferformazanverbindung der Formel

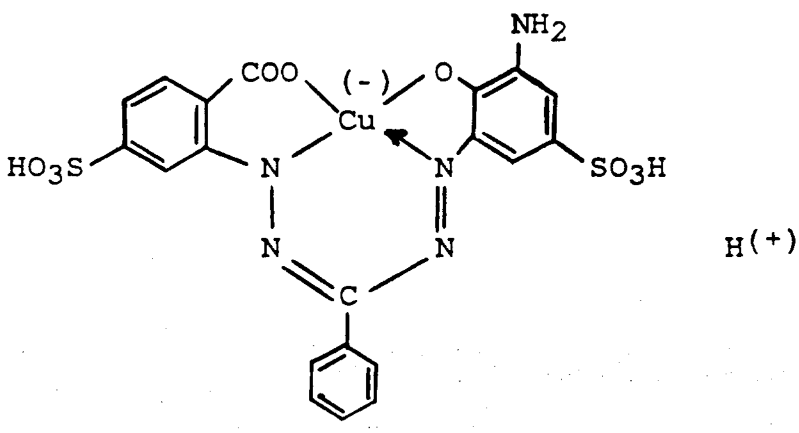

in 400 Teilen Wasser wird bei 15 bis 25 °C unter gutem Rühren mit einem Drittel der wäßrigen Lösung der Isocyanatverbindung des Beispiels A versetzt. Nach Beendigung der Reaktion, die dünnschichtchromatographisch verfolgt werden kann, wird die Chlorbenzolphase abgetrennt und die wäßrige Phase geklärt. Der erfindungsgemäße Kupferformazanfarbstoff wird aus der wäßrigen Syntheselösung durch Aussalzen mit Natriumchlorid isoliert. Man erhält ein blaues, elektrolythaltiges (vorwiegend natriumchloridhaltiges) Pulver des Alkalimetallsalzes (Natriumsalzes) der Verbindung der Formel

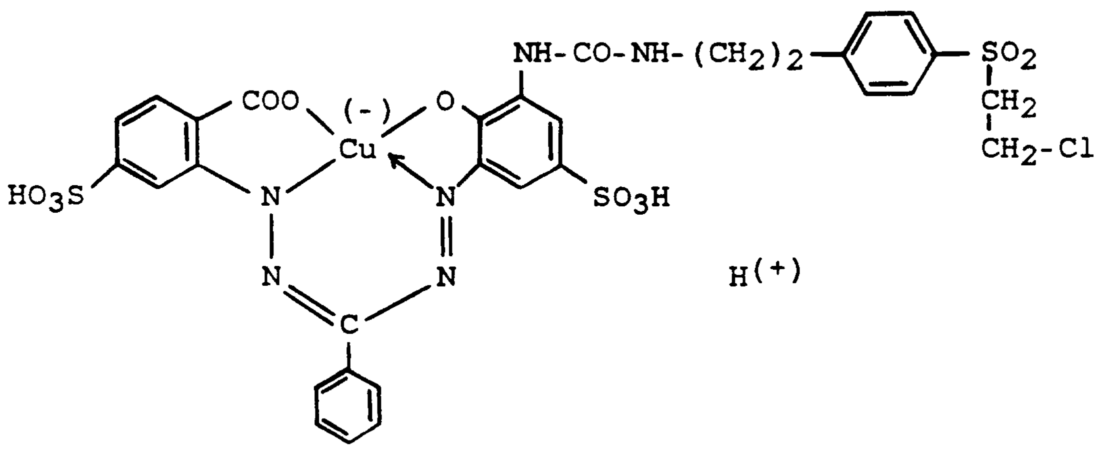

($\lambda_{max}$ = 608 nm).

Dieser erfindungsgemäße Kupferformazanfarbstoff zeigt sehr gute färberische Eigenschaften. Nach den in der Technik für faserreaktive Farbstoffe üblichen Applikations- und Fixierverfahren, insbesondere vorteilhaft bei Anwendung in den Ausziehverfahren bei 40 bis 60 °C, werden beispielsweise auf Baumwolle farbstarke blaue Färbungen mit guten Echtheiten, vor denen insbesondere die Chlorechtheit hervorgehoben werden kann, erhalten.

**Beispiel 72**

Zur Herstellung eines erfindungsgemäßen Kupferformazanfarbstoffes verfährt man analog der Verfahrensweise des Beispiels 71, geht jedoch von der isomeren aminogruppenhaltigen Kupferformazan-Ausgangsverbindung aus, in welcher die Sulfogruppe im Hydrazonteil nicht in para-Stellung zur Carbonyloxygruppe, sondern in meta-Stellung zur Carbonyloxygruppe und in para-Stellung zum Stickstoffatom gebunden ist. Der als Alkalimetallsalz erhaltene Farbstoff der Formel

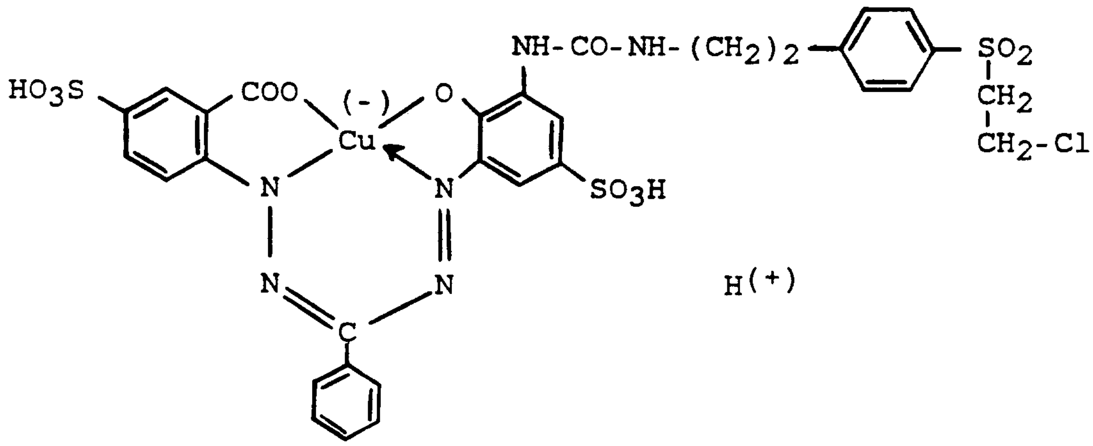

($\lambda_{max}$ = 614 nm)

besitzt ebenfalls sehr gute faserreaktive Eigenschaften und färbt beispielsweise Baumwolle in farbstarken blauen echten Tönen.

**Beispiele 73 bis 108**

In den nachfolgenden Tabellenbeispielen sind weitere erfindungsgemäße Azofarbstoffe entsprechend der allgemeinen Formel (C)

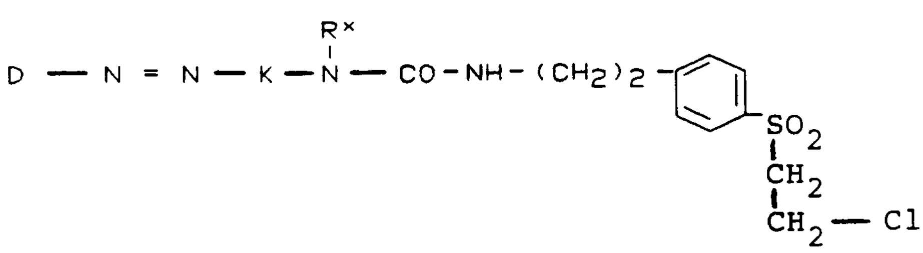

(C)

mit Hilfe ihrer Komponenten beschrieben. Sie lassen sich in erfindungsgemäßer Weise, beispielsweies analog einem der obigen Ausführungsbeispiele, unter Einsatz der aus dem jeweiligen Tabellenbeispiel in Verbindung mit der allgemeinen Formel (C) ersichtlichen Komponenten herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Farbtönen in hoher Farbstärke und mit guten Echtheiten.

| Bsp. | Rest -D | Rest -K-N($R^x$)- | Farbton |
|---|---|---|---|
| 73 | 4,6,8-Trisulfo-naphth-2-yl | 3-Methyl-phen-ylen(4,1)-1-amino | rotstichig gelb |
| 74 | 6-(ß-Sulfato-ethylsulfonyl)-1-sulfo-naphth-2-yl | 3-Acetylamino-phen-ylen(4,1)-1-amino | rotstichig gelb |
| 75 | 4-(ß-Sulfato-ethylsulfonyl)-phenyl | 3-Amino-4-sulfo-phen-ylen(6,1)-1-amino | goldgelb |
| 76 | 4-Sulfo-phenyl | 3-Carboxy-pyrazol-5-on-4-yl-1-(2'-sulfo-phenyl-4'-amino) | gelb |
| 77 | 4-(ß-Sulfato-ethylsulfonyl)-phenyl | dito | gelb |
| 78 | 2-Sulfo-phenyl | dito | gelb |
| 79 | 2,5-Disulfo-phenyl | 4-Hydroxy-2-sulfo-naphth-ylen(3,7)-7-amino | orange |
| 80 | 1,5-Disulfo-naphth-2-yl | dito | orange |

| Bsp. | Rest -D | Rest -K-N($R^x$)- | Farbton |
|---|---|---|---|
| 81 | 1,5-Disulfo-naphth-2-yl | 4-Hydroxy-2-sulfo-naphth-ylen(3,7)-7-methylamino | orange |
| 82 | 6-(ß-Sulfato-ethylsulfonyl)-1-sulfo-naphth-2-yl | 4-Hydroxy-2-sulfo-naphth-ylen(3,7)-7-amino | orange |
| 83 | 8-(ß-Sulfato-ethylsulfonyl)-1-sulfo-naphth-2-yl | dito | orange (491) |
| 84 | 2-Methoxy-3-(ß-sulfatoethyl-sulfonyl)-phenyl | dito | scharlach |
| 85 | 6-Methoxy-3-(ß-sulfatoethyl-sulfonyl)-phenyl | dito | orange (490) |
| 86 | 4-(ß-Sulfatoethyl-sulfonyl)-phenyl | 4-Hydroxy-2,8-disulfo-naphth-ylen(3,5)-5-amino | gelbstichig rot |
| 87 | 4-Methoxy-2-sulfo-phenyl | 4-Hydroxy-2-sulfo-naphth-ylen(3,6)-6-amino | gelbstichig rot |
| 88 | 2-Sulfo-phenyl | 4-Hydroxy-2,7-disulfo-naphth-ylen(3,5)-5-amino | rot |
| 89 | dito | 4-Hydroxy-2,8-disulfo-naphth-ylen(3,5)-5-amino | gelbstichig rot |
| 90 | 2,5-Dicarboxy-phenyl | dito | rot |
| 91 | 4-(ß-Sulfatoethyl-sulfonyl)-phenyl | dito | rot |
| 92 | dito | 4-Hydroxy-2,7-disulfo-naphth-ylen(3,5)-5-amino | rot (525) |

| Bsp. | Rest -D | Rest -K-N($R^x$)- | Farbton |
|---|---|---|---|
| 93 | 3-(ß-Sulfatoethyl-sulfonyl)-phenyl | dito | rot (368) |
| 94 | 2-Sulfo-4-(ß-sulfatoethyl-sulfonyl)-phenyl | dito | gelbstichig rot (397) |
| 95 | 6-(ß-Sulfatoethyl-sulfonyl)-1-sulfo-naphth-2-yl | 4-Hydroxy-2,8-disulfo-naphth-ylen(3,5)-5-amino | rot |
| 96 | 4,8-Disulfo-naphth-2-yl | 4-Hydroxy-2,7-disulfo-naphth-ylen(3,5)-5-amino | blaustichig rot (424) |
| 97 | 3-Sulfo-4-(phenyl-amino)-phenyl | 4-Hydroxy-2,7-disulfo-naphth-ylen(3,5)-5-amino | blau |
| 98 | 3-Sulfo-4-(2'-methoxy-phenyl-amino)-phenyl | dito | blau |
| 99 | 4-(3',6',8'-trisulfo-naphth-2'-yl-azo)-2-methoxy-5-methyl-phenyl | dito | blau |
| 100 | 4-(4'-Methoxy-2'-sulfo-phenyl-azo)-6-sulfo-naphth-1-yl | 6-Sulfo-naphth-ylen(4,1)-1-amino | braun |
| 101 | 4-(4'-Methoxy-2'-sulfo-phenyl-azo)-7-sulfo-naphth-1-yl | 7-Sulfo-naphth-ylen(4,1)-1-amino | braun |

| Bsp. | Rest -D | Rest -K-N($R^x$)- | Farbton |
|---|---|---|---|
| 102 | 4-(4',6',8'-Trisulfo-naphth-2'-ylazo)-6-sulfo-naphth-1-yl | 3-Methyl-phenylen(4,1)-1-amino | braun |
| 103 | 4-(2',5',7'-Trisulfo-naphth-1'-ylazo)-2,5-dimethyl-phenyl | 6-Sulfo-naphthylen(4,1)-1-amino | braun |
| 104 | 1:1-Kupferkomplex von: 4,8-Disulfo-1-hydroxy-naphth-2-yl | 4-Hydroxy-2,7-disulfo-naphthylen(3,5)-5-amino | blau |
| 105 | 1:2-Chromkomplex von: 2-Carboxy-phenyl | dito | schwarz |
| 106 | 1:1-Kupferkomplex von: 2-Hydroxy-5-(ß-sulfatoethyl-sulfonyl)-phenyl | dito | rotstichig blau (387) |
| 107 | 3,6,8-Trisulfo-naphth-2-yl | 3-Ureido-phenylen(4,1)-1-amino | rotstichig gelb |
| 108 | 4,8-Disulfo-naphth-2-yl | 3-Acetylamino-phenylen(4,1)-1-amino | rotstichig gelb |

Beispiel 109

a) Zu einer Suspension von 162 Teilen m-Phenylendiamin in 1000 Vol.-Teilen Dichlormethan gibt man langsam bei 20 °C 273,5 Teile $\beta$-[4-($\beta$'-Chlorethylsulfonyl)-phenyl]-ethyl-isocyanat (Beispiel A), rührt noch etwa zwei Stunden weiter, destilliert das Dichlormethan unter reduziertem Druck ab und kocht den Rückstand zur Reinigung mit 300 Vol.-Teilen Wasser aus, der danach in 500 Vol.-Teilen eines 1:1-Wasser/Aceton-Gemisches suspendiert wird. Zu dieser Suspension gibt man eine auf üblichem Wege hergestellte wäßrige Lösung des Diazoniumsalzes von 416 Teilen 2-Amino-naphthalin-3,6,8-trisulfonsäure und führt die Kupplungsreaktion bei einem pH-Wert zwischen 4 und 5 und bei einer Temperatur von etwa 20 °C durch.

b) Die gemäß a) erhaltene Lösung der Amino-Azoverbindung wird mit einer Suspension von 198 Teilen Cyanurchlorid in 100 Teilen Wasser und 800 Teilen Eis versetzt. Die Umsetzung erfolgt unter Einhaltung eines pH-Wertes von 4,5 bei etwa 0 °C. Die anschließende zweite Kondensationsreaktion erfolgt nach Zugabe von 281 Teilen 4-($\beta$-Sulfatoethylsulfonyl)-anilin bei einer Temperatur von etwa 75 °C und einem pH-Wert zwischen 4,5 und 5.

Die so hergestellte erfindungsgemäße Azoverbindung wird durch Aussalzen mit Natriumchlorid isoliert. Sie besitzt die Konstitution der allgemeinen Formel (25a), in welcher W für Chlor steht und R* die $\beta$-Sulfatoethylsulfonyl-Gruppe, in para-Stellung zur Aminogruppe an den Benzolkern gebunden, bedeutet, und hat in wäßriger Lösung ein Absorptionsmaximum bei 398 nm. Sie zeigt sehr gute faserreaktive Farbstoffeigenschaften und liefert beispielsweise auf Baumwolle nach den für faserreaktive Farbstoffe üblichen Anwendungsverfahren gelbe Färbungen und Drucke mit guten Echtheitseigenschaften.

Beispiel 110

Zur Herstellung einer erfindungsgemäßen Azoverbindung verfährt man zunächst gemäß der Verfahrensweise des Beispieles 109 a) und gibt zu der Lösung der Amino-Azoverbindung bei 0 °C unter Einhaltung eines pH-Wertes zwischen 4 und 5 150 Teile Cyanurfluorid hinzu. Die anschließende zweite Kondensationsreaktion erfolgt nach Zugabe von 281 Teilen 4-(β-Sulfatoethylsulfonyl)-anilin bei 40 °C und einem pH-Wert von etwa 4,5.

Die so hergestellte erfindungsgemäße Azoverbindung wird durch Aussalzen mit Natriumchlorid isoliert. Sie besitzt in wäßriger Lösung ein Absorptionsmaximum bei 398 nm und hat die Konstitution der allgemeinen Formel (25a), in welcher W für Fluor steht und R* die β-Sulfatoethylsulfonyl-Gruppe, in para-Stellung zur Aminogruppe an den Benzolkern gebunden, bedeutet. Nach den für faserreaktive Farbstoffe üblichen Anwendungsverfahren färbt sie beispielsweise Baumwolle in echten, farbstarken gelben Tönen.

Beispiel 111

Zur Herstellung einer erfindungsgemäßen Azoverbindung verfährt man gemäß der Verfahrensweise des Beispieles 109, setzt in der zweiten Kondensationsreaktion jedoch anstelle von 4-(β-Sulfatoethylsulfonyl)-anilin die gleiche Menge an der isomeren Verbindung 3-(β-Sulfatoethylsulfonyl)-anilin ein.
Die erhaltene erfindungsgemäße Azoverbindung besitzt in wäßriger Lösung ein Absorptionsmaximum bei 398 nm und hat die Konstitution der allgemeinen Formel (25a), in welcher W für Chlor steht und R* die β-Sulfatoethylsulfonyl-Gruppe, in meta-Stellung zur Aminogruppe an den Benzolkern gebunden, bedeutet. Sie besitzt sehr gute faserreaktive Farbstoffeigenschaften und färbt die in der Beschreibung genannten Materialien, wie beispielsweise Cellulosefasermaterialien, insbesondere Baumwolle, nach den üblichen Färbe- und Druckmethoden in farbstarken, echten, gelben Tönen.

Beispiel 112

Zur Herstellung einer erfindungsgemäßen Azoverbindung verfährt man gemäß der Verfahrensweise des Beispieles 110, setzt in der zweiten Kondensationsreaktion jedoch anstelle von 4-(β-Sulfatoethylsulfonyl)-anilin die gleiche Menge an der isomeren Verbindung 3-(β-Sulfatoethylsulfonyl)-anilin ein.
Die erhaltene erfindungsgemäße Azoverbindung besitzt in wäßriger Lösung ein Absorptionsmaximum bei 398 nm und hat die Konstitution der allgemeinen Formel (25a), in welcher W für Fluor steht und R* die β-Sulfatoethylsulfonyl-Gruppe, in meta-Stellung zur Aminogruppe an den Benzolkern gebunden, bedeutet. Sie besitzt sehr gute faserreaktive Farbstoffeigenschaften und färbt die in der Beschreibung genannten Materialien, wie beispielsweise Cellulosefasermaterialien, insbesondere Baumwolle, nach den üblichen Färbe- und Druckmethoden in farbstarken, echten, gelben Tönen.

Beispiel 113

Zur Herstellung einer erfindungsgemäßen Azoverbindung verfährt man zunächst gemäß der Verfahrensweise des Beispieles 109 a), suspendiert 100 Teile Cyanurchlorid in einem Gemisch aus 100 Teilen Wasser und 800 Teilen Eis und gibt die wäßrige Lösung der gemäß Beispiel 109 a) hergestellten Amino-Azoverbindung hinzu. Man führt diese Kondensationsreaktion bei etwa 0 °C unter Einhaltung eines pH-Wertes von 4,5 durch. Die anschließende zweite Kondensationsreaktion erfolgt nach Zugabe von 42 Teilen Cyanamid bei einer Temperatur von 40 °C und einem pH-Wert von 9.
Die sich daran anschließende dritte Kondensationsreaktion mit 4-(β-Sulfatoethylsulfonyl)-anilin (281 Teile) erfolgt analog den Angaben des Beispieles 109 b) bei einer Temperatur von etwa 75 °C und einem pH-Wert zwischen 4,5 und 5.

Die erhaltene erfindungsgemäße Azoverbindung wird durch Aussalzen mit Natriumchlorid isoliert. Sie besitzt in wäßriger Lösung ein Absorptionsmaximum bei 398 nm und hat die chemische Konstitution der allgemeinen Formel (25a), in welcher W für die Cyanamidogruppe steht und R* die β-Sulfatoethylsulfonyl-Gruppe, in para-Stellung zur Aminogruppe an den Benzolkern gebunden, bedeutet. Die erfindungsgemäße Azoverbindung färbt nach den für faserreaktive Farbstoffe üblichen Anwendungsverfahren beispielsweise Baumwolle in farbstarken, echten, gelben Tönen.

Beispiel 114

Zur Herstellung einer erfindungsgemäßen Azoverbindung verfährt man gemäß der Verfahrensweise des Beispieles 113, führt jedoch die dritte Kondensationsreaktion anstelle mit 4-(β-Sulfatoethylsulfonyl)-anilin mit der isomeren Verbindung 3-(β-Sulfatoethylsulfonyl)-anilin in gleicher Menge durch. Die erfindungsgemäße Azoverbindung besitzt die Konstitution der allgemeinen Formel (25a), in welcher W für die Cyanamidogruppe steht und R* die β-Sulfatoethylsulfonyl-Gruppe, in meta-Stellung zur Aminogruppe an den Benzolkern gebunden, bedeutet. In wäßriger Lösung zeigt sie ein Absorptionsmaximum bei 398 nm; nach den für faserreaktive Farbstoffe üblichen Applikations- und Fixierverfahren färbt sie beispielsweise Baumwolle in farbstarken, echten, gelben Tönen.

**Patentansprüche**
**Patentansprüche für folgende Vertragsstaaten : BE, CH, DE, FR, GB, LI**

**1.** Wasserlöslicher Farbstoff entsprechend der allgemeinen Formel (1)

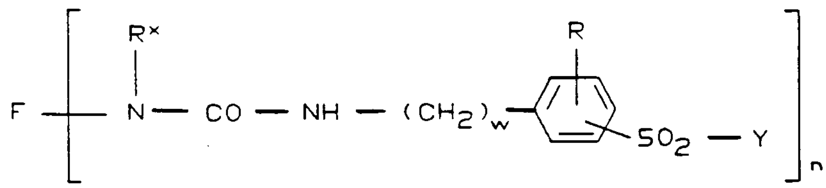

(1)

in welcher bedeuten:

F ist der Rest eines Monoazo-, Polyazo-, Metallkomplexazo-, Anthrachinon-, Phthalocyanin-, Azomethin-, Dioxazin-, Phenazin-, Stilben-, Triphenylmethan-, Xanthen-, Formazan-, Thioxanthon-, Nitroaryl-, Naphthochinon-, Pyrenchinon oder Perylentetracarbimid-Farbstoffes;
$R^x$ ist Wasserstoff oder Alkyl von 1 bis 4 C-Atomen;
R ist Wasserstoff, Sulfo, Carboxy, Alkyl von 1 bis 4 C-Atomen, Alkoxy von 1 bis 4 C-Atomen oder Chlor;
w ist die Zahl 1, 2, 3 oder 4;
Y ist die Vinylgruppe oder eine Ethylgruppe, die in β-Stellung einen Substituenten enthält, der durch Alkali unter Bildung der Vinylgruppe eliminierbar ist;
n ist die Zahl 1 oder 2.

**2.** Farbstoff nach Anspruch 1 der allgemeinen Formel (15a)

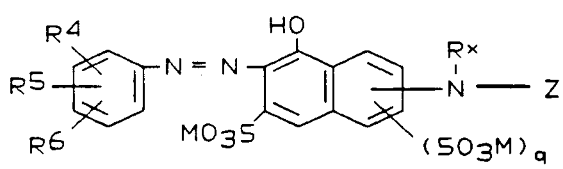

(15a)

in welcher bedeuten:

M ist Wasserstoff oder ein Alkalimetall;
q ist die Zahl Null oder 1;
$R^x$ hat eine der in Anspruch 1 genannten Bedeutungen;
$Z^1$ ist eine Gruppe der allgemeinen Formel (2A)

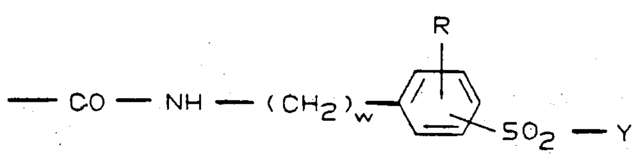

(2A)

in welcher w, R und Y die in Anspruch 1 genannten Bedeutungen haben;

- $R^4$ ist Wasserstoff, Alkyl von 1 bis 4 C-Atomen, Alkoxy von 1 bis 4 C-Atomen, Halogen, Carboxy oder Sulfo;
- $R^5$ ist Wasserstoff, Alkyl von 1 bis 4 C-Atomen, Alkoxy von 1 bis 4 C-Atomen, Halogen, Carboxy oder Sulfo;
- $R^6$ ist Wasserstoff, Sulfo, β-Sulfatoethylsulfonyl, β-Chlorethylsulfonyl oder Vinylsulfonyl.

**3.** Farbstoff nach Anspruch 1 der allgemeinen Formel (15b)

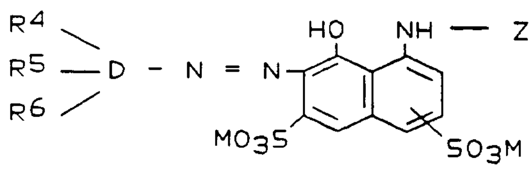

(15b)

in welcher bedeuten:

- M ist Wasserstoff oder ein Alkalimetall;
- D ist ein Benzolring oder ein Naphthalinring, an den die Azogruppe in β-Stellung gebunden ist, wobei im Falle, daß D den Naphthalinring bedeutet, $R^4$ und $R^5$ jedes, unabhängig voneinander, Wasserstoff oder Sulfo bedeuten;
- $Z^1$ ist eine Gruppe der allgemeinen Formel (2A)

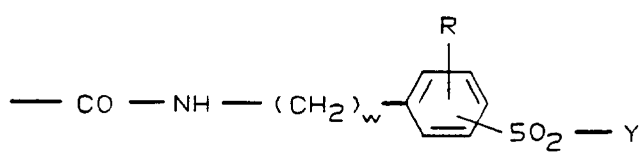

(2A)

in welcher w, R und Y die in Anspruch 1 genannten Bedeutungen haben;

- $R^4$ ist Wasserstoff, Alkyl von 1 bis 4 C-Atomen, Alkoxy von 1 bis 4 C-Atomen, Halogen, Carboxy oder Sulfo;
- $R^5$ ist Wasserstoff, Alkyl von 1 bis 4 C-Atomen, Alkoxy von 1 bis 4 C-Atomen, Halogen, Carboxy oder Sulfo;
- $R^6$ ist Wasserstoff, Sulfo, β-Sulfatoethylsulfonyl, β-Chlorethylsulfonyl oder Vinylsulfonyl.

**4.** Farbstoff nach Anspruch 3, dadurch gekennzeichnet, daß D ein Benzolring ist, $R^4$ und $R^5$ beide Wasserstoff sind, $R^6$ Vinylsulfonyl, β-Chlorethylsulfonyl oder β-Sulfatoethylsulfonyl in meta- oder para-Stellung zur Azogruppe ist und die eine Gruppe $-SO_3M$ an den Naphthalinrest in meta-Stellung zur Gruppe $-NH-Z^1$ gebunden ist.

**5.** Farbstoff nach Anspruch 3, dadurch gekennzeichnet, daß D ein Naphthalinring ist, an den die Azogruppe in 2-Stellung gebunden ist, $R^4$ Sulfo in 1-Stellung an den Naphthalinring bedeutet, $R^5$ Wasserstoff bedeutet, $R^6$ Vinylsulfonyl, β-Chlorethylsulfonyl oder β-Sulfatoethylsulfonyl in 6-Stellung an den Naphthalinring bedeutet und die eine Gruppe $-SO_3M$ an den Naphtholrest in meta-Stellung zur Gruppe $-NH-Z^1$ gebunden ist.

**6.** Farbstoff nach Anspruch 1 der allgemeinen Formel (16a)

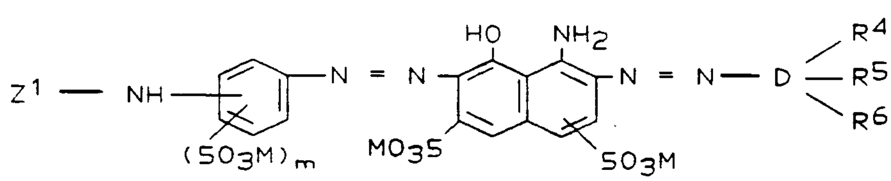

(16a)

in welcher

| | |
|---|---|
| M | Wasserstoff oder ein Alkalimetall ist, |
| m | die Zahl 1 bedeutet, |
| D | ein Benzolring ist, |
| $R^4$ und $R^5$ | beide Wasserstoff sind, |
| $R^6$ | Vinylsulfonyl, β-Chlorethylsulfonyl oder β-Sulfatoethylsulfonyl in meta- oder para-Stellung an den Benzolkern bedeutet und |
| $Z^1$ | eine Gruppe der allgemeinen Formel (2A) |

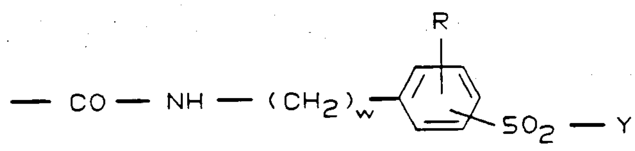
(2A)

ist, in welcher w, R und Y die in Anspruch 1 genannten Bedeutungen haben.

**7.** Farbstoff nach Anspruch 1 der allgemeinen Formel (15g)

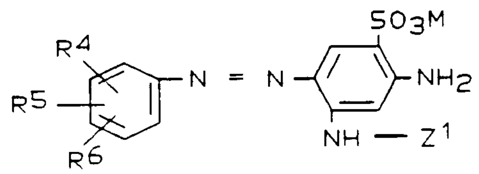
(15g)

in welcher

M Wasserstoff oder ein Alkalimetall ist,

$Z^1$ eine Gruppe der allgemeinen Formel (2A)

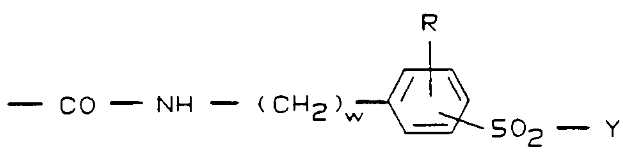
(2A)

ist, in welcher w, R und Y die in Anspruch 1 genannten Bedeutungen haben;

$R^4$ ist Wasserstoff, Alkyl von 1 bis 4 C-Atomen, Alkoxy von 1 bis 4 C-Atomen, Halogen, Carboxy oder Sulfo;

$R^5$ ist Wasserstoff, Alkyl von 1 bis 4 C-Atomen, Alkoxy von 1 bis 4 C-Atomen, Halogen, Carboxy oder Sulfo;

$R^6$ ist Wasserstoff, Sulfo, β-Sulfatoethylsulfonyl, β-Chlorethylsulfonyl oder Vinylsulfonyl.

**8.** Triphendioxazinfarbstoff nach Anspruch 1 entsprechend der allgemeinen Formel (14b)

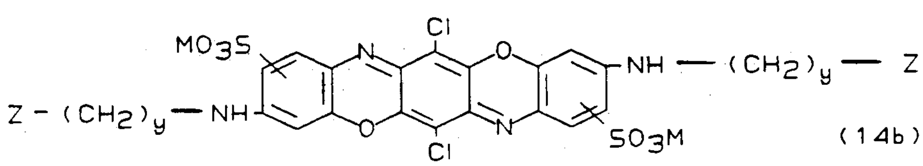
(14b)

in welcher

M Wasserstoff oder ein Alkalimetall ist,

Z eine Gruppe der allgemeinen Formel (2)

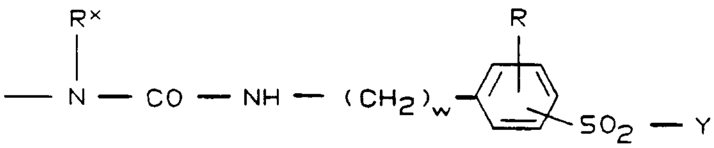

(2)

mit $R^x$, w, R und Y der in Anspruch 1 genannten Bedeutungen ist und
y für die Zahl 2, 3 oder 4 steht.

**9.** Phthalocyaninfarbstoff nach Anspruch 1 der allgemeinen Formel (14c)

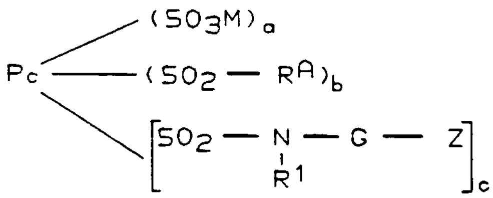

(14c)

in welcher bedeuten:

- Pc ist der Rest eines Kupfer- oder Nickelphthalocyanins;
- $R^A$ ist eine Aminogruppe der Formel $-NR^2R^3$ , in welcher $R^2$ und $R^3$ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- $R^1$ ist Wasserstoff oder Alkyl von 1 bis 4 C-Atomen;
- G ist ein Phenylenrest, der durch 1 oder 2 Substituenten aus der Gruppe Alkyl von 1 bis 4 C-Atomen, Halogen, Carboxy und Sulfo substituiert sein kann, oder ist eine Alkylengruppe von 2 bis 6 C-Atomen oder ein Phenylen-alkylen-Rest, dessen Phenylen wie oben angegeben substituiert sein kann und dessen Alkylenteil ein Alkylen von 1 bis 4 C-Atomen ist;
- Z ist die Gruppe der Formel (2)

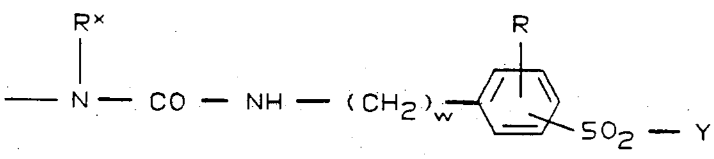

(2)

mit $R^x$, w, R und Y der in Anspruch 1 genannten Bedeutungen,

- a ist eine Zahl von 2 bis 3,
- b ist eine Zahl von Null bis 3 und
- c ist eine Zahl von 1 bis 2,

wobei die Summe von (a + b + c) gleich einer Zahl von 3 bis 4 ist.

**10.** Kupferformazanfarbstoff nach Anspruch 1 der allgemeinen Formel (14d)

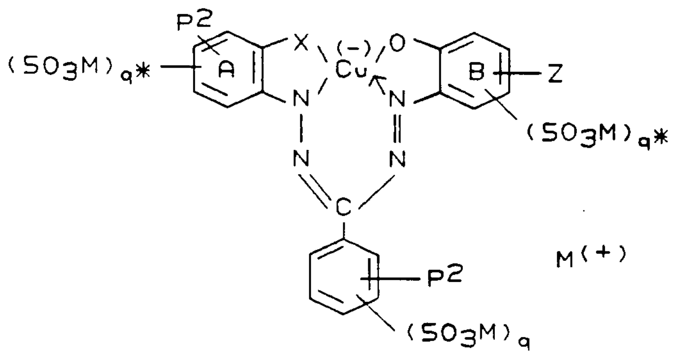

(14d)

in welcher bedeuten:

Z ist die Gruppe der Formel (2)

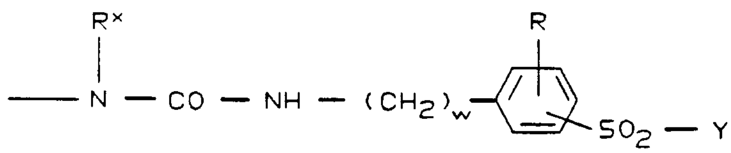

(2)

mit $R^x$, w, R und Y der in Anspruch 1 genannten Bedeutungen;

M ist Wasserstoff oder ein Alkalimetall;

q ist die Zahl Null oder 1, bevorzugt Null;

q* ist die Zahl Null oder 1, bevorzugt 1;

$P^2$ ist jedes, unabhängig voneinander, Wasserstoff, Methyl, Methoxy, Brom, Chlor, Carboxy oder Sulfo;

X ist die Carbonyloxigruppe.

**11.** Kupferformazanfarbstoff nach Anspruch 1 der allgemeinen Formel

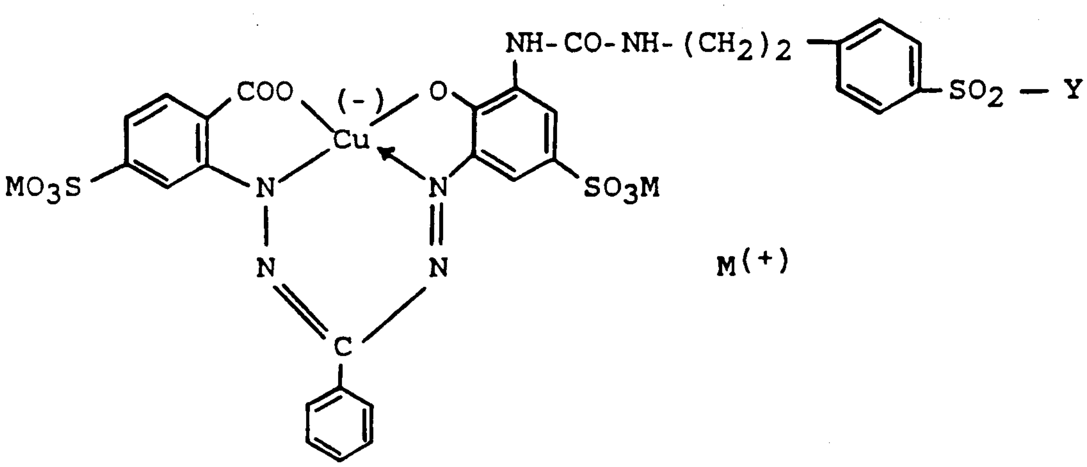

in welcher M Wasserstoff oder ein Alkalimetall ist und Y eine der in Anspruch 1 genannten Bedeutungen besitzt.

**12.** Farbstoff nach Anspruch 1 der Formel

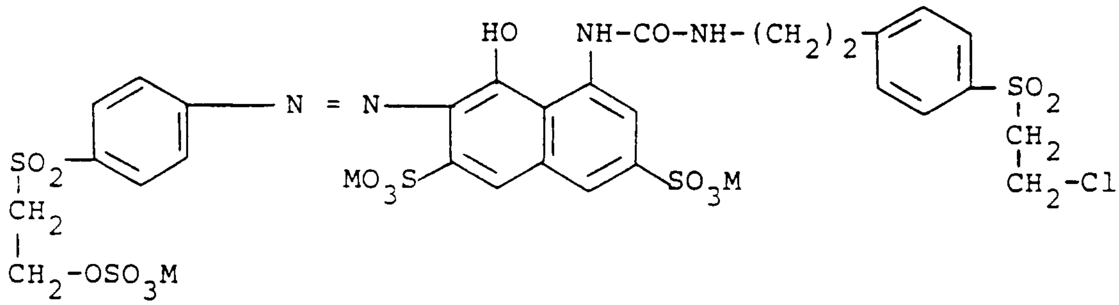

oder

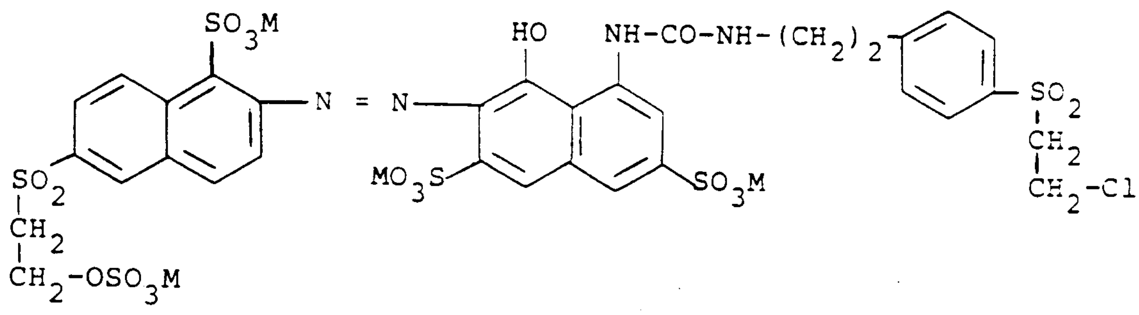

oder

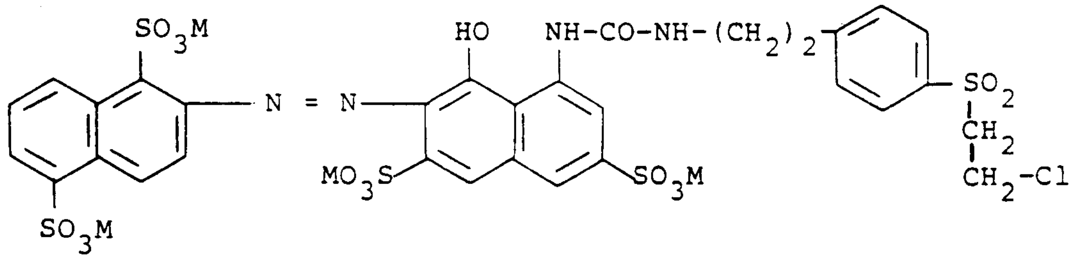

oder

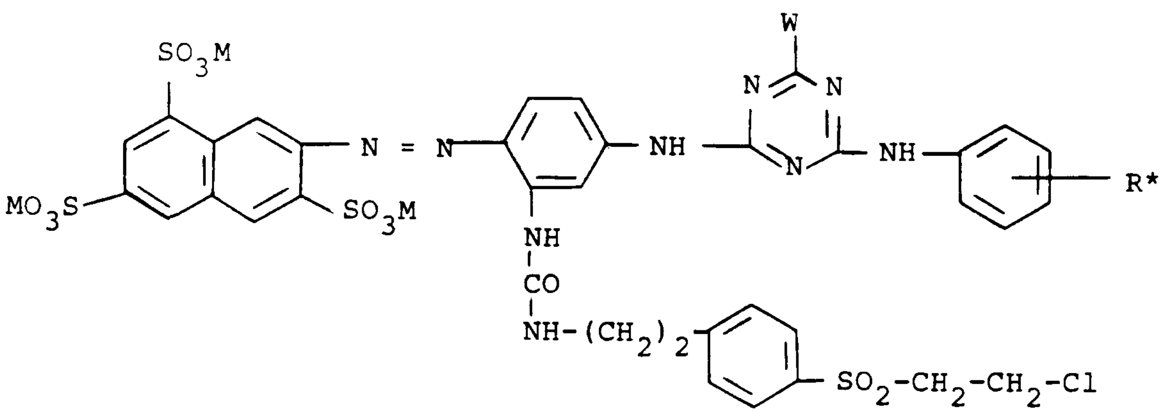

oder

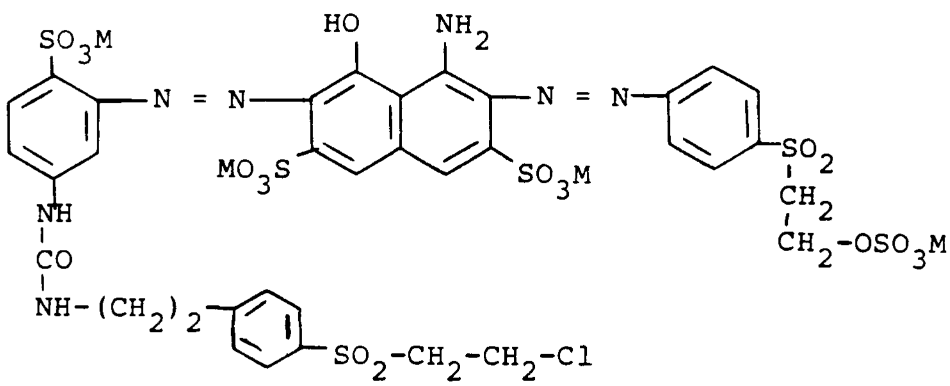

in welchen M Wasserstoff oder ein Alkalimetall ist, R* Vinylsulfonyl, β-Sulfatoethylsulfonyl oder β-Chlorethylsulfonyl, bevorzugt β-Sulfatoetylsulfonyl, bedeutet und W Chlor, Fluor oder Cyanamido ist.

**13.** Farbstoff nach Anspruch 1 der allgemeinen Formel

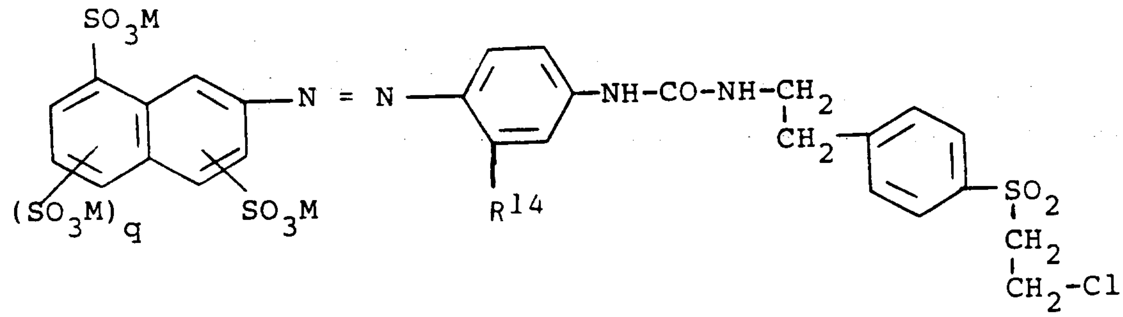

in welcher M Wasserstoff oder ein Alkalimetall ist, 9 die Zahl Null oder 1 ist und $R^{14}$ Acetylamino oder Ureido bedeutet.

**14.** Farbstoff nach mindestens einem der Ansprüche 1, 8, 9 und 10, dadurch gekennzeichnet, daß $R^x$ Wasserstoff ist.

**15.** Farbstoff nach mindestens einem der Ansprüche 1 bis 10 und 14, dadurch gekennzeichnet, daß w die Zahl 2 ist.

**16.** Farbstoff nach mindestens einem der Ansprüche 1 bis 10, 14 und 15, dadurch gekennzeichnet, daß R Wasserstoff ist.

**17.** Farbstoff nach mindestens einem der Ansprüche 1 bis 11 und 14 bis 16, dadurch gekennzeichnet, daß Y Vinyl, $\beta$-Chlorethyl oder $\beta$-Sulfatoethyl ist.

**18.** Farbstoff nach mindestens einem der Ansprüche 1 bis 11 und 14 bis 16, dadurch gekennzeichnet, daß Y $\beta$-Chlorethyl ist.

**19.** Farbstoff nach mindestens einem der Ansprüche 1 bis 10 und 14 bis 18, dadurch gekennzeichnet, daß n die Zahl 1 ist.

**20.** Verfahren zur Herstellung eines Farbstoffes von Anspruch 1, dadurch gekennzeichnet, daß man für den jeweiligen Farbstoff typische Vorprodukte, von denen mindestens eines eine Gruppe der allgemeinen Formel (2) enthält, miteinander umsetzt, oder daß man eine Verbindung der allgemeinen Formel (55)

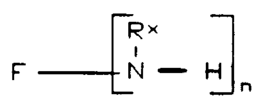

(55)

in welcher F, $R^x$ und n die in Anspruch 1 genannten Bedeutungen haben, mit einer Isocyanatverbindung der allgemeinen Formel (56)

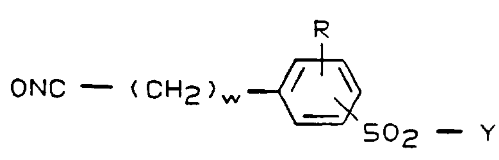

(56)

in welcher w, R und Y die in Anspruch 1 genannten haben, umsetzt, oder daß man eine Verbindung der allgemeinen Formel (57)

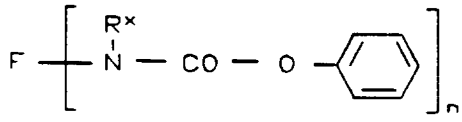

(57)

in welcher F, $R^x$ und n die in Anspruch 1 genannten Bedeutungen haben, mit einer Aminoverbindung der allgemeinen Formel (58)

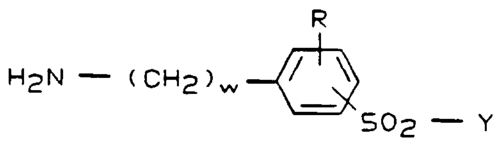

(58)

in welcher w, R und Y die in Anspruch 1 genannten Bedeutungen haben, umsetzt.

**21.** Verwendung einer Verbindung der allgemeinen Formel (1) von Anspruch 1 zum Färben (einschließlich Bedrucken) von hydroxy- und/oder carbonamidgruppenhaltigem Material, insbesondere Fasermaterial.

**22.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung der in Anspruch 1 genannten und definierten allgemeinen Formel (1) einsetzt.

**Patentansprüche für folgenden Vertragsstaat : ES**

**1.** Verfahren zur Herstellung eines wasserlöslichen Farbstoffes entsprechend der allgemeinen Formel (1)

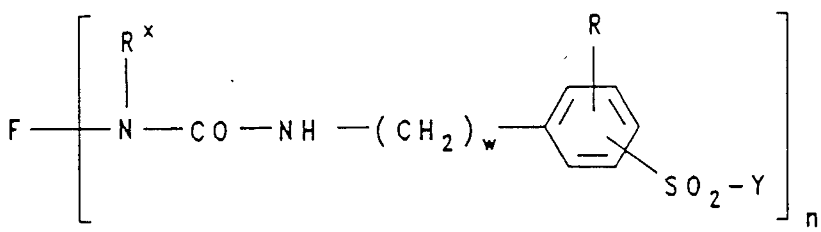

(1)

in welcher bedeuten:

- F ist der Rest eines Monoazo-, Polyazo-, Metallkomplexazo-, Anthrachinon-, Phthalocyanin-, Azomethin-, Dioxazin-, Phenazin-, Stilben-, Triphenylmethan-, Xanthen-, Formazan-, Thioxanthon-, Nitroaryl-, Naphthochinon-, Pyrenchinon oder Perylentetracarbimid-Farbstoffes;
- $R^x$ ist Wasserstoff oder Alkyl von 1 bis 4 C-Atomen;
- R ist Wasserstoff, Sulfo, Carboxy, Alkyl von 1 bis 4 C-Atomen, Alkoxy von 1 bis 4 C-Atomen oder Chlor;
- w ist die Zahl 1, 2, 3 oder 4;
- Y ist die Vinylgruppe oder eine Ethylgruppe, die in $\beta$-Stellung einen Substituenten enthält, der durch Alkali unter Bildung der Vinylgruppe eleminierbar ist;
- n ist die Zahl 1 oder 2;

dadurch gekennzeichnet, daß man für den jeweiligen Farbstoff typische Vorprodukte, von denen mindestens eines eine Gruppe der allgemeinen Formel (2)

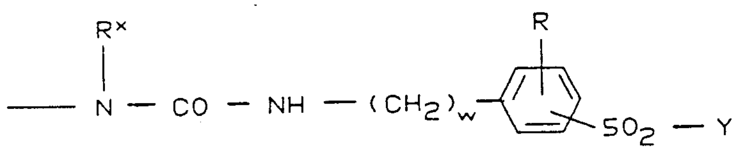

(2)

enthält, miteinander umsetzt, oder daß man eine Verbindung der allgemeinen Formel (55)

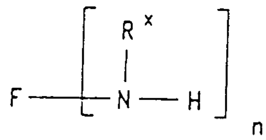

(55)

in welcher F, $R^x$ und n die oben genannten Bedeutungen haben, mit einer Isocyanatverbindung der allgemeinen Formel (56)

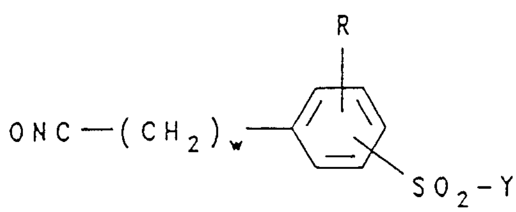

(56)

in welcher w, R und Y die oben genannten Bedeutungen haben, umsetzt, oder daß man eine Verbindung der allgemeinen Formel (57)

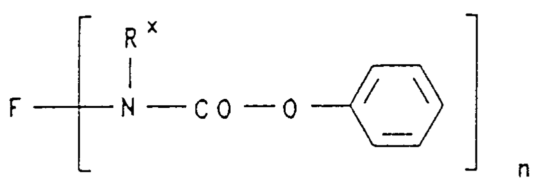

(57)

in welcher F, $R^x$ und n die oben genannten Bedeutungen haben, mit einer Aminoverbindung der allgemeinen Formel (58)

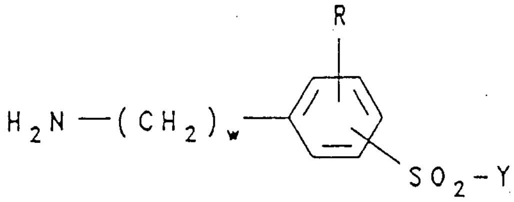

(58)

in welcher w, R und Y die oben genannten Bedeutungen haben, umsetzt.

**2.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung der in Anspruch 1 genannten und definierten allgemeinen Formel (1) einsetzt.

## Claims

### Claims for the following Contracting States : BE, CH, DE, FR, GB, LI

**1.** A water-soluble dye conforming to the formula (1)

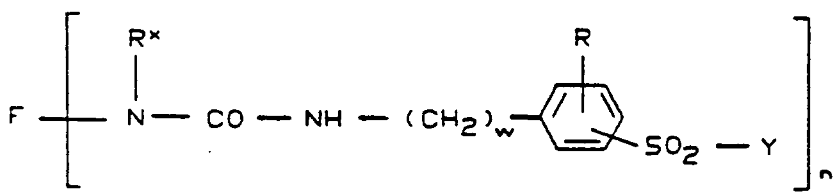

**(1)**

in which

- F is the radical of a monoazo, polyazo, metal complex azo, anthraquinone, phthalocyanine, azomethine, dioxazine, phenazine, stilbene, triphenylmethane, xanthene, formazan, thioxanthone, nitroaryl, naphthoquinone, pyrenequinone or perylenetetracarbimide dye;
- $R^x$ is hydrogen or alkyl of 1 to 4 carbon atoms;
- R is hydrogen, sulfo, carboxyl, alkyl of 1 to 4 carbon atoms, alkoxy of 1 to 4 carbon atoms or chlorine;
- w is 1, 2, 3 or 4;
- Y is vinyl or an ethyl group which contains in the $\beta$-position a substituent which is eliminable by alkali to form a vinyl group;
- n is 1 or 2.

**2.** A dye as claimed in claim 1 of the formula (15a)

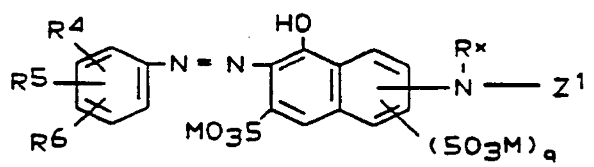

**(15a)**

in which

- M is hydrogen or an alkali metal;
- q is zero or 1;
- $R^x$ has one of the meanings mentioned in claim 1;
- $Z^1$ is a group of the formula (2A)

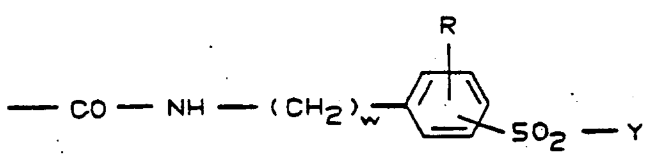

**(2A)**

in which w, R and Y have the meanings mentioned in claim 1;

- $R^4$ is hydrogen, alkyl of 1 to 4 carbon atoms, alkoxy of 1 to 4 carbon atoms, halogen, carboxyl or sulfo;
- $R^5$ is hydrogen, alkyl of 1 to 4 carbon atoms, alkoxy of 1 to 4 carbon atoms, halogen, carboxyl or sulfo;
- $R^6$ is hydrogen, sulfo, $\beta$-sulfatoethylsulfonyl, $\beta$-chloroethylsulfonyl or vinylsulfonyl.

**3.** A dye as claimed in claim 1 of the general formula (15b)

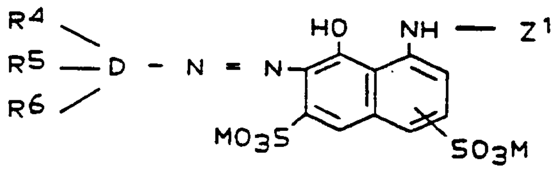

**(15b)**

in which

M is hydrogen or an alkali metal;

D is a benzene ring or a naphthalene ring to which the azo group is bonded in the $\beta$-position, if $R^4$ and $R^5$ each being independently of the other hydrogen or sulfo;

$Z^1$ is a group of the formula (2A)

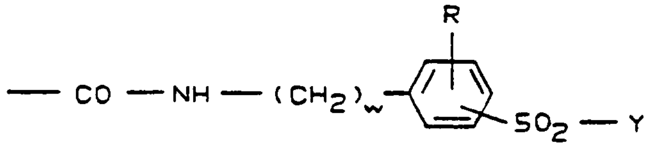

**(2A)**

in which w, R and Y have the meanings mentioned in claim 1;

$R^4$ is hydrogen, alkyl of 1 to 4 carbon atoms, alkoxy of 1 to 4 carbon atoms, halogen, carboxyl or sulfo;

$R^5$ is hydrogen, alkyl of 1 to 4 carbon atoms, alkoxy of 1 to 4 carbon atoms, halogen, carboxyl or sulfo;

$R^6$ is hydrogen, sulfo, $\beta$-sulfatoethylsulfonyl, $\beta$-chloroethylsulfonyl or vinylsulfonyl.

**4.** A dye as claimed in claim 3, wherein D is a benzene ring, $R^4$ and $R^5$ are both hydrogen, $R^6$ is vinylsulfonyl, $\beta$-chloroethylsulfonyl or $\beta$-sulfatoethylsulfonyl in meta- or para-position relative to the azo group and one of the $-SO_3M$ groups is bonded to the naphthalene radical in the meta-position relative to the group $-NH-Z^1$.

**5.** A dye as claimed in claim 3, wherein D is a naphthalene ring to which the azo group is bonded in the 2-position, $R^4$ is sulfo in the 1-position of the naphthalene ring, $R^5$ is hydrogen, $R^6$ is vinylsulfonyl, $\beta$-chloroethylsulfonyl or $\beta$-sulfatoethylsulfonyl in the 6-position on the naphthalene ring and one of the $-SO_3M$ groups is bonded to the naphthol radical in the meta-position relative to the group $-NH-Z^1$.

**6.** A dye as claimed in claim 1 of the formula (16a)

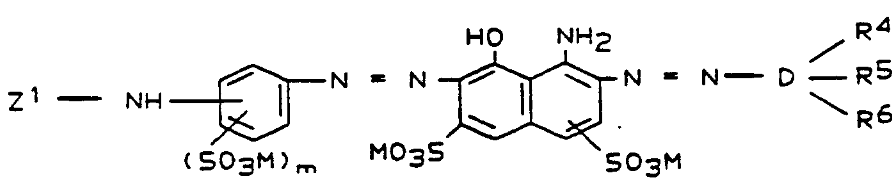

**(16a)**

in which

M is hydrogen or an alkali metal,

m is 1,

D is a benzene ring,

$R^4$ and $R^5$ are both hydrogen,

$R^6$ is vinylsulfonyl, $\beta$-chloroethylsulfonyl or $\beta$-sulfatoethylsulfonyl in the meta- or para-position on the benzene ring, and

$Z^1$ is a group of the formula (2A)

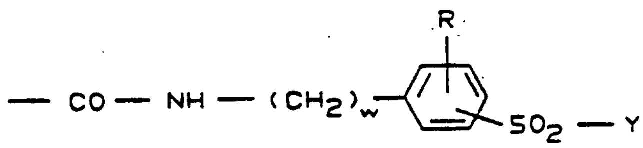

(2A)

in which w, R and Y have the meanings mentioned in claim 1.

**7.** A dye as claimed in claim 1 of the formula (15g)

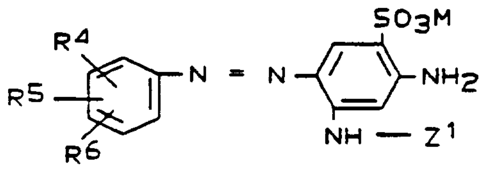

(15g)

in which

M is hydrogen or an alkali metal,

$Z^1$ is a group of the formula (2A)

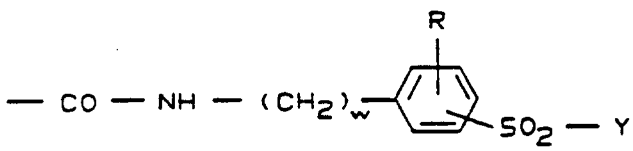

(2A)

in which w, R and Y have the meanings mentioned in claim 1;

$R^4$ is hydrogen, alkyl of 1 to 4 carbon atoms, alkoxy of 1 to 4 carbon atoms, halogen, carboxyl or sulfo;

$R^5$ is hydrogen, alkyl of 1 to 4 carbon atoms, alkoxy of 1 to 4 carbon atoms, halogen, carboxyl or sulfo;

$R^6$ is hydrogen, sulfo, $\beta$-sulfatoethylsulfonyl, $\beta$-chloroethylsulfonyl or vinylsulfonyl.

**8.** A triphendioxazine dye as claimed in claim 1 conforming to the formula (14b)

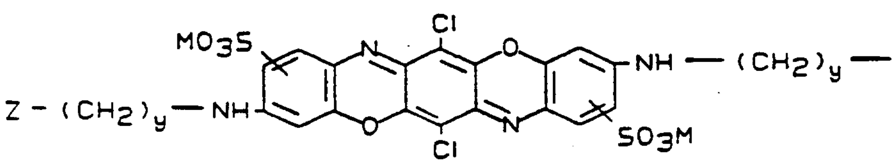

(14b)

in which

M is hydrogen or an alkali metal,

Z is a group of the formula (2)

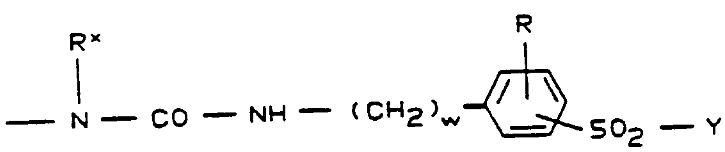

(2)

where $R^x$, w, R and Y have the meanings mentioned in claim 1, and

y is 2, 3 or 4.

**9.** A phthalocyanine dye as claimed in claim 1 of the formula (14c)

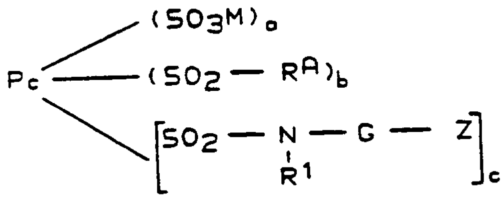

**(14c)**

in which

- Pc is the radical of a copper or nickel phthalocyanine;
- $R^A$ is an amino group of the formula $-NR^2R^3$, in which $R^2$ and $R^3$ are each independently of the other hydrogen or alkyl of 1 to 4 carbon atoms which may be substituted by hydroxyl or sulfo, or is a heterocyclic, N-containing radical such as morpholino or piperidino;
- $R^1$ is hydrogen or alkyl of 1 to 4 carbon atoms;
- G is a phenylene radical which may be substituted by 1 or 2 substituents selected from the group consisting of alkyl of 1 to 4 carbon atoms, halogen, carboxyl and sulfo, or is an alkylene group of 2 to 6 carbon atoms, or a phenylene-alkylene radical whose phenylene may be substituted as specified above and whose alkylene moiety is an alkylene of 1 to 4 carbon atoms;
- Z is the group of the formula (2)

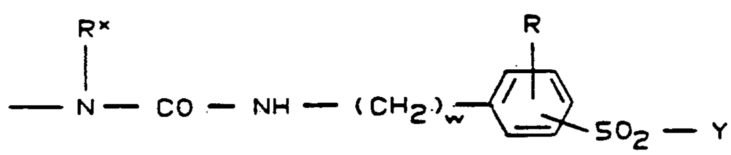

**(2)**

where $R^x$, w, R and Y have the meanings mentioned in claim 1,

- a is a number from 2 to 3,
- b is a number from zero to 3, and
- c is a number from 1 to 2,

the sum total of (a + b + c) being equal to a number from 3 to 4.

**10.** A copper formazan dye as claimed in claim 1 of the formula (14d)

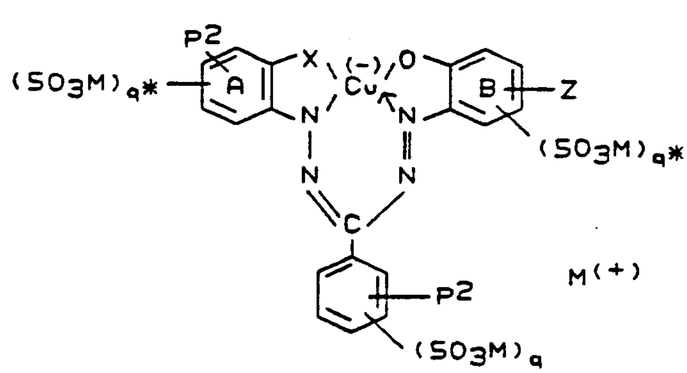

**(14d)**

in which

- Z is the group of the formula (2)

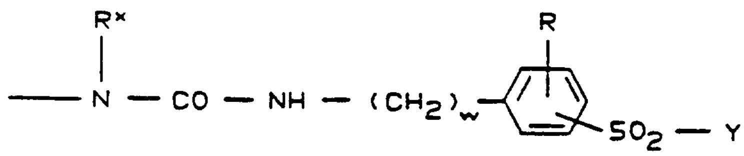

(2)

where $R^x$, w, R and Y have the meanings mentioned in claim 1,

M is hydrogen or an alkali metal;

q is zero or 1, preferably zero;

q* is zero or 1, preferably 1;

$P^2$ is independently in each appearance hydrogen, methyl, methoxy, bromine, chlorine, carboxyl or sulfo;

X is carbonyloxy.

**11.** A copper formazan dye as claimed in claim 1 of the formula

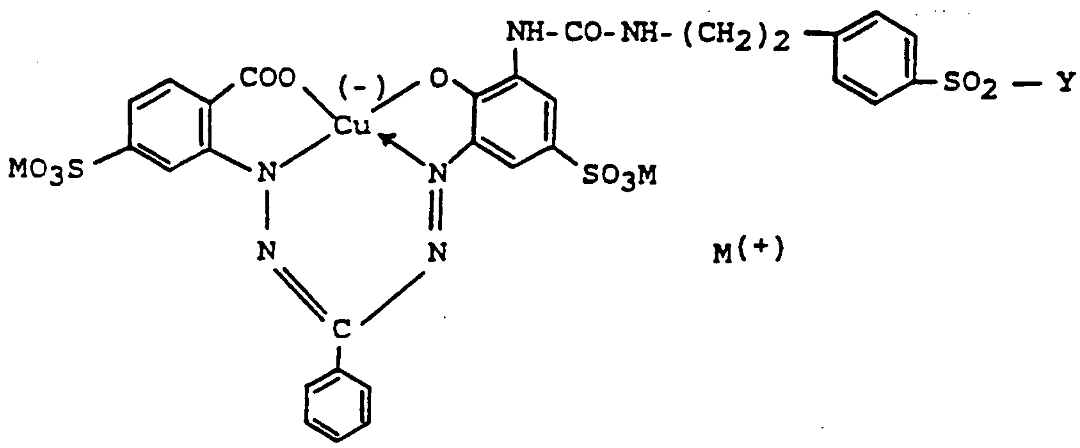

where M is hydrogen or an alkali metal and Y has one of the meanings mentioned in claim 1.

**12.** A dye as claimed in claim 1 of the formula

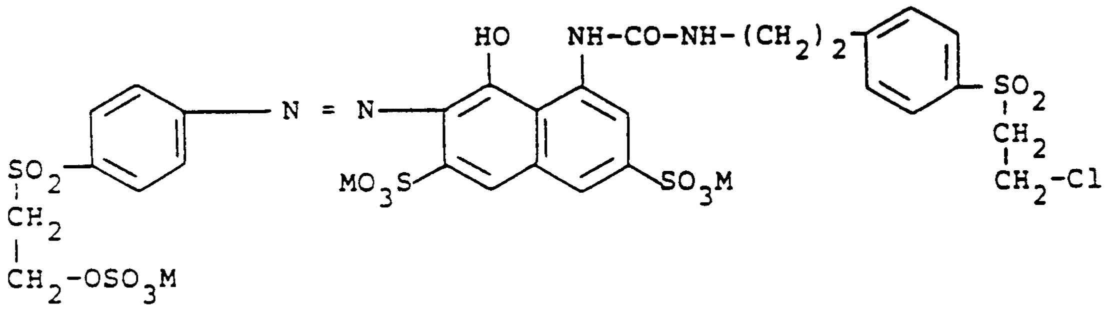

or

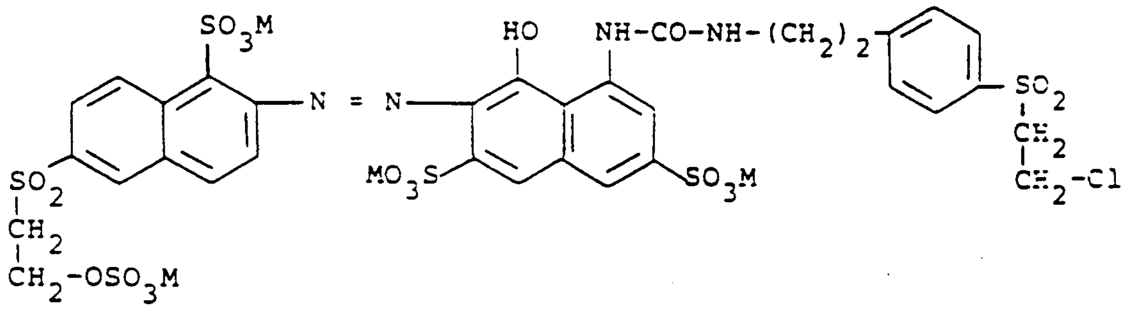

or

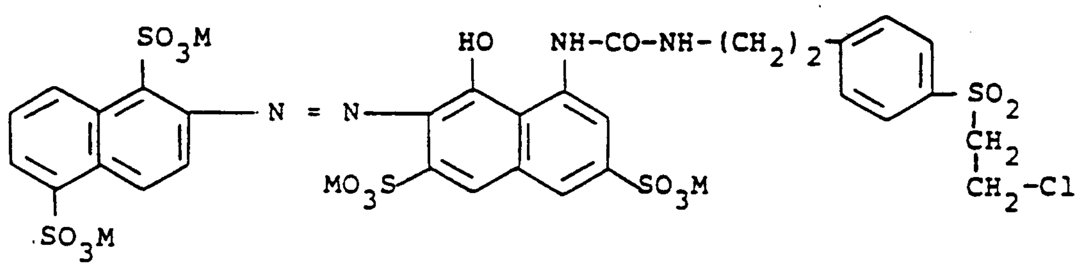

or

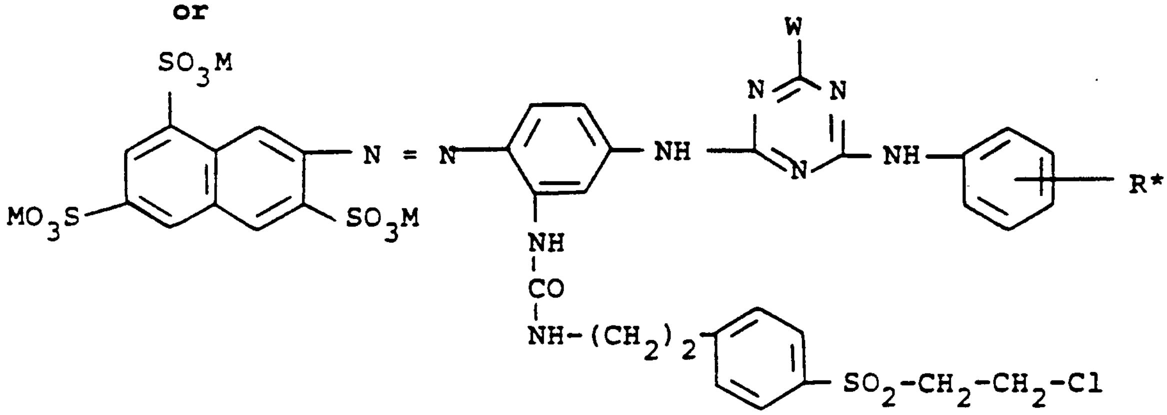

or

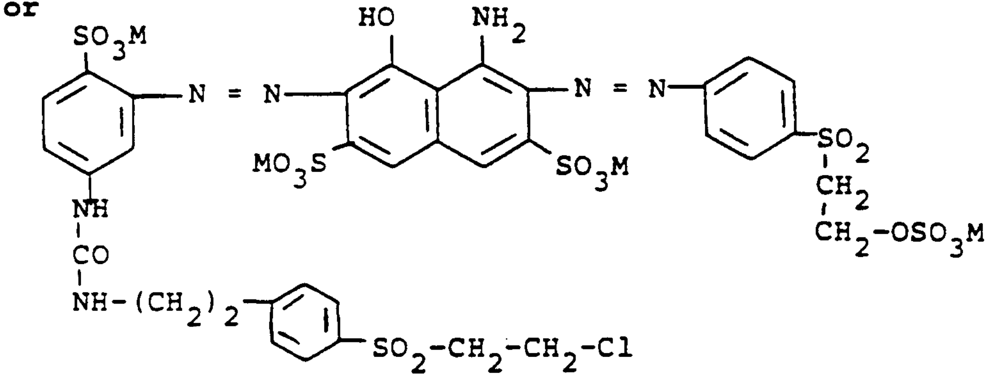

in which M is hydrogen or an alkali metal, R* is vinylsulfonyl, β-sulfatoethylsulfonyl or β-chloroethylsulfonyl, preferably β-sulfatoethylsulfonyl, and W is chlorine, fluorine or cyanamido.

**13.** A dye as claimed in claim 1 of the formula

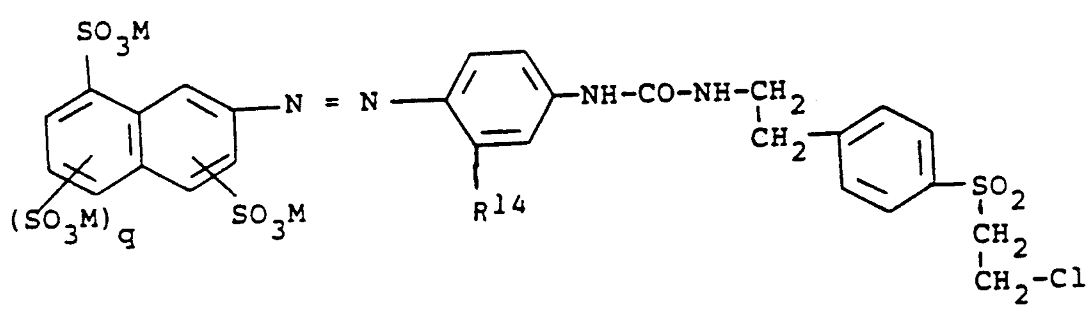

in which M is hydrogen or an alkali metal, q is zero or 1 and $R^{14}$ is acetylamino or ureido.

**14.** A dye as claimed in at least one of claims 1, 8, 9 and 10, wherein $R^x$ is hydrogen.

**15.** A dye as claimed in at least one of claims 1 to 10 and 14, wherein w is 2.

**16.** A dye as claimed in at least one of claims 1 to 10, 14 and 15, wherein R is hydrogen.

**17.** A dye as claimed in at least one of claims 1 to 11 and 14 to 16, wherein Y is vinyl, β-chloroethyl or β-sulfatoethyl.

**18.** A dye as claimed in at least one of claims 1 to 11 and 14 to 16, wherein Y is β-chloroethyl.

**19.** A dye as claimed in at least one of claims 1 to 10 and 14 to 18, wherein n is 1.

**20.** A process for preparing a dye of claim 1, which comprises reacting precursors typical of the particular dye, of which at least one contains a group of the formula (2), with one another or reacting a compound of the formula (55)

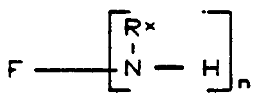

**(55)**

in which F, $R^x$ and n have the meanings mentioned in claim 1, with an isocyanate compound of the formula (56)

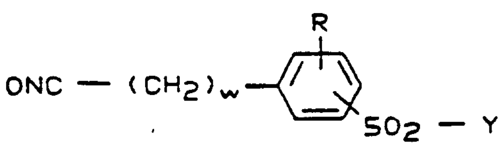

**(56)**

in which w, R and Y have the meanings mentioned in claim 1, or reacting a compound of the formula (57)

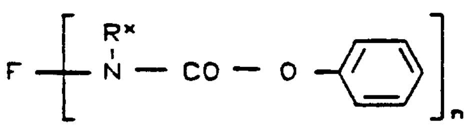

**(57)**

in which F, $R^x$ and n have the meanings mentioned in claim 1, with an amino compound of the formula (58)

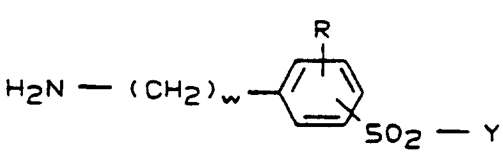

**(58)**

in which w, R and Y have the meanings mentioned in claim 1.

**21.** The use of a compound of the formula (1) of claim 1 for dyeing (including printing) hydroxyl- and/or carboxamido-containing material, in particular fiber material.

**22.** A process for dyeing (including printing) hydroxyl- and/or carboxamido-containing material, in particular fiber material, wherein a dye is applied to or introduced into the material and fixed therein or thereon by means of heat and/or with the aid of an alkaline agent, which comprises using as the dye a compound of the formula (1) mentioned and defined in claim 1.

**Claims for the following Contracting State : ES**

**1.** A process for preparing a water-soluble dye conforming to the formula (1)

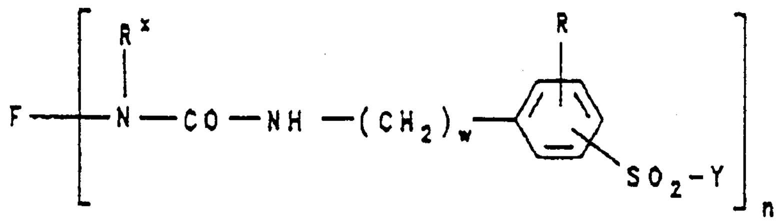

(1)

in which

- F is the radical of a monoazo, polyazo, metal complex azo, anthraquinone, phthalocyanine, azomethine, dioxazine, phenazine, stilbene, triphenylmethane, xanthene, formazan, thioxanthone, nitroaryl, naphthoquinone, pyrenequinone or perylenetetracarbimide dye;
- $R^x$ is hydrogen or alkyl of 1 to 4 carbon atoms;
- R is hydrogen, sulfo, carboxyl, alkyl of 1 to 4 carbon atoms, alkoxy of 1 to 4 carbon atoms or chlorine;
- w is 1, 2, 3 or 4;
- Y is vinyl or an ethyl group which contains in the $\beta$-position a substituent which is eliminable by alkali to form a vinyl group;
- n is 1 or 2;

which comprises reacting precursors typical of the particular dye, of which at least one contains a group of the formula (2),

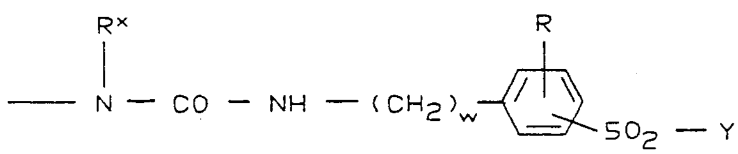

(2)

with one another or reacting a compound of the formula (55)

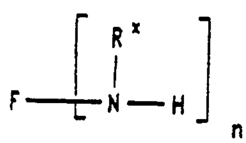

(55)

in which F, $R^x$ and n have the meanings mentioned above, with an isocyanate compound of the formula (56)

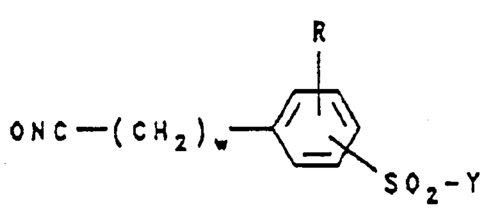

(56)

in which w, R and Y have the meanings mentioned above, or reacting a compound of the formula (57)

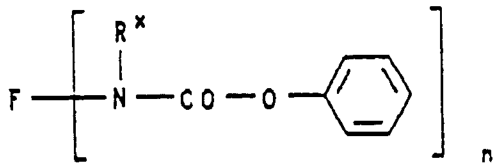

(57)

in which F, $R^x$ and n have the meanings mentioned above, with an amino compound of the formula (58)

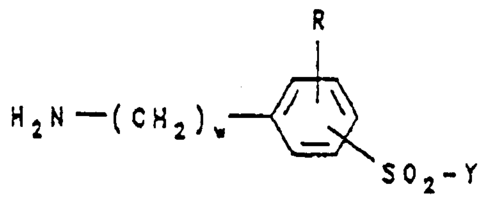

(58)

in which w, R and Y have the meanings mentioned above.

2. A process for dyeing (including printing) hydroxyl- and/or carboxamido-containing material, in particular fiber material, wherein a dye is applied to or introduced into the material and fixed therein or thereon by means of heat and/or with the aid of an alkaline agent, which comprises using as the dye a compound of the formula (1) mentioned and defined in claim 1.

**Revendications**
**Revendications pour les Etats contractants suivants : BE, CH, DE, FR, GB, LI**

1. Colorant soluble dans l'eau correspondant à la formule générale (1)

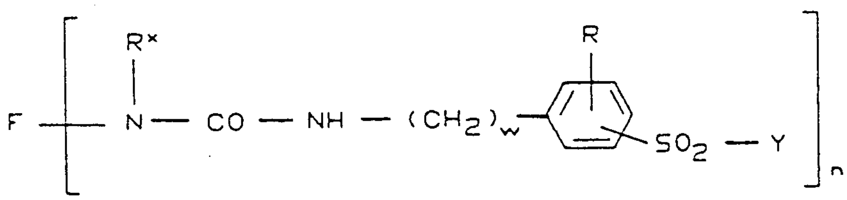

(1)

dans laquelle :

F est le résidu d'un colorant monoazoïque, polyazoïque, azoïque à complexe métallifère, anthraquinonique, de phtalocyanine, d'azométhine, de dioxazine, de phénazine, de stilbène, de triphénylméthane, de xanthène, de formazan, de thioxanthone, de nitroaryle, naphtoquinoniques, pyrènequinoniques ou de pérylènetétracarbimide ;

$R^x$ est un hydrogène ou un radical alkyle ayant de 1 à 4 atomes de carbone ;

R est un hydrogène ou un radical sulfo, carboxy, alkyle ayant de 1 à 4 atomes de carbone, alcoxy ayant de 1 à 4 atomes de carbone ou chloro ;

w est le nombre 1, 2, 3 ou 4 ;

Y est le groupe vinyle ou un groupe éthyle contenant en position $\beta$ un substituant éliminable par un alcali avec formation du groupe vinyle ;

n est le nombre 1 ou 2.

**2.** Colorant selon la revendication 1, de formule générale (15a)

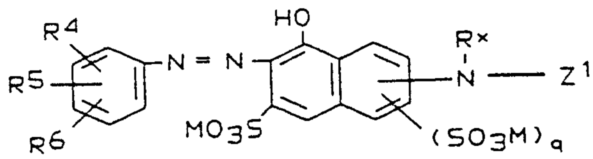

(15a)

dans laquelle

M est un hydrogène ou un métal alcalin ;

q est le nombre 0 ou 1 ;

$R^x$ a l'une des significations données dans la revendication 1 ;

$Z^1$ est un groupe de formule générale (2A)

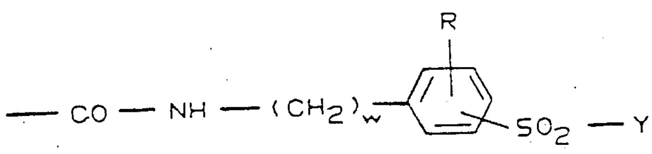

(2A)

dans laquelle w, R et Y ont les significations données dans la revendication 1 ;

$R^4$ est un hydrogène ou un radical alkyle ayant de 1 à 4 atomes de carbone, alcoxy ayant de 1 à 4 atomes de carbone, halogéno, carboxy ou sulfo ;

$R^5$ est un hydrogène ou un radical alkyle ayant de 1 à 4 atomes de carbone, alcoxy ayant de 1 à 4 atomes de carbone, halogéno, carboxy ou sulfo ;

$R^6$ est un hydrogène ou un radical sulfo, $\beta$-sulfatoéthylsulfonyle, $\beta$-chloroéthylsulfonyle ou vinylsulfonyle.

**3.** Colorant selon la revendication 1, de formule générale (15b)

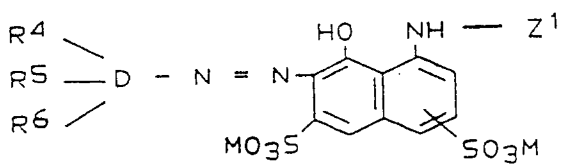

(15b)

dans laquelle

M est un hydrogène ou un métal alcalin ;

D est un noyau benzénique ou un noyau naphtalénique, auquel le groupe azoïque est lié en position $\beta$, où, quand D est le noyau naphtalène, $R^4$ et $R^5$ sont chacun indépendamment l'un de l'autre un hydrogène ou le radical sulfo ;

$Z^1$ est un groupe de formule générale (2A)

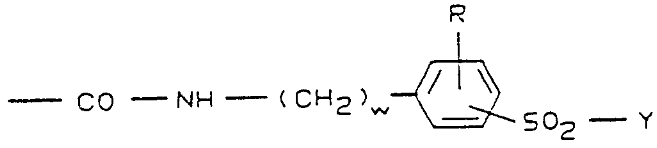

(2A)

dans laquelle w, R et Y ont les significations données dans la revendication 1 ;

$R^4$ est un hydrogène ou un radical alkyle ayant de 1 à 4 atomes de carbone, alcoxy ayant de 1 à 4 atomes de carbone, halogéno, carboxy ou sulfo ;

$R^5$ est un hydrogène ou un radical alkyle ayant de 1 à 4 atomes de carbone, alcoxy ayant de 1 à 4

atomes de carbone, halogéno, carboxy ou sulfo ;

$R^6$ est un hydrogène ou un radical sulfo, β-sulfatoéthylsulfonyle, β-chloroéthylsulfonyle ou vinylsulfonyle.

**4.** Colorant selon la revendication 3, caractérisé en ce que D est un noyau benzénique, $R^4$ et $R^5$ sont chacun un hydrogène, $R^6$ est le radical vinylsulfonyle, β-chloroéthylsulfonyle ou β-sulfatoéthylsulfonyle en position méta ou para par rapport au groupe azoïque, et l'un des groupes $-SO_3M$ est lié au noyau naphtalénique en position méta par rapport au groupe $-NH-Z^1$.

**5.** Colorant selon la revendication 3, caractérisé en ce que D est un noyau naphtalénique, auquel le groupe azoïque est lié en position 2, $R^4$ est un radical sulfo en position 1 du noyau naphtalène, $R^5$ est un hydrogène, $R^6$ est le radical vinylsulfonyle, β-chloroéthylsulfonyle ou β-sulfatoéthylsulfonyle en position 6 par rapport au noyau naphtalénique, et l'un des groupes $-SO_3M$ est lié au noyau naphtol en position méta par rapport au groupe $-NH-Z^1$.

**6.** Colorant selon la revendication 1, ayant la formule générale (16a)

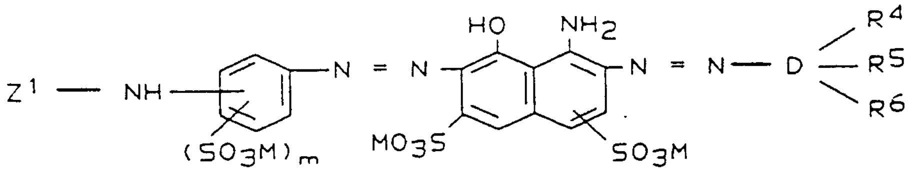

(16a)

dans laquelle

M est un hydrogène ou métal alcalin,

m est le nombre 1,

D est un noyau benzène,

$R^4$ et $R^5$ sont tous les deux des hydrogènes, $R^6$ est le radical vinylsulfonyle, β-chloroéthylsulfonyle ou β-sulfatoéthylsulfonyle en position méta ou para par rapport au noyau benzénique, et

$Z^1$ est un groupe de formule générale (2A)

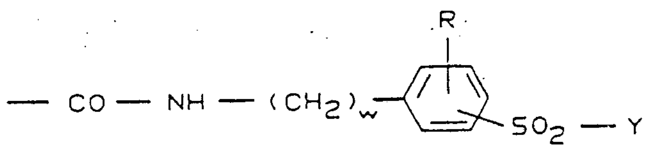

(2A)

dans laquelle w, R et Y ont les significations données dans la revendication 1.

**7.** Colorant selon la revendication 1, de formule générale (15g)

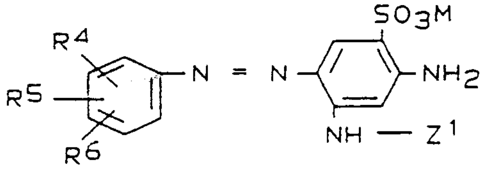

(15g)

dans laquelle

M est un hydrogène ou métal alcalin,

$Z^1$ est un groupe de formule générale (2A)

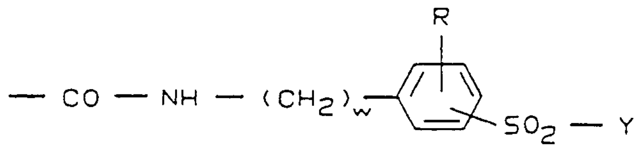

(2A)

dans laquelle w, R et Y ont les significations données dans la revendication 1 ;

$R^4$ est un hydrogène ou un radical alkyle ayant de 1 à 4 atomes de carbone, alcoxy ayant de 1 à 4 atomes de carbone, halogéno, carboxy ou sulfo ;

$R^5$ est un hydrogène ou un radical alkyle ayant de 1 à 4 atomes de carbone, alcoxy ayant de 1 à 4 atomes de carbone, halogéno, carboxy ou sulfo ;

$R^6$ est un hydrogène ou un radical sulfo, $\beta$-sulfatoéthylsulfonyle, $\beta$-chloroéthylsulfonyle ou vinylsulfonyle.

**8.** Colorant de triphendioxazine selon la revendication 1, ayant la formule générale (14b)

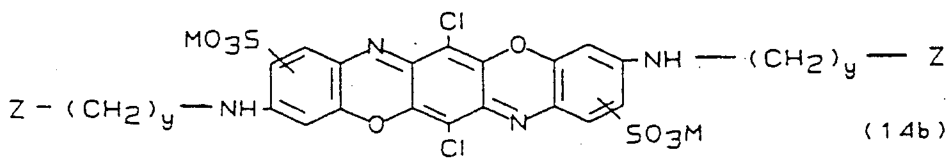

(14b)

dans laquelle

M est un hydrogène ou un métal alcalin,

Z est un groupe de formule générale (2)

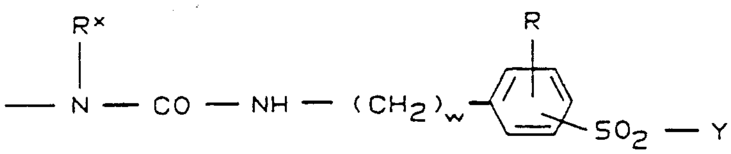

(2)

dans laquelle $R^x$, w, R et Y ont les significations données dans la revendication 1, et

Y est le nombre 2, 3, ou 4.

**9.** Colorant de phtalocyanine selon la revendication 1, de formule générale (14c)

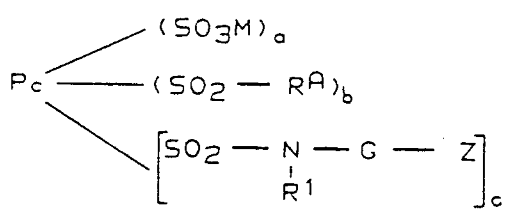

(14c)

dans laquelle :

Pc est le résidu d'une phtalocyanine de cuivre ou de nickel ;

$R^A$ est un groupe amino de formule $-NR^2R^3$ où $R^2$ et $R^3$, indépendamment l'un de l'autre, sont chacun un hydrogène ou un radical alkyle ayant de 1 à 4 atomes de carbone et pouvant être substitué par des substituants hydroxy ou sulfo, ou encore il s'agit d'un radical azoté hétérocyclique, par exemple le radical morpholino ou pipéridino ;

$R^1$ est un hydrogène ou un radical alkyle ayant de 1 à 4 atomes de carbone ;

G est un radical phénylène pouvant être substitué par un ou deux substituants choisis parmi l'ensemble comprenant les radicaux alkyle ayant de 1 à 4 atomes de carbone, halogéno, carboxy et

sulfo, ou encore est un groupe alkylène ayant de 2 à 6 atomes de carbone ou un groupe phénylène-alkylène dont le fragment phénylène peut être substitué comme indiqué ci-dessus et dont le fragment alkylène est un radical alkylène ayant de 1 à 4 atomes de carbone ;

Z est le groupe de formule (2)

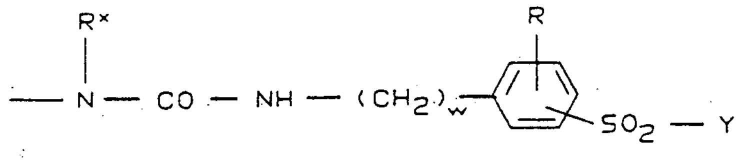

(2)

où $R^x$, w, R et Y ont les significations données dans la revendication 1,

a est un nombre de 2 à 3,

b est un nombre de 0 à 3, et

c est un nombre de 1 à 2,

où la somme (a + b + c) est égale à un nombre de 3 à 4.

**10.** Colorant de formazan de cuivre selon la revendication 1, ayant la formule générale (14d)

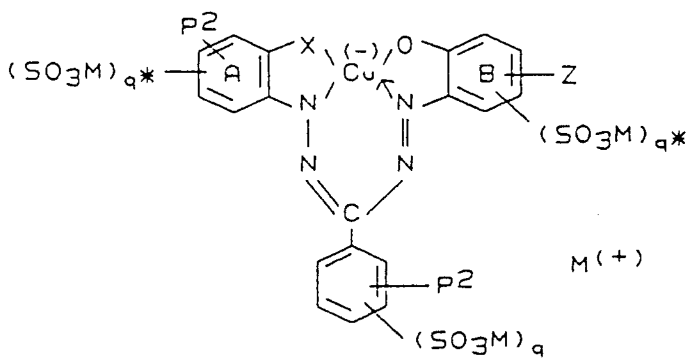

(14d)

dans laquelle

Z est le groupe de formule (2)

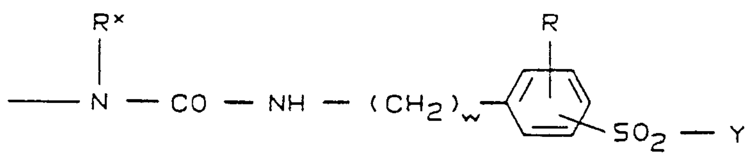

(2)

dans laquelle $R^x$, w, R et Y ont les significations données dans la revendication 1 ;

M est un, hydrogène ou un métal alcalin ;

q est le nombre 0 ou 1, de préférence 0 ;

q* est le nombre 0 ou 1, de préférence 1 ;

les radicaux $P^2$ indépendamment l'un de l'autre sont chacun un hydrogène ou le radical méthyle, méthoxy, bromo, chloro, carboxy ou sulfo ;

X est le groupe carbonyloxo.

**11.** Colorant de formazan de cuivre selon la revendication 1, ayant la formule générale suivante :

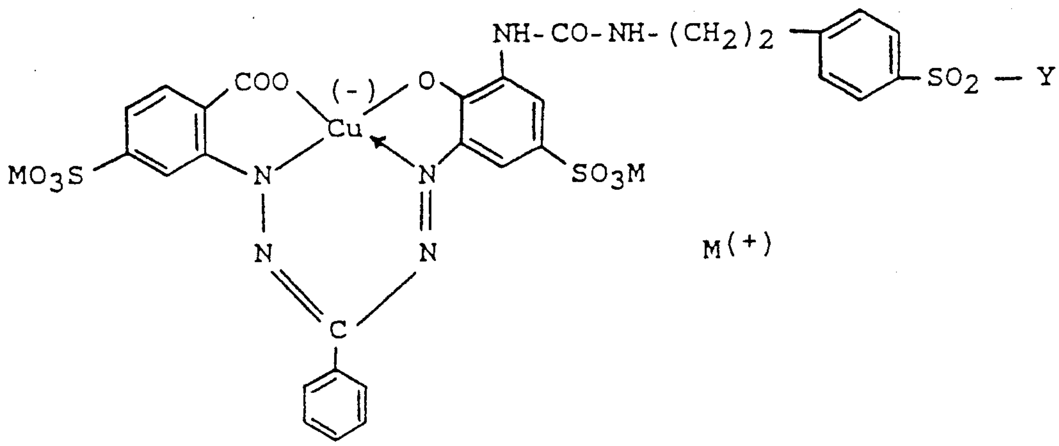

dans laquelle M est un hydrogène ou un métal alcalin et Y a l'une des significations données dans la revendication 1.

**12.** Colorant selon la revendication 1, ayant la formule suivante :

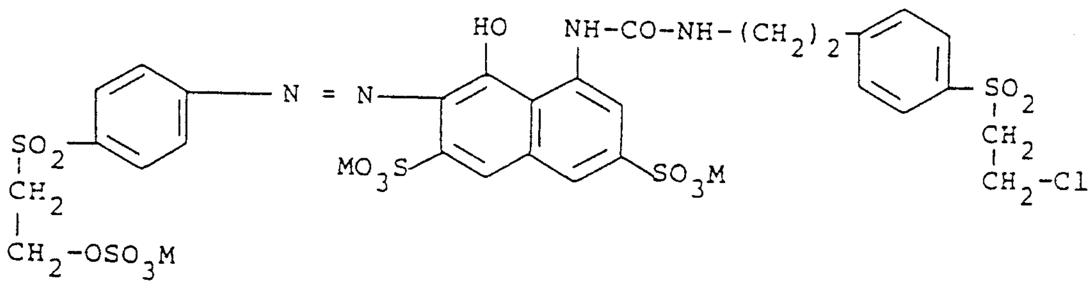

ou bien

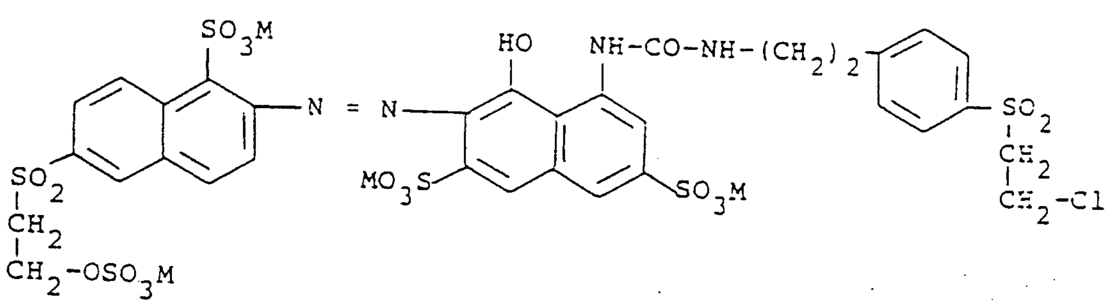

ou bien

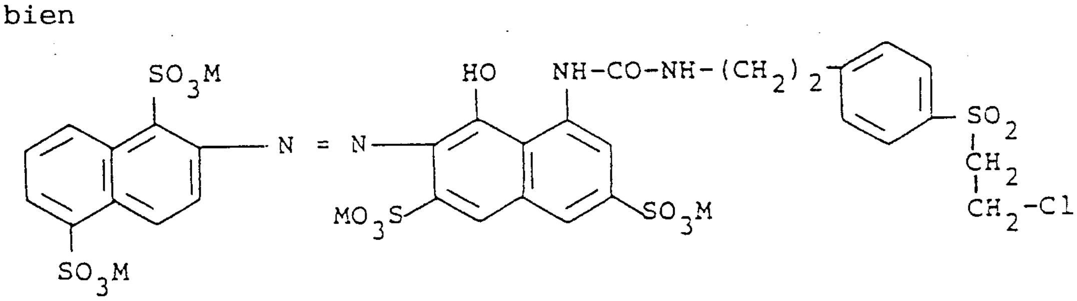

ou bien

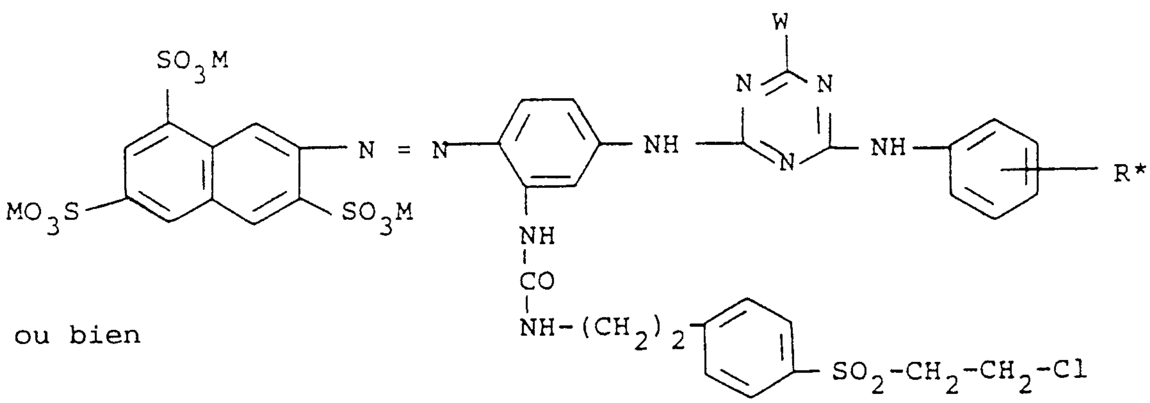

ou bien

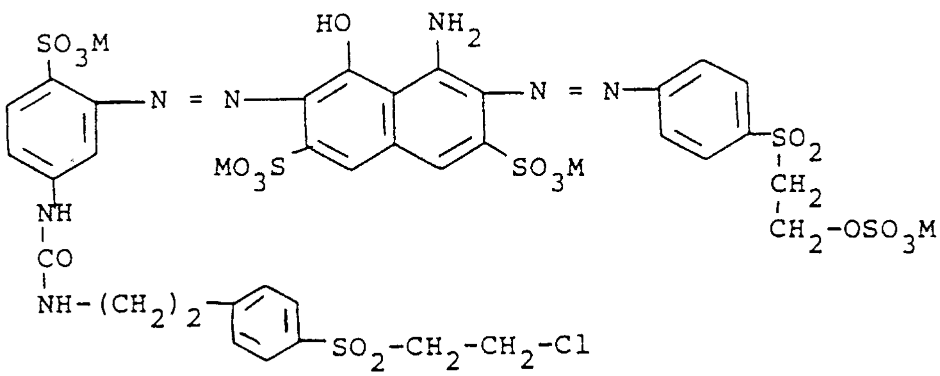

où M est un hydrogène ou un métal alcalin, R* est le radical vinylsulfonyle, β-sulfatoéthylsulfonyle ou β-chloroethylsulfonyle de préférence β-sulfatoéthylsulfonyle, et W est le radical chloro, fluoro ou cyanamido.

**13.** Colorant selon la revendication 1, ayant la formule générale suivante :

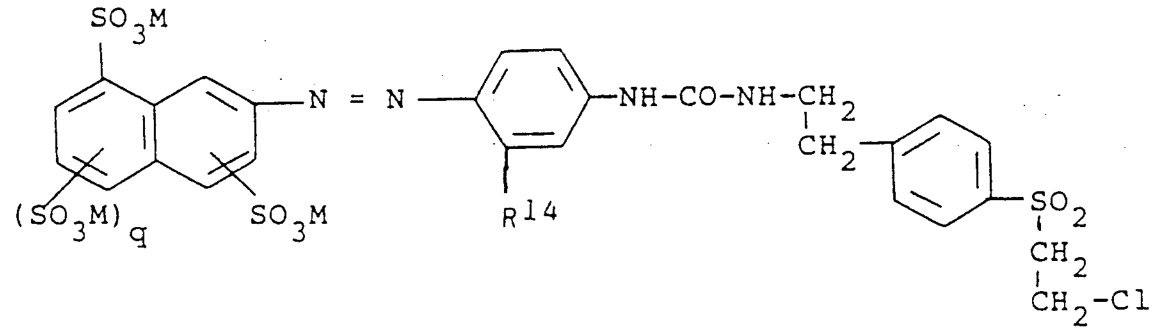

dans laquelle M est un hydrogène ou un métal alcalin, q est le nombre 0 ou 1, et $R^{14}$ est le radical acétylamino ou uréido.

**14.** Colorant selon au moins l'une des revendications 1, 8, 9 et 10, caractérisé en ce que $R^x$ est un hydrogène.

**15.** Colorant selon au moins l'une des revendications 1 à 10 et 14, caractérisé en ce que w est le nombre 2.

**16.** Colorant selon au moins l'une des revendications 1 à 10, 14 et 15, caractérisé en ce que R est un hydrogène.

**17.** Colorant selon au moins l'une des revendications 1 à 11 et 14 à 16, caractérisé en ce que Y est le radical vinyle, $\beta$-chloroéthyle ou $\beta$- sulfatoéthyle.

**18.** Colorant selon au moins l'une des revendications 1 à 11 et 14 à 16, caractérisé en ce que Y est le radical $\beta$-chloroéthyle.

**19.** Colorant selon au moins l'une des revendications 1 à 10 et 14 à 18, caractérisé en ce que n est le nombre 1.

**20.** Procédé pour préparer un colorant selon la revendication 1, caractérisé en ce qu'on fait réagir les uns avec les autres des précurseurs représentatifs de chacun des colorants, dont au moins l'un contient un groupe de formule générale (2), ou encore en ce qu'on fait réagir un composé de formule générale (55)

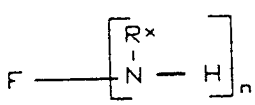

(55)

dans laquelle F, $R^x$ et n ont les significations données dans la revendication 1, avec un isocyanate de formule générale (56)

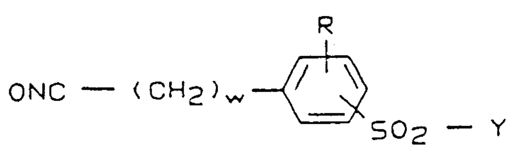

(56)

dans laquelle w, R et Y ont les significations données dans la revendication 1, ou encore en ce qu'on fait réagir un composé de formule générale (57)

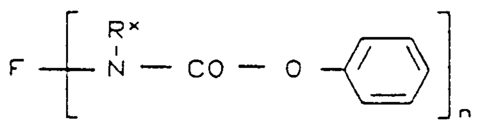

(57)

dans laquelle F, $R^x$ et n ont les significations données dans la revendication 1, avec un composé aminé de formule générale (58)

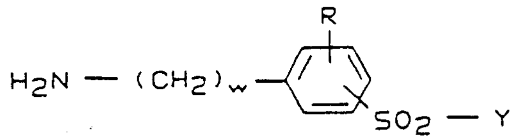

(58)

dans laquelle w, R et Y ont les significations données dans la revendication 1.

**21.** Utilisation d'un composé de formule générale (1) selon la revendication 1 pour teindre (et notamment imprimer) un matériau hydroxylé et/ou contenant des groupes carboxamido, notamment un matériau fibreux.

**22.** Procédé pour teindre (et notamment imprimer) un matériau hydroxylé et/ou contenant des groupes carboxamido, notamment un matériau fibreux, dans lequel on applique un colorant sur le matériau ou encore on l'incorpore dans le matériau, et on le fixe à l'aide de chaleur et/ou à l'aide d'un agent à effet alcalin, caractérisé en ce qu'on utilise comme colorant un composé ayant la formule générale (1) mentionnée et définie dans la revendication 1.

**Revendications pour l'Etat contractant suivant : ES**

**1.** Procédé pour la préparation d'un colorant hydrosoluble correspondant à la formule générale (1)

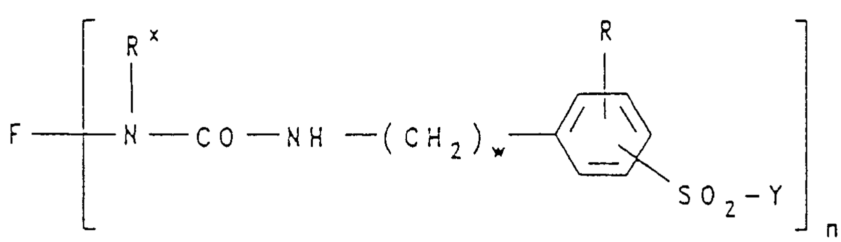

(1)

dans laquelle :

F est le résidu d'un colorant monoazoïque, polyazoïque, azoïque à complexe métallifère, anthraquinonique, de phtalocyanine, d'azométhine, de dioxazine, de phénazine, de stilbène, de triphénylméthane, de xanthène, de formazan, de thioxanthone, de nitroaryle, naphtoquinonique, pyrènequinonique ou de pérylène-tétracarbimide ;

$R^x$ est un hydrogène ou un radical alkyle ayant de 1 à 4 atomes de carbone ;

R est un hydrogène, ou un radical sulfo, carboxy, alkyle ayant de 1 à 4 atomes de carbone, alcoxy ayant de 1 à 4 atomes de carbone ou chlore ;

w est le nombre 1, 2, 3 ou 4 ;

Y est le groupe vinyle ou un groupe éthyle contenant en position $\beta$ un substituant éliminable par un alcali avec la formation du groupe vinyle ;

n est le nombre 1 ou 2 ;

caractérisé en ce que, pour le colorant respectif, on fait réagir entre eux des précurseurs typiques, dont au moins un contient un groupe de formule générale (2),

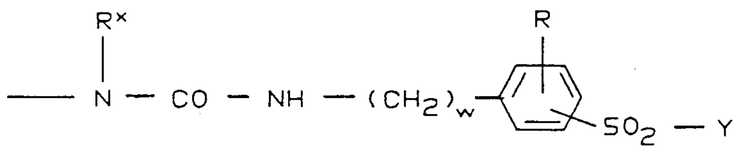

(2)

ou en ce qu'on fait réagir un composé de formule générale (55)

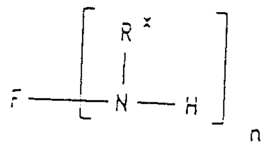

(55)

dans laquelle F, $R^x$ et n ont les significations données ci-dessus, avec un isocyanate de formule générale (56)

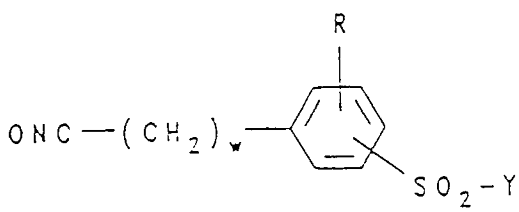

(56)

dans laquelle w, R et Y ont les significations données ci-dessus, ou en ce qu'on fait réagir un composé de formule générale (57)

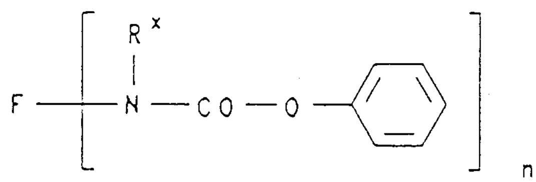

(57)

dans laquelle F, $R^x$ et n ont les significations données ci-dessus, avec un composé amino de formule générale (58)

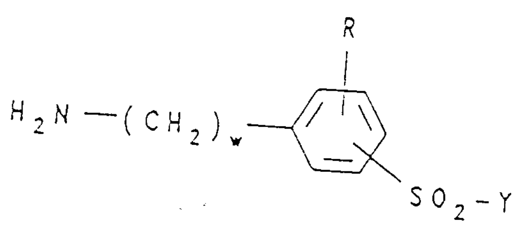

(58)

dans laquelle w, R et Y ont les signification données ci-dessus.

**2.** Procédé pour la teinture (y compris l'impression) de matériau contenant des radicaux hydroxy et/ou carboxamido, plus particulièrement de matériaux fibreux, selon lequel on dépose un colorant sur le matériau ou on l'incorpore dans le matériau et on le fixe à l'aide d'un effet thermique et/ou d'un agent à action alcalin, caractérisé en ce qu'on utilise en tant que colorant un composé de formule générale (1), citée et définie dans la revendication 1.